# EUROPEAN PATENT SPECIFICATION

(11) **EP 4 605 247 B1**
(45) Date of publication and mention of the grant of the patent: **30.09.2026**
(21) Application number: 23844365.9
(22) Date of filing: 17.10.2023
(51) Int. Cl.: B60C 1/00, C08K 3/36, C08L 9/06, C08L 15/00, C08K 5/3472

(54) **ELASTOMERIC COMPOSITIONS FOR TYRES COMPRISING NEW CROSS-LINKING FUNCTIONALISING AGENTS, ELASTOMERIC COMPOUNDS AND TYRES COMPRISING THEM**
ELASTOMERE ZUSAMMENSETZUNGEN FÜR REIFEN MIT NEUEN-VERNETZUNGSFUNKTIONIERUNGSMITTELN, ELASTOMERE VERBINDUNGEN UND REIFEN DAMIT
COMPOSITIONS ÉLASTOMÈRES POUR PNEUS COMPRENANT DE NOUVEAUX AGENTS RÉTICULANTS FONCTIONNALISANTS, COMPOSÉS ÉLASTOMÈRES ET PNEUS LES COMPRENANT

(30) Priority: 19.10.2022 IT 202200021522
(43) Date of publication of application: 27.08.2025
(73) Proprietor: Pirelli Tyre S.p.A., 20126 Milano (IT)
(72) Inventor: DE BELLIS, Vito, 20126 Milano (IT); MONTI, Mauro, 20126 Milano (IT); PAPAGNI, Antonio, 20126 Milano (IT); GIANNINI, Luca, 20126 Milano (IT); GUERRA, Silvia, 20126 Milano (IT); TADIELLO, Luciano, 20126 Milano (IT)
(74) Representative: PGA S.p.A.
(86) International application number: PCT/IB2023/060465
(87) International publication number: WO 2024/084386

(56) References cited:
- WO-A1-2021/137143
- WO-A2-2007/014054
- SCHWARTZ NORMAN V.: "Ditetrazoles as crosslinking agents", JOURNAL OF APPLIED POLYMER SCIENCE, vol. 16, no. 10, 1 October 1972 (1972-10-01), US, pages 2715 - 2720, XP055777712, ISSN: 0021-8995, DOI: 10.1002/app.1972.070161024

## Description

The present invention relates to elastomeric compositions and compounds for tyres containing new cross-linking functionalising agents characterised by multiple activation temperatures, and respective tyre components and vehicle wheel tyres comprising them.

### STATE OF THE ART

In the rubber industry, and more particularly in the tyre industry, it is known to use variously functionalized polymers, typically in blends with non-functionalised polymers such as natural rubber (NR), butadiene rubber (BR), styrene-butadiene rubber (SBR) and the like, so as to improve some properties of the materials after vulcanisation.

Typically, in tyres, functionalised polymers are used for various purposes for example to improve homogeneity or increase the extent of the cross-linking of sulfur vulcanised materials (cross-linking functionalised polymers), to even the distribution of reinforcing fillers, to increase the compatibilization of the non-similar polymers used in a blend and, more generally, to enhance the mechanical properties of the materials and increase their durability and/or to reduce their rolling resistance and therefore reduce the consumption of the vehicle.

For example, in order to improve the interaction between the polymer phase and silica, therefore reducing the rolling resistance of the tread, functionalised polymers with polar groups are used - such as among others those described in patents US8816014 on behalf of Asahi or US9434792 on behalf of JSR -, groups which, by interacting with silica, would increase its dispersibility in the elastomeric material. However, the current preparation of functionalised polymers is complex, poorly cost-effective and scarcely versatile.

As a matter of fact, typically, in order to prepare functionalised polymers, comprising particular functionalities and in certain ratios, their total specific synthesis is carried out, by co-polymerisation of targeted precursors, with the introduction of such functionalities upstream through dedicated processes and reactors, under strictly controlled, expensive and highly specialised conditions.

There would instead be preferred more versatile preparations, which introduce the specific functionalities not within the polymer being formed but on the preformed skeleton thereof, downstream of the polymerisation process, that is directly on the end polymer through end-functionalisation or grafting. Ideally, there is the need for technologically simple preparations that use common equipment and less stringent conditions with respect to those required for classical (co-)polymerisation in solution or emulsion.

### SUMMARY OF THE INVENTION

The Applicant has undertaken studies to prepare cross-linking functionalised polymers that are suitable to improve one or more of the aforementioned properties of elastomeric materials for a tyre by overcoming the preparation drawbacks of functionalised polymers currently in use.

In this regard, the Applicant set the objective of making the preparation of certain cross-linking functionalised polymers versatile, not only by shifting the functionalisation downstream of the polymerisation, therefore allowing to easily diversify the product starting from commercial, cheap and readily available non-functionalised polymers, but also to broaden the applicability of the functionalisation reaction to low reactive polymers.

Furthermore, the Applicant desired to be able to implement the functionalisation of the polymer during the conventional elastomer processing steps, using common mixers and under simple conditions, without incurring difficult mass processing operations by early cross-linking thickening, and then cross-linking the functionalised polymer, ideally during the final sulfur vulcanisation step for the compound, directly in the mould.

Lastly, the Applicant desired that the functionalised polymers subject matter of the study, when cross-linked in a compound, imparted improved mechanical properties and optionally lower heat dissipation, with application advantages in the tyre such as longer service life and lower consumption.

The Applicant achieved the aforementioned objectives by focusing its research on new cross-linking functionalising agents characterised by dual functionalisation, that is, comprising a carbene or nitrene precursor group and at least one 2,5 disubstituted tetrazole. The very different reactivity and activation temperature of the two functionalisations allowed to clearly separate the polymer skeleton functionalisation step from the subsequent cross-linking step in the compound. In particular, a pre-formed polymer functionalisation preliminary step, even low reactive ones, was achieved under very mild conditions, such as simple mixing at temperatures around 120-140°C, maintaining a high processability of the elastomeric mass, followed by a step for the final hardening of the blend in the mould, for cross-linking the tetrazole function and the sulfur vulcanising agent, at temperatures typically above 140°C.

To the Applicant's knowledge, the different functionalities of the present cross-linking functionalising agents are not commonly used together, just like they are not used in the tyre materials industry.

With regard to the reactivity of the tetrazole functionality, it is known from the literature, for example from J. K. Stille, A. T. Chen, Macromolecules, 378, 5, (1972), that the 2,5-disubstituted tetrazoles, after heating or irradiation with ultraviolet light, decompose, with the development of nitrogen, generating highly reactive intermediate species (nitrilimines) capable of reacting with activated double bonds (A=B), such as for example vinyl groups, as shown in the following Scheme 1:

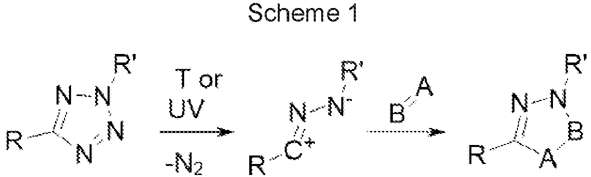

This 1,3-dipolar cycloaddition reaction leads to the formation of substituted pyrazolines that are stable and easy-to-recognize because they are fluorescent when exposed to ultraviolet radiation. This reaction does not occur for tetrazoles that have been disusbstituted in other positions or for monosubstituted tetrazoles. The temperature at which the 2,5 disubstituted tetrazole decomposes, also referred to here as the activation temperature of the tetrazole T-Tetr, depends on the nature of the groups present in 2,5 positions of the tetrazole, as discussed for example in the article J. Appl. Polym. Science, Vol. 28, page 3671-3679 (1983) in Table 1, in the article Macromolecules Vol. 5, No. 4, (1972), page 377-384, in Table 2, and as investigated by the Applicant in the present experimental part (Tables 1 and 2).

The patent application WO2021137143A1 on behalf of the Applicant describes polytetrazole agents for tyre compounds capable of anchoring to the double activated bonds of common elastomeric polymers, such as vinyl groups, by functionalising them. The experimental part of WO2021137143A1 describes cross-linking functionalised agents in which the tetrazoles are equal to each other and have an activation temperature of not less than 170°C.

Among the carbene precursor groups, the article by Lepage et al., Science 366, 875-878 (2019) describes diazirines, in particular bis-diazirines used as cross-linking agents for low-reactivity polyolefin polymers.

The article J. Mech. Behav. Biomed. Materials 101 (2020) 103405 describes ternary adhesive blends based on diazirine reactivity.

The article Macromolecules (2008), 41, 9284-9289 reports the formation of reticules by thermal activation of sulfonylazides, nitrene precursors, incorporated in polymers by co-polymerization.

The patent application WO2017011533A1 describes the possible use of stabilised carbides, unable to fit into C-H or C-C bonds, such as nucleophiles to polymerize elemental sulfur in polymer materials.

In its studies, the Applicant found that, besides the numerous process advantages discussed above, the present cross-linking functionalising agents impart improved properties to the final compounds incorporating them as further explained below.

Therefore, a first aspect of the present invention is a cross-linking functionalising agent for elastomeric compounds of formula (I) 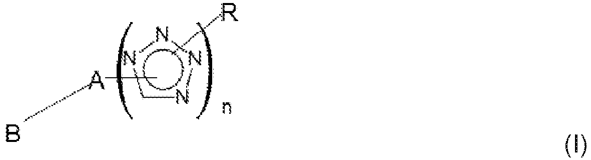 wherein
n is an integer from 1 to 3;
B is an organic group capable of generating a carbene or nitrene,
A represents an at least divalent organic linker residue between the B group and the one or more tetrazoles, where A is covalently linked to position 2 or 5 of the one or more tetrazoles, where the one or more tetrazoles are 2,5 disubstituted tetrazoles; R is an organic group covalently linked respectively to position 5 or 2 of the one or more tetrazoles, selected from linear or branched C₁-C₁₀ alkyl; C₆-C₂₀ aryl; C₃-C₁₀ cycloalkyl; 5- or 6- membered, saturated, unsaturated or aromatic, mono- or bicyclic, optionally benzocondensed heterocyclyl, comprising at least one heteroatom selected from N, S, O, R being in turn optionally substituted by at least one electron-withdrawing group EW or at least one electron-donating group ED,
wherein said cross-linking functionalising of formula (I) is characterised by an activation temperature (T-B) of group B and one or more activation temperatures (T-Tetr) of the one or more tetrazoles, wherein said one or more activation temperatures (T-Tetr) are higher than the activation temperature (T-B).

A further aspect of present invention is a functionalised diene elastomeric polymer obtained by functionalising a diene elastomeric polymer by reacting with at least one agent of formula (I) as defined above.

A further aspect of the present invention is a process for preparing a functionalised diene elastomeric polymer that comprises
- providing a diene elastomeric polymer,
- providing an agent of formula (I) as defined above,
- mixing the diene elastomeric polymer and the agent of formula (I), maintaining the blend at a temperature T1 above the activation temperature (T-B) and below the one or more activation temperatures (T-Tetr) of the agent of formula (I) for a time sufficient to complete the functionalisation reaction of the diene elastomeric polymer, to obtain the functionalized diene elastomeric polymer.

A further aspect of this invention is an elastomeric composition for a tyre compound comprising at least
- 100 phr of at least one diene elastomeric polymer,
- at least 1 phr of at least one reinforcing filler,
- at least 0.1 phr of at least one agent of formula (I) as defined above, and
- 0 to 20 phr of a vulcanising agent.

A further aspect of the present invention is an elastomeric compound for a tyre obtained by mixing and possibly vulcanizing of the elastomeric composition according to the invention.

A further aspect of the present invention is a process for preparing an elastomeric tyre compound that is vulcanised and optionally cross-linked according to the invention which comprises:
- (i) a step for mixing, in one or more stages,
- 100 phr of at least one diene elastomeric polymer,
- at least 0.1 phr of at least one agent of formula (I) as previously defined, and optionally other components, excluding the vulcanising agent, maintaining the temperature at a value T1 always lower than one or more activation temperatures of the tetrazole component (T-Tetr) of the agent of formula (I) and, at least for one mixing step, higher than the activation temperature of group B (T-B) of the same agent of formula (I), to obtain a cross-linkable non-vulcanised compound comprising the functionalized diene elastomeric polymer (non-productive step);
- (ii) a step for adding - to the previous compound - the vulcanising agent, and optionally, other components of the vulcanisation package, and mixing at a temperature T2 always lower than both said one or more temperatures for activating the tetrazole component (T-Tetr) and the vulcanisation temperature (T-V) of the compound, to obtain a vulcanisable and cross-linkable compound (productive step); and
- (iii) a step for vulcanising and, optionally, cross-linking the previous compound by heating, preferably in a mould, at a temperature T3 higher than the vulcanisation temperature (T-V) of the compound and, optionally, also at one or more of said temperatures for activating the tetrazole component (T-Tetr) to obtain the vulcanised and, optionally, cross-linked elastomeric compound, according to the invention.

A further aspect of the present invention is a vehicle wheel tyre component comprising, or preferably consisting of, an elastomeric compound according to the invention.

A further aspect of the present invention is a vehicle wheel tyre comprising at least one tyre component according to the invention.

Advantageously, the present agent of formula (I), when incorporated and vulcanised into elastomeric tyre compounds, improves the properties thereof, even in the case of poorly compatible polymer blends.

Upon the variation of the type of substituents on the tetrazole ring and on group B, the tetrazole ring (T-Tetr) and the group B carbene or nitrene precursor (T-B) of the agent of formula (I) can be modulated appropriately and there can be obtained process and product advantages which would otherwise not be obtained, as shown below.

### DEFINITIONS

The expression "cross-linking functionalising agent" is used to indicate a compound comprising a group B carbene or nitrene precursor, which - at temperatures typically comprised between 110 and 140 °C (T-B) - generates a carbene or a nitrene which, under mild conditions, reacts non-selectively with functional groups or diene elastomeric polymer bonds, for example by fitting into covalent bonds such as C-H, C-C and the like, thus functionalising even poorly reactive polymers.

Furthermore, the cross-linking functionalising agent comprises at least one 2,5 disubstituted tetrazole, that is at least one tetrazole capable of decomposing and releasing nitrogen at a precise temperature (T-Tetr) above (T-B) and typically above 140 °C, forming a reactive nitrilimine intermediate which - by reacting selectively with activated double bonds of the polymer such as vinyls - leads to cross-linking. The remaining structure of the cross-linking functionalising agent, that is the remaining structure besides the specific reactive activable functions B and 2,5 disubstituted tetrazole such as linker A or substituent R, is stable when subjected to vulcanisation.

The expression "electron donating group ED" is used to indicate an atom or group of atoms that contributes to increasing the electron density on adjacent atoms, such for example the group -CH₃, -OH, -O-alkyl, -NH₂.

The term "electron-withdrawing group EW" is used to indicate an atom or group of atoms that contributes to reducing the electron density on adjacent atoms such as for example -NO₂, -CN, -COOH and halogens.

The expression "organic group capable of generating a carbene or nitrene" or "carbene or nitrene precursor group" (group B) is used to indicate a functional group which - by thermal or light stress - decomposes releasing small molecules typically nitrogen or carbon monoxide and forming a highly reactive species such as carbene or nitrene. In case of thermal activation, the temperature at which the reactive species is formed is indicated here as the activation temperature T-B. The reactive species is capable of reacting not only with activated double bonds but also fitting into poorly reactive bonds such as C-H, O-H, SH, N-H o C-C.

The expression "activation temperature of the tetrazole component (T-Tetr)" is used to indicate the temperature at which at least one 2,5 disubstituted tetrazole starts to decompose with nitrogen loss and the formation of nitrilimine intermediate. In the case of agents of formula (I) comprising several different tetrazoles or compounds comprising blends of agents of formula (I) comprising different tetrazoles, different activation temperatures of the tetrazoles components may occur in the system.

The expression "group B activation temperature (T-B)" is used to indicate the temperature at which the precursor group B starts to decompose with the formation of carbene or nitrene.

The expression "vulcanisation temperature (T-V)" is used to indicate the temperature at which the vulcanisable elastomeric compound, comprising all components including the vulcanising agent, starts to vulcanise, that is to cross-link typically forming (poly)sulfur bridges.

The expression "multiple activation temperatures" relating to the present cross-linking functionalising agent is used to indicate that it is capable of reacting in stages to different temperatures because it has at least two different functional groups, in particular, at least one 2,5 disubstituted tetrazole precursor of nitrilimine and one group B carbene or nitrene precursor, which can be thermally activated. Alternatively, these functional groups can also be activated by UV light.

The expression "elastomeric composition for tyre compounds" is used to indicate a composition, comprising at least one diene elastomeric polymer and one or more additives, which - by mixing and optionally heating - provides an elastomeric compound suitable for use in tyres and their components.

The components of the elastomeric composition are generally not introduced into the mixer simultaneously but are typically added sequentially. In particular, the vulcanising additives, such as the vulcanising agent and optionally accelerators and retardants, are usually added at a step downstream with respect to the incorporation and processing of all the other components.

In the vulcanisable elastomeric compound, the individual components of the elastomeric composition may be altered or no longer individually traceable given that they have been fully or partly modified due to the interaction with the other components, heat and/or mechanical processing. The expression "elastomeric composition" is herein intended to include all components that are used in the preparation of the elastomeric compound, irrespective of whether they are actually present simultaneously, whether they are introduced sequentially or whether they are then traceable in the final elastomeric compound or tyre.

The expression "elastomeric compound" is used to indicate the blend which can be obtained by mixing and, optionally, heating at least one elastomeric polymer with at least one of the additives commonly used in the preparation of tyre compounds.

The expression "non-vulcanisable elastomeric compound" is used to indicate the blend which can be obtained by mixing and optionally heating at least one elastomeric polymer with at least one of the additives commonly used in the preparation of tyre compounds, excluding vulcanising agents.

The expression "vulcanisable elastomeric compound" is used to indicate the ready-to-vulcanise elastomeric blend which can be obtained by incorporating into a non-vulcanisable elastomeric blend of all additives including vulcanising additives.

The expression "vulcanised elastomeric compound" is used to indicate the material which can be obtained by vulcanising a vulcanisable elastomeric compound.

The expressions "non-cross-linkable, cross-linkable, cross-linked and the like" are used to indicate the cross-linking reaction of the functionalized diene elastomeric polymer obtained herein by functionalisation of the diene elastomeric polymer with the agent of formula (I), in particular, the reaction of nitrilimines derived from the decomposition of 2,5-disubstituted tetrazoles bound to the functionalized diene elastomeric polymer, with the double activated bonds of the polymer chains in the compound.

In the present context, the expression non-cross-linkable compound is used to indicate a compound not comprising the functionalized diene elastomeric polymer, the expression cross-linkable compound is used to indicate a compound comprising the functionalized diene elastomeric polymer which has not yet been reacted, while the expression cross-linked compound is used to indicate the mixture after cross-linking by reacting the 2,5-disubstituted tetrazoles of the functional groups of the functionalized diene elastomeric polymer with the activated double bonds of the elastomeric polymers of the compound.

The expression "green" is used to indicate a material, a compound, a composition, a component or a tyre yet to be vulcanised.

The expression "vulcanisation" is used to indicate the cross-linking reaction of a natural or synthetic rubber induced, for example, by a sulfur-based vulcanising agent.

The expression "vulcanising agent" is used to indicate a compound capable of transforming natural or synthetic rubber into an elastic and resistant material, by forming a three-dimensional cross-link of inter- and intra-molecular bonds.

The expression "vulcanisation accelerator" is used to indicate a compound capable of decreasing the duration of the vulcanisation process and/or the operating temperature, such as for example TBBS, sulfenamides in general, thiazoles, dithiophosphates, dithiocarbamates, guanidines, besides sulfur donors like thiurams.

The expression "vulcanisation activating agent" is used to indicate a compound capable of further facilitating vulcanisation, making it occur within lower times and optionally at lower temperatures. An example of an activating agent is the stearic acid - zinc oxide system.

The expression "delaying vulcanisation" is used to indicate a compound capable of delaying the start of the vulcanisation reaction and/or suppressing unwanted secondary reactions, for example N-(cyclohexylthio) phthalimide (CTP).

The expression "vulcanisation package" is used to indicate the combination of the vulcanising agent and one or more vulcanisation additives selected from vulcanisation activators, accelerators and retardants.

The expression "elastomeric polymer" is used to indicate a natural or synthetic polymer which, after vulcanisation, can be stretched repeatedly at room temperature to at least twice its original length and after removal of the tensile load returns substantially immediately and forcefully to its approximate original length (as defined by the ASTM D1566-11 Standard terminology relating to Rubber).

The expression "diene elastomeric polymer" is used to indicate an elastomeric polymer derived from the polymerisation of one or more monomers, at least one of which is a conjugated diene.

The expression "reinforcing filler" or filler is used to indicate a compound which, when incorporated into the elastomeric compound, is capable of improving the static and dynamic mechanical properties of the vulcanised elastomeric component.

The expression "mixing step (I)" is used to indicate the step of the process for preparing the elastomeric compound in which one or more additives, except for the vulcanising agent which is supplied in step (ii), can be incorporated by mixing and optionally heating. The mixing step (I) is also referred to as the "non- productive step". In the preparation of a compound, the non-productive step (I) may comprise several mixing stages.

The expression "mixing step (ii)" is used to indicate the subsequent step of the process for preparing the elastomeric compound in which the vulcanising agent and, optionally, the other additives of the vulcanisation package are introduced into the elastomeric compound obtained from step (I) and incorporated by mixing, at a controlled temperature below the vulcanisation temperature T-V, generally at a mixing temperature lower than 120 °C, so as to provide the vulcanisable elastomeric compound. The mixing step (ii) is also referred to as the "productive step" and it may comprise several stages, although it typically consists of only one stage.

For the purposes of the present description and the claims that follow, the expression "phr" (acronym for parts per hundred rubber parts) is used to indicate the parts by weight of a given elastomeric compound component per 100 parts by weight of the elastomeric polymer, considered net of possible extension plasticiser oils.

Unless otherwise indicated, all percentages are percentages by weight.

### BRIEF DESCRIPTION OF THE FIGURES

With reference to the attached Figures:
- Figure 1 schematically shows in half-section a vehicle wheel tyre according to the present invention;
- Figure 2 shows the thermogravimetric analysis (TGA) graphs of the 2,5-disubstituted tetrazoles 1.1 and 1.3;
- Figure 3 shows the IR spectrum of oligobutadiene POLYVEST^{®} 130 (3A) and its reaction product with tetrazole 1.1 (3B);
- Figure 4 shows the H-NMR spectrum of oligobutadiene POLYVEST^{®} 130 before (4A) and after (4B) the cycloaddition reaction with 2,5 disubstituted tetrazole 1.1;
- Figure 5 shows the trace of the thermogravimetric analysis (TGA) of a sample comprising a mixture of oligobutadiene POLYVEST^{®} 130 and disubstituted tetrazole 2,5 1.3;
- Figure 6 shows the H-NMR spectrum of POLYVEST^{®} 130 (PV) before and after functionalisation with the carbene precursor B 3-[4-(bromomethyl) phenyl]-3-(trifluoromethyl)-3H-diazirine (III-a) (BPTD) of the example 2B (DIAZ.: diazirine aromatic signals; VIN.: vinyl bonds);
- Figure 7 shows the TGA analysis of the starting reagents (diazirine III-a BPTD and tetrazole 1.13) and of the corresponding cross-linking functionalising agent **3.1,** synthesised according to Scheme 43;
- Figure 8 shows the IR spectrum of the blend obtained by dispersing the agent **3.4** according to the invention in POLYVEST^{®} 130, before and after heat treatment at 140 °C;
- Figure 9 shows the thermogravimetric analysis (TGA) graph of a sample of the agent **3.5** according to the invention.

### DETAILED DESCRIPTION OF THE INVENTION

A first aspect of the invention is represented by the cross-linking functionalising agents for elastomeric compounds of formula (I) 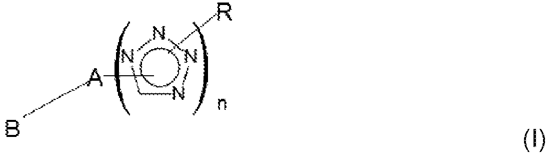 comprising an organic linker residue A, at least divalent, between the carbene precursor group B and the tetrazole component.

The expression "at least divalent organic linker residue" is used to indicate a stable organic residue capable of covalently binding at least one tetrazole and one group B.

Preferably, in the agent of formula (I) only one 2,5 disubstituted tetrazole is present, that is n equals 1, and A is a divalent organic residue, which links group B to a single tetrazole. In this preferred embodiment, the agent of formula (I) will be characterised by a single activation temperature of the tetrazole component (T-Tetr) greater than the activation temperature (T-B) of group B. Therefore, a preferred embodiment of the present invention is a cross-linking functionalising agent for elastomeric compounds of formula (I) 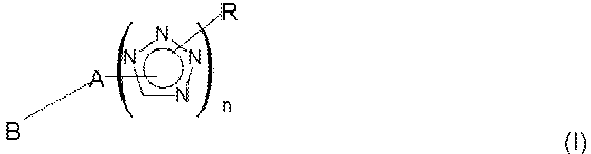 wherein
n is an integer equal to 1;
B is an organic group capable of generating a carbene or nitrene,
A is a divalent organic residue linker between group B and tetrazole, wherein A is covalently linked to position 2 or 5 of the tetrazole;
R is an organic group covalently linked respectively to position 5 or 2 of the tetrazoles, selected from linear or branched C₁-C₁₀ alkyl; C₆-C₂₀ aryl; C₃-C₁₀ cycloalkyl; 5- or 6- membered saturated, unsaturated or aromatic, mono- or bicyclic optionally benzocondensed heterocyclyl, comprising at least one heteroatom selected from N, S, O, R being in turn optionally substituted by at least one electron-withdrawing group EW or at least one electron-donating group ED,
wherein said cross-linking functionalising agent of formula (I) is characterised by an activation temperature (T-B) of group B and by an activation temperature (T-Tetr) of the tetrazole, wherein said activation temperature (T-Tetr) is greater than the activation temperature (T-B).

In the agent of formula (I), besides having the function of linking group B to the one or more tetrazoles, the linker A may contribute to modulating the reactivity and the physical properties of the agent, such as for example liposolubility and/or the activation temperature of the tetrazole component T-Tetr and of group B.

For these purposes, the linker A must be a residue that is sufficiently stable under normal conditions of processing, vulcanisation and use of the elastomeric compound.

During synthesis of the cross-linking functionalising agent, at the level of the linker A, the linking is typically obtained between the portion of the agent comprising the carbene or nitrene precursor B and the other portion comprising the one or more 2,5-disubstituted tetrazoles.

Therefore, besides the aromatic or heteroaromatic systems, the linker A may comprise aliphatic residues or (hetero)aromatic - aliphatic combined systems, optionally substituted, at least one linking functional group containing one or more heteroatoms, through which such linking may occur in the synthesis of the cross-linking functionalising agent.

Stable linking functional groups may be for example the ether, amino (preferably tertiary), thioether, trialkyl or triarylphosphine, silane, amide (preferably secondary), silazane, phosphoric ester, sulphonic ester, sulfone, sulfoxide group or carbonaceous chains, which can be obtained for example by coupling through the Grignard, Wittig, Michael reaction, aldol condensations and the like known to the person skilled in the art.

The organic residue A (linker) may comprise at least one or consist of an alkylene, an arylene and/or a heterocyclylene, or combinations thereof.

In the present description, alkylene, arylene and heterocyclylene refer to an at least divalent radical obtained by the removal of at least one hydrogen atom from an alkyl, aryl and heterocyclyl, respectively.

The linker A may optionally comprise at least one or consist of a C₁-C₂₀ alkylene, preferably a C₁-C₁₀ alkylene, that is a hydrocarbon residue, saturated or unsaturated, linear or branched, which - in chain - may include one or more heteroatoms, such as B, O, N, S, P or Si and/or one or more linking functional groups as defined above, said alkylene potentially being - on the one hand - directly linked to tetrazole at position 2 or 5 and to group B, on the other hand.

The alkylene may for example be -CH₂-, -CH< , -(CH₂)₂₋₂₀-. -CH₂-O-CH₂-, -CH₂-N alkyl-CH₂-, -(N alkyl-CH₂-CH₂)-; -(O-CH₂-CH- alkyl)-, -CH₂-S-CH₂-, -(S-CH₂-CH-alkyl)-, -SO-CH₂- alkyl, -CH₂-SO-CH₂- -SO₂-CH₂- alkyl, -CH₂-SO₂-CH₂-, -P(alkyl₃)-CH₂- alkyl, -CH₂-P(alkyl₃)-CH₂, -SiH₂-CH₂-alkyl, -CH₂-SiH₂-CH₂-.

At least one carbocyclic aromatic system of the linker A may be at least one arylene C₆-C₂₀, preferably C₆-C₁₀, optionally substituted. Preferably, said arylene comprises mono and polycyclic aromatic carbocyclic ring systems, in which individual carbocyclic rings are fused or attached to each other through a single bond, more preferably it is selected from phenylene, biphenylene, naphthylene, fluorenylene, phenantrilene, para-alkoxy phenylene, chlorophenylene, bis-chlorophenylene such as 3,5-dichlorophenylene.

The at least one heterocyclylene of the linker A comprising at least one heteroatom selected from N, S and O, may be mono- or bicyclic, 5 or 6 membered-rings, saturated, unsaturated or aromatic, optionally benzocondensate, optionally substituted. Preferably said at least one heterocyclylene is derived from pyrrole, dihydropyrrole, pyrrolidine, furan, dihydrofuran, tetrahydrofuran, benzofuran, isobenzofuran, dihydrobenzofuran, thiophene, dihydrothiophene, tetrahydrothiophene, benzothiophene, thiazole, dihydrothiazole, thiadiazole, dihydrothidiazole, triazole, dihydrotriazole, benzotriazole, tetrazole, dihydrorotetrazole, isothiazole, dihydroisothiazole, imidazole, benzoimidazole, dihydroimidazole, dihydrobenzoimidazole, oxazole, dihydrooxazole, benzoxazole, dihydrobenzoxazole, oxazoline, isoxazole, dihydroisooxazole, isoxazoline, oxadiazole, pyrazole, benzopyrazole, dihydropyrazole, pyridine, dihydropyridine, piperidine, piperazine, pyrazine, pyridazine γ-pyran, tetrahydropyran, dihydropyran, 1,4-dioxane, benzo-1,4-dioxane, morpholine, thiomorphine pyrazine, dihydropyrazine, pyrazoline, quinoline, isoquinoline dihydroquinoline, tetrahydroisoquinoline, indole, dihydroindole, isoindole, pyrimidine, dihydropyrimidine, quinazoline, quinoxaline and the like, more preferably it is derived from thiophene, pyrrole, furan, imidazole, oxazole, thiazole, pyridine or pyrazoline.

In the present agent of formula (I) although not preferred, it is possible that in the linker A there may be present either as substituents R even tetrazoles substituted in other positions or monosubstituted, in any case thermally stable at the activation temperature (T-Tetr) of the tetrazole component of the present agent of formula (I) and at the vulcanisation temperature (T-V) of the compound.

In a preferred embodiment, at least one of said arylene and/or heterocyclylene groups of the linker A is bound directly or with the interposition of a CH₂- group to the tetrazole. The Applicant observed that the presence of a (hetero)aromatic or (hetero)aromatic-CH₂- system directly bound to tetrazole allows to lower the activation temperature T-Tetr, while vice versa, the presence of an alkylene as defined above, directly bound to tetrazole, allows to raise the activation temperature T-Tetr.

Preferably, the residue A has a molecular weight of less than 1000 g/mol, more preferably less than 500 g/mol, even more preferably less than 300 g/mol, further even more preferably less than 250 g/mol.

Particularly preferred examples of residue A are shown below (shown here in a preferred embodiment in which they are bound to group B and a single Tetrazole, being n=1):
B- para-phenylene-CH₂-O-para-phenylene-Tetrazole
B-para-phenylene- CH₂ -Tetrazole
B- para-phenylene-CH₂-O-meta-phenylene-Tetrazole
B- para-phenylene-2,5-thiophenyl-Tetrazole
B- (CH₂)₉-O-meta-phenylene-Tetrazole

In the agent of formula (I), R group is preferably it is selected from aryl C₆-C₁₀ or heterocyclyl as defined above, optionally substituted.

The R group may for example be phenyl, 4-hydroxyphenyl, 4-carboxyphenyl, 3-chlorophenyl, 3,5-dichlorophenyl, 4-methoxyphenyl, 3,5-dimethylphenyl, 3,5-dimethoxyphenyl, 2.4,5-trifluoro-phenyl, 4-octyloxyphenyl, 4-phenyl-1,2,4-triazolidine-3,5-dione-yl, 1-hexyl, 2-thiophenyl, 5-amino-2-thiophenyl, benzyl, diphenyl, pyrrolyl, a benzo-fused polycyclic aromatic residue, derived for example from naphthalene, fluorene or anthracene, optionally substituted for example by halogen, nitrile, carboxyl, sulfonyl, alkyl C₁-C₂₀ or alkoxyl C₁-C₂₀.

In a preferred embodiment, R is selected from phenyl, 3-chlorophenyl, 3,5-dichlorophenyl and thiophenyl.

R may be selected from several lipophilic groups such as for example 4-hexylphenyl, naphthalenyl, fluorenyl and the like to increase the solubility of the agent of formula (I) in the elastomeric matrix.

R may also be selected to appropriately modify the activation temperature T-Tetr of the tetrazole component, also thanks to suitable electron-withdrawing EW or electron-donating ED substituents.

The R group may be substituted by at least one electron-withdrawing group EW.

Generally, if R is substituted by an electron-withdrawing group EW, the tetrazole is more stable and the activation temperature T-Tetr increases if the R group is in position 5, vice versa, the tetrazole becomes activatable at lower temperatures if the R group is in position 2.

The electron-withdrawing group EW may for example be selected from halogen, substituted carbonyl (-CO-alkyl or -CO-aryl), carboxyl, ester, cyan, nitro, haloalkyl, sulfonyl (SO₂-alkyl or SO₂-aryl), haloalkyl. Preferably the EW group is selected from ester, cyan, halogen and haloalkyl.

The R-group, when bonded to the nitrogen atom at position 2 of the tetrazole, is preferably a bi-substituted phenyl at positions 3 and 5 with EW groups such as for example halogen, more preferably with chlorine. The presence of these electron-withdrawing groups enables to activate the tetrazole to be activated at lower temperatures.

It may be advantageous to select an electron-withdrawing group EW which can be traced using appropriate analytical techniques, such as nuclear magnetic resonance, even when the agent of formula (I) that contains it is diluted in the elastomeric compound, such as a fluorinated group such as -CF₃.

The R group may be substituted by at least one electron-donating group ED. Generally, if R is substituted by an electron-donating group ED, the tetrazole is less stable and the T-Tetr decreases if the R group is in position 5, vice versa, if in 2. The electron-donating group ED may for example be selected from hydroxy, alkoxy C₁-C₁₀, benzyloxy, alkyl C₁-C₁₀, amino, amino monosubstituted with alkyl C_{1-C 10}, amino disusbstituted with alkyl C₁-C₁₀, primary amide (-NH-COR1), hydrazonyl (-CH=N-NR1₂) where R1 is H or alkyl C1-C5, and the like.

The agent of formula (I), comprises a carbene or nitrene precursor group (B).

Appropriate carbene precursor groups B are for example the diazirine group, diazo, which - by heating - release nitrogen and ketene, which releases CO.

The decomposition reactions of carbene precursor groups B can be represented as follows:

| | | | |
|---|---|---|---|
| Diazirine | 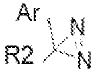 | | |
| Diazo | R2-C(=N₂)-Ar | → | R2 - C: -Ar (+ N₂ or CO) |
| Ketenes | R2-C(=C=O)-Ar | | |

where Ar represents a carbocyclic or heterocyclic aromatic system and R2 a perfluoroalkyl chain, preferably a CF₃ group, which stabilises precursor B and it is traceable through F-NMR.

In the agent of formula (I) the carbene precursor group B is typically bound to at least one carbocyclic or heterocyclic aromatic system Ar, which is part of linker A, at the level of the carbon atom where the carbene will be formed.

Appropriate nitrene precursor groups B are for example the sulfonazide group, azide, which release nitrogen isocyanate, which releases CO.

The decomposition reactions of nitrene precursor groups B can be represented as follows:

| | | | | |
|---|---|---|---|---|
| Solfonazides | Ar-SO₂-N₃ | → | Ar-SO₂N: | (+ N₂) |
| Azides | R or Ar-N₃ | → | R or Ar-N: | (+ N₂) |
| Isocyanates | Ar-N=C=O | → | Ar-N: | (+CO) |

In the agent of formula (I), if group B is a carbene precursor or a sulfonazide nitrene precursor, preferably linker A comprises at least one aromatic system - arylene or heterocyclylene as defined above - bound directly to B.

In the agent of formula (I) if group B is a nitrene precursor azide, the linker A may comprise an alkylene or aromatic system - arylene or heterocyclylene as defined above - bound directly to B.

In an embodiment, the agent of formula (I) is an agent of formula (I-a): 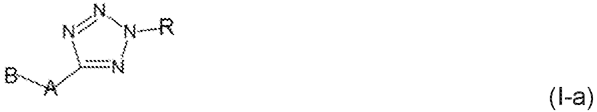 wherein n=1 and wherein B, A and R take the meanings previously indicated for agents of formula (I).

Specific examples of cross-linking functionalising agents of formula (I-a) are shown below: 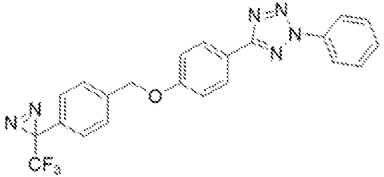 (Ex. 3.1) 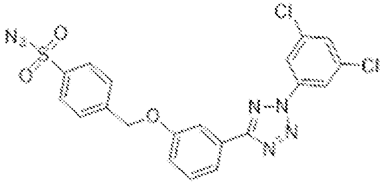 (Ex. 3.5)

In an embodiment, the agent of formula (I) is an agent of formula (I-b): 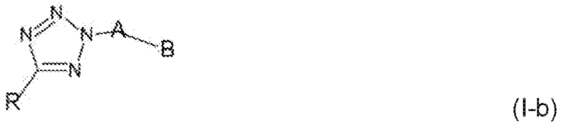 wherein n=1 and wherein B, A and R take the meanings previously indicated for agents of formula (I).

Specific examples of cross-linking functionalising agents of formula (I-b) are shown below: 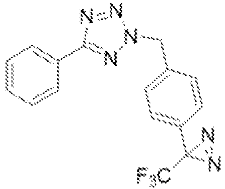 (Ex. 3.2) 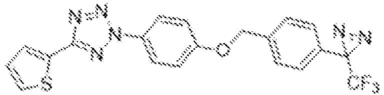 (Ex. 3.3) 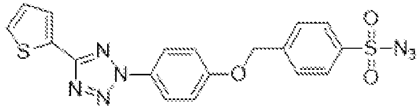 (Ex. 3.4)

Preferably the agent of formula (I) has a molecular weight of less than 1000 g/mol, more preferably less than 600 g/mol.

In an embodiment, the agent of formula (I) is an agent of formula (I-a) or (1-b) wherein A is a divalent organic residue (linker) of the formula A"-A' wherein

A" - directly bound to the B-group - is selected from C₆-C₁₀ arylene and aromatic mono- or bicyclic, with 5- or 6-membered rings, optionally benzocondensed heterocyclylene, comprising at least one heteroatom selected from N, S and O,

A' may be absent or, if present, it comprises C₆-C₁₀-arylene, aromatic heterocyclenes, C₁-C₁₀ -alkylene -oxy- C₆-C₁₀ -arylene- or C₁-C₁₀ -alkylene- oxy - aromatic heterocyclenes, as defined above and it is bound to tetrazole with the aromatic portion,

A" and A' being preferably directly bound, without the interposition of linking functional groups,

B is a carbene precursor group or a nitrene precursor sulfonazide group, and the other substituents can take the previous meanings.

In an embodiment, the agent of formula (I) is an agent of formula (I-a) or (1-b) wherein
A is a divalent organic residue (linker) of the formula A"-A' wherein
A" - directly bound to the B-group - is selected from C₁-C₁₀ -alkylene-, C₆-C₁₀ - arylene-, heterocyclylene, comprising at least one heteroatom selected from mono-or bicyclic N, S and O, with 5- or 6-membered rings, optionally benzocondensed, C₁-C₁₀ -alkylene- C₆-C₁₀ -arylene- and C₁-C₁₀ alkylene-heterocyclylene,
A' may be absent or, if present, it comprises C₆-C₁₀-arylene, aromatic heterocyclenes, C₁-C₁₀-alkylene -oxy- C₆-C₁₀-arylene- or C₁-C₁₀-alkylene- oxy - aromatic heterocyclenes, as defined above, and it is bound to tetrazole with the aromatic portion,
A" and A' being preferably directly bound, without the interposition of linking functional groups
B is a nitrene precursor azide group,
and the other substituents have the previous meanings.

In a preferred embodiment, the agent of formula (I) is an agent of formula (I-a) or (I-b) wherein
R is selected from phenyl, halogenophenyl, (poly)halogenophenyl, and thiophene; and/or
B is selected from azide, trifluoromethyl diazirine and sulfonazide.

In a more preferred embodiment, the agent of formula (I) is an agent of formula (I-a) or (I-b) wherein
A is a divalent organic residue (linker) of the formula A"-A' wherein
A" - directly bound to the B-group - is selected from C₆-C₁₀ arylene and aromatic heterocyclylene comprising at least one heteroatom selected from N, S and O, mono- or bicyclic, with 5- or 6-membered rings, optionally benzocondensed,
A' may be absent or, if present, it comprises C₆-C₁₀-arylene, aromatic heterocyclenes, C₁-C₁₀ -alkylene -oxy- C₆-C₁₀ -arylene- or C₁-C₁₀ -alkylene- oxy - aromatic heterocyclenes, as defined above and it is bound to tetrazole with the aromatic portion, A" and A' preferably being bound directly, without the interposition of linking groups,
R is selected from phenyl, halogenophenyl, (poly)halogenophenyl and thiophene; and
B is selected from trifluoromethyl diazirine and sulfonazide.

In a more preferred embodiment, the agent of formula (I) is an agent of formula (I-a) or (I-b) wherein
A is a divalent organic residue (linker) of the formula A"-A' wherein
A" - directly bound to the B-group - is selected from C₁-C₁₀ -alkylene-, C₆-C₁₀ - arylene-, heterocyclylene, comprising at least one heteroatom selected from mono-or bicyclic N, S and O, with 5- or 6-membered rings, optionally benzocondensed, C₁-C₁₀ -alkylene- C₆-C₁₀ -arylene- and C₁-C₁₀ alkylene-heterocyclylene,
A' may be absent or, if present, it comprises C₆-C₁₀-arylene, aromatic heterocyclenes, C₁-C₁₀-alkylene -oxy- C₆-C₁₀-arylene- or C₁-C₁₀-alkylene- oxy - aromatic heterocyclenes, as defined above, and it is bound to tetrazole with the aromatic portion,
A" and A' being preferably directly bound, without the interposition of linking groups, R is selected from phenyl, halogenophenyl, (poly)halogenophenyl and thiophene; and
B is a nitrene precursor azide group.

In the formula agent (I), the appropriate selection of organic residue A, group R, the possible one or more electron-withdrawing substituent EW and/or electron-donating substituent ED, group B and its possible substituent R2 allows to specifically modulate the activation temperatures of group B (T-B) and 2,5-disubstituted tetrazole (T-Tetr), besides modifying its solubility in the pre-selected elastomeric matrix.

Preferably, the agent of formula (I) has an activation temperature T-B of the carbene or nitrene precursor of group B less than 140 °C, more preferably less than 135 °C, even more preferably less than 130 °C.

Preferably the agent of formula (I) has one or more activation temperatures T-Tetr of the tetrazole component not less than 140 °C, more preferably not less than 150 °C, even more preferably not less than 160 °C.

Preferably, the minimum difference between the activation temperature (T-Tetr) of the tetrazole component and the activation temperature of group B (T-B) is at least 20°C, more preferably at least 30°C, even more preferably at least 40°C.

In a preferred embodiment, characterised by a lower T-Tetr, the agent of formula (I) is an agent of formula (I-a) or (I-b) wherein A is a divalent organic residue (linker) of formula A"-A', wherein both the portion of A' directly bound to tetrazole and the substituent R on tetrazole are aromatic systems.

In another preferred embodiment, characterised by a higher T-Tetr, the agent of formula (I) is an agent of formula (I-a) or (I-b) wherein A is a divalent organic residue (linker) of formula A"-A', wherein both the portion A' directly bound to the tetrazole and the substituent R on the tetrazole are aliphatic.

The agent of formula (I) may be prepared according to conventional procedures.

For the purposes of preparation, as shown in Scheme 2 below, in the linkers A there may be typically identified two portions, herein called A' and A" which, in the corresponding synthesis intermediates (II) and (III) may belong respectively to the portion comprising the 2,5-disubstituted tetrazole and to the portion comprising the carbene or nitrene precursor of group B.

Therefore, the agent of formula (I), wherein n=1 referred herein for simplicity as B-A-tetrazole-R, can be prepared according to the following General Scheme 2: 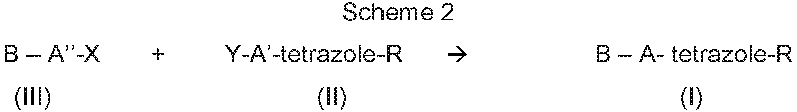
starting from the intermediates of formula (II) and (III), wherein
B represents the carbene or nitrene precursor as defined above,
A" represents the portion of linker A directly bound to B,
A' represents the remaining possible part of the linker A, bound to the tetrazole in position 2 or 5,
X represents a reactive group such as for example halogen, aryl or alkyl sulfonate, tosilate, mesilate or triflate,
Y represents a second reactive group capable of reacting with the reactive group X of the intermediate (III) and therefore stably bind A" to A', such as for example a group OH, NH, NH₂, B(OH)₂ or Sn(R3)₃, wherein R3 represents alkyl C₁-C₅,
tetrazole represents the tetrazole ring substituted at 2 and 5,
R represents an organic group as defined above, and
A is the linker comprising the residues A"-A' covalently bound to each other.

The residue A' may optionally be absent, for example as in the case of the agent 3.2. The reaction between the intermediates of formula (II) and (III) may for example be a nucleophilic substitution reaction, alkylation reaction or coupling reaction such as for example a Suzuki reaction, Stille reaction, Heck reaction and the like.

In the light of the information provided herein, a chemist skilled in the art is capable of preparing the present cross-linking functionalising agents (I) determining the appropriate linkers A and identifying the appropriate intermediates of formula (II) and (III) for their synthesis.

These intermediates may be commercially available or prepared as described in the literature or according to conventional methods, as exemplified in the present experimental part.

For example, the intermediate of formula (II), in which the R group is bound to the tetrazole at position 2 (intermediate II-a), may be prepared and converted into the corresponding cross-linking functionalising agent (I-a) according to Scheme 3 below: 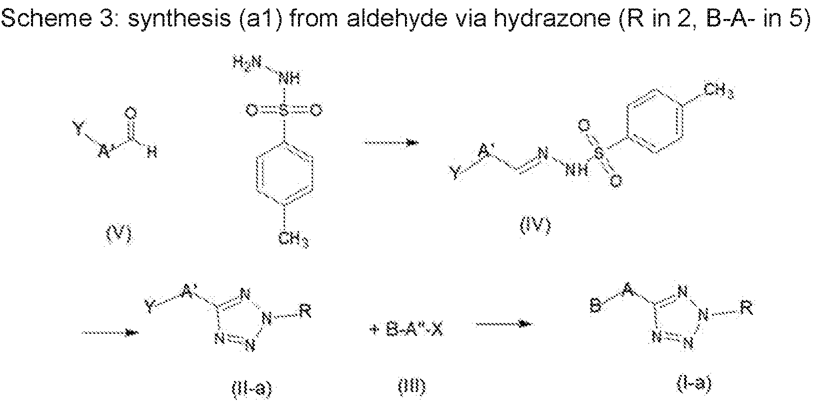 in which aldehyde (V) is reacted with a hydrazide (tosylhydrazide in this case) to obtain a tosylhydrazone (IV) which, in the presence of the appropriate amine R-NH2 (VIII), is cyclized to obtain the tetrazole intermediate (II-a). In turn, the tetrazole intermediate (II-a) - by reacting with the intermediate (III) - finally provides the cross-linking functionalising agent (I-a).

Similarly, the intermediates of formula (II), wherein the R group is instead bound to the tetrazole at position 5 (intermediate II-b), may be prepared and converted into the corresponding cross-linking functionalising agent (I-b) according to Scheme 4 below: 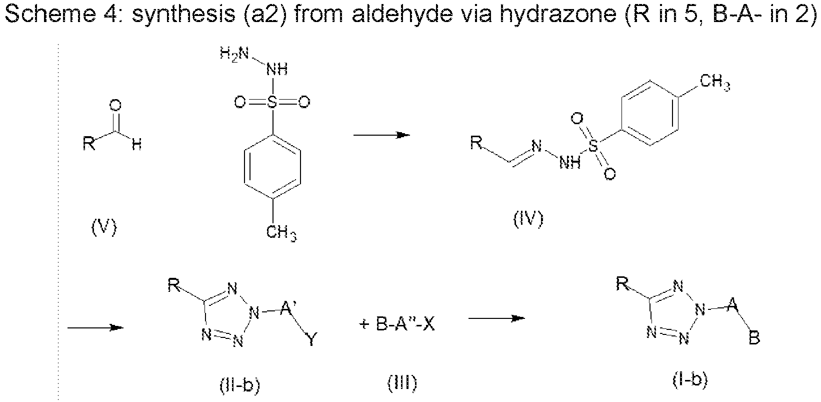 in which aldehyde (V) is reacted with a hydrazide (tosylhydrazide in this case) to obtain a tosylhydrazone (IV) which - in the presence of the appropriate amine Y-A'-NH2 (VIII), is cyclized to obtain the tetrazole intermediate (II-b). In turn, the tetrazole intermediate (II-b) - by reacting with the intermediate (III) - finally provides the cross-linking functionalising agent (I-b). The intermediates of formula (II), in which the R group is bound to the tetrazole at position 5 (intermediate II-b), may be prepared and converted into the corresponding cross-linking functionalising agent (I-b) also according to Scheme 5 below: 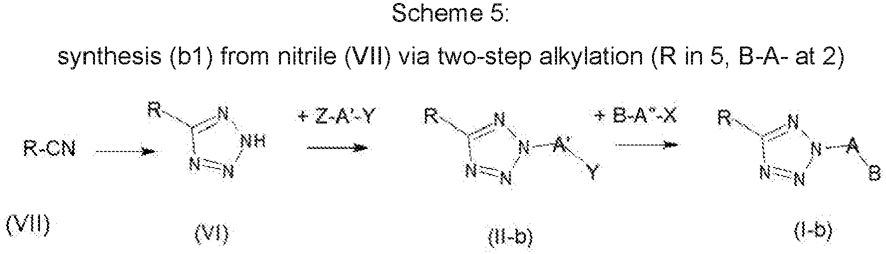 wherein Z represents halogen or a sulfonate, tosilate, mesilate, triflate, B(OH)₂ and the other substituents have the meanings indicated above, wherein the pre-selected nitrile R-CN is cyclized to monosubstituted tetrazole (VI), alkylated to obtain the tetrazole intermediate (II-b) which, by reacting with the intermediate (III), finally provides the functionalising cross-linking agent (I-b) with the introduction of the B portion. In this synthesis route, the Z and Y groups must be selected appropriately to obtain the correct selectivity and succession of reactions and to minimise unwanted reactions, optionally using targeted protection and deprotection of reactive groups, as known to the person skilled in the art.

Alternatively, the tetrazole intermediate (VI) may be alkylated by reacting with the intermediate X-A-B (III) therefore directly introducing the entire portion A-B at position 2 of the tetrazole, as shown in Scheme 6 below.

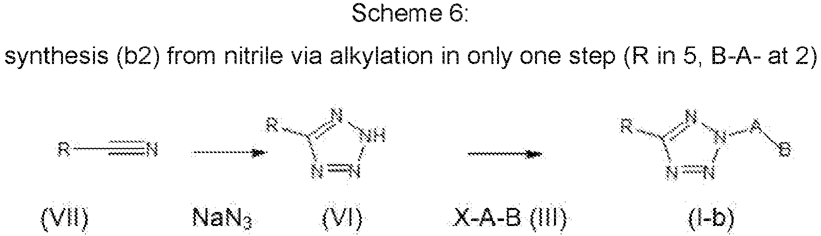

**The** intermediates of formula (III) B-A'-X or B-A-X may be prepared according to conventional methods or they may be commercially available.

Should the starting products or intermediates comprise functional groups interfering with the synthesis, said groups may be suitably protected and deprotected, for example as described in the book "Protective Groups in Organic Chemistry", Publisher J. F. W. McOmie (1973) and the like.

A further aspect of the present invention is represented by a functionalised diene elastomeric polymer obtained by reacting a diene elastomeric polymer with at least one agent of formula (I) as defined above.

Functionalised diene elastomeric polymer is prepared according to a process which preferably comprises
- providing a diene elastomeric polymer;
- providing an agent of formula (I) as defined above,
- mixing the diene elastomeric polymer and the agent of formula (I), keeping the blend at a temperature less than 170 °C, preferably less than 160 °C, for a period of time preferably comprised between 1 and 10 minutes, more preferably comprised between 2 and 4 minutes, to obtain the functionalized diene elastomeric polymer.

The functionalised polymer may be isolated or subjected in situ to further mixing with other components of the compound and subsequent vulcanisation.

Preferably, the functionalisation of the diene elastomeric polymer according to the present invention is conducted in a mixer, more preferably in at least one internal mixer of the tangential rotor type (Banbury^{®}) or intermix rotors, or in a continuous mixer of the Ko-Kneader^{™} type (Buss^{®}) or of the twin screw or multiple-screw type. Preferably, in the present functionalising process of the diene elastomeric polymer, the agent of formula (I) is used in a percentage weight ratio with respect to the diene elastomeric polymer comprised between 0.1% and 10%, more preferably between 0.5% and 3%.

Preferably, the diene elastomeric polymer to be functionalized according to the present process is selected from natural rubbers (NR), isoprene rubbers (IR), butadiene rubbers (BR), styrene-butadiene rubbers (SBR), including rubbers already functionalized at chain ends, and the like. Furthermore, due to the significant reactivity of the carbene or nitrene originating from the decomposition of group B of the agent of formula (I), even poor diene polymers in vinyl groups, such as for example partially hydrogenated styrene-butadiene rubbers, bromobutyl rubbers (BIIR), chlorobutyl rubbers (CIIR), isobutylene-isoprene rubbers (IIR), and the like, can be easily functionalized.

Advantageously, the functionalized diene elastomeric polymer of the invention is capable of improving the properties of the elastomeric compounds in which it is incorporated both by increasing the cross-linking and - in the case of blends of polymers that are non-similar - their best compatibilization, as demonstrated in the present experimental part.

A further object of the present invention is elastomeric composition for tyre compounds comprising the agent of formula (I) described above.

The elastomeric composition for tyre compounds according to the present invention is characterised by one or more of the following preferred aspects taken alone or combined with each other.

The elastomeric composition according to the invention comprises 100 phr of at least one diene elastomeric polymer. The elastomeric composition according to the invention may comprise two or more diene elastomeric polymers in a blend for a total of 100 phr. The diene elastomeric polymer may be selected from those commonly used in elastomeric compositions that can be vulcanised with sulfur, which are particularly adapted to produce tyres, that is from solid elastomeric polymers or copolymers with an unsaturated chain having a glass transition temperature (Tg) generally less than 20 °C, preferably comprised in the range from 0 °C -110 °C.

These polymers or copolymers may be of natural origin or they may be obtained by solution polymerization, emulsion polymerization or gas-phase polymerization of one or more conjugated dienes, optionally mixed with at least one co-monomer selected from mono-olefins, monovinylarenes and/or polar co-monomers in an amount not exceeding 60% by weight. Conjugated dienes generally contain from 4 to 12, preferably from 4 to 8 carbon atoms and they may be selected for example from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene and mixtures thereof. 1,3-butadiene and isoprene are particularly preferred.

Mono-olefins may be selected from ethylene or α-olefins generally containing from 3 to 12 carbon atoms, such as for example propylene, 1-butene, 1-pentene, 1-hexene, 1-octene or mixtures thereof.

Monovinylarenes, which may optionally be used as co-mononomers, generally contain from 8 to 20, preferably from 8 to 12 carbon atoms and for example they may be selected from : styrene; 1-vinylnaphthalene; 2-vinylnaphthalene; various alkyl, cycloalkyl, aryl, alkylaryl or styrene-aryl alkyl such as for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4-(4-phenylbutyl)styrene, and mixtures thereof. Styrene is particularly preferred.

Polar co-monomers, which may be optionally used, for example may be selected from: vinylpyridine, vinylquinoline, acrylic acid and alkylacrylic acid esters, acrylonitriles, or mixtures thereof, such as for example methyl acrylate, ethyl acrylate, methyl methacrylate, acrylonitrile and mixtures thereof.

Preferably, the diene elastomeric polymer for example may be from cis-1,4-polyisoprene (natural or synthetic, preferably natural rubber), 3,4-polyisoprene, polybutadiene (in particular polybutadiene with a high 1,4-cis content), isoprene/isobutene copolymers, optionally halogenated, 1,3- butadiene/acrylonitrile copolymers, styrene/1,3-butadiene copolymers, styrene/isoprene/1,3-butadiene copolymers, and mixtures thereof.

The elastomeric composition may optionally comprise at least one polymer of one or more mono-olefins with an olefinic comonomer or derivatives thereof. Mono-olefins may be selected from: ethylene and α-olefins generally containing from 3 to 12 carbon atoms, such as for example propylene, 1-butene, 1-pentene, 1-hexene, 1-octene or mixtures thereof. The following are preferred: copolymers from among ethylene and an α-olefin, optionally with a diene; homo-polymers of isobutene or copolymers thereof with small amounts of a diene, which are optionally at least partly halogenated. The diene, optionally present, generally contains from 4 to 20 carbon atoms and it is preferably selected from: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among them, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; and mixtures thereof.

The elastomeric composition may optionally comprise one or more partially hydrogenated diene elastomeric polymers.

The elastomeric tyre composition according to the present invention comprises at least one reinforcing filler.

The present composition may comprise from 1 phr to 150 phr, from 5 phr to 120 phr or from 10 phr to 90 phr of at least one reinforcing filler.

Preferably, the reinforcing filler is selected from carbon black, white fillers, silicate fibres, lignin, cellulose or mixtures thereof. In an embodiment, said reinforcing filler is a white filler selected from hydroxides, oxides or hydrated oxides, salts and hydrated metal salts, modified silicate fibres or mixtures thereof. Preferably, the white filler is silica.

Preferably, said silica may be present in the elastomeric composition in an amount comprised between 1 phr and 100 phr, more preferably between 30 phr and 70 phr. Commercial examples of suitable conventional silica are Zeosil 1165 MP produced by Solvay, and Ultrasil 7000 GR produced by Evonik.

In an embodiment, said reinforcing filler is carbon black.

Preferably, said carbon black is present in the elastomeric composition in an amount comprised between 1 phr and 100 phr, preferably between 5 phr and 70 phr.

Preferably, carbon black is selected from those having a surface area of not smaller than 20 m²/g, preferably larger than 50 m²/g (established by STSA - statistical thickness surface area according to the ISO 18852:2005 standard).

Carbon black may for example be N234, N326, N330, N375 or N550, N660 marketed by Birla Group (India) or by Cabot Corporation.

The elastomeric composition for tyre compounds of the invention comprises at least one agent of formula (I).

Preferably the present elastomeric composition comprises at least 0.3 phr or at least 0.5 phr or at least 0.7 phr or at least 1 phr of at least one agent of formula (I).

The elastomeric composition for tyre compounds of the invention preferably comprises not more than 10 phr, more preferably not more than 5 phr, even more preferably not more than 2 phr of at least one agent of formula (I).

The elastomeric composition for tyre compound of the invention preferably comprises from 0.1 phr to 10 phr, more preferably from 0.3 phr to 5 phr, even more preferably from 0.5 phr to 3 phr of at least one agent of formula (I).

The elastomeric composition for tyre compound of the invention may comprise two or more of said cross-linking functionalising agents of formula (I) in a blend, preferably in a total quantity from 0.1 phr to 10 phr, more preferably from 0.3 phr to 5 phr, even more preferably from 0.5 phr to 3 phr.

The elastomeric composition for tyre compound according to the invention may comprise a vulcanising agent.

Preferably, the composition comprises at least 0.1 phr, at least 0.2 phr, at least 0.5 phr, at least 0.8 phr or at least 1 phr of at least one vulcanising agent.

Preferably, the composition comprises from 0.1 to 10 phr, 0.2 to 10 phr, 1 to 10 phr or 1.5 to 5 phr of at least one vulcanising agent.

The at least one vulcanising agent is preferably selected from sulfur, or alternatively from sulfur-containing molecules (sulfur donors), such as for example, bis[(trialkoxysyl)propyl] polysulfides, thiurams, dithiodimorpholine and caprolactam-disulfide and mixtures thereof.

In an embodiment, the vulcanising agent is selected from the polytetrazole cross-linking agents described in the patent application WO2021/137143A1 on behalf of the Applicant.

Preferably the vulcanising agent is sulfur, preferably selected from soluble sulfur (crystalline sulfur), insoluble sulfur (polymeric sulfur) and sulfur dispersed in oil and mixtures thereof.

A commercial example of a vulcanising agent suitable for use in the elastomeric composition of the invention is sulfur Redball Superfine by International Sulphur Inc. In the present elastomeric composition, the vulcanising agent may be used together with adjuvants such as vulcanisation activators, accelerators and/or retardants known to persons skilled in the art.

The elastomeric composition according to the invention may optionally comprise at least one vulcanisation activator.

The vulcanisation activators suitable for use in the present elastomeric composition are zinc derivatives, in particular ZnO, ZnCO₃, salts of saturated or unsaturated fatty acids containing from 8 to 18 carbon atoms, which are preferably formed in situ in the elastomeric composition by reacting ZnO and the fatty acid, same case applying to Bi₂O₃, PbO, Pb₃O₄, PbO₂ or mixtures thereof. For example, zinc stearate is used, preferably formed in situ, in the elastomeric composition, from ZnO and fatty acid, or magnesium stearate, formed from MgO, or mixtures thereof.

The vulcanisation activators may be present in the elastomeric composition of the invention in amounts preferably from 0.2 phr to 15 phr, more preferably from 1 phr to 5 phr.

Preferred activating agents derived from the reaction of zinc oxide and stearic acid. An example of an activator is the product Aktiplast ST marketed by Rheinchemie.

The elastomeric composition according to the invention may further comprise at least one vulcanisation accelerator.

Vulcanisation accelerators which are commonly used may be selected from, for example, dithiocarbamates, guanidines, thioureas, thiazoles, sulfenamides, sulfenimides, thiurams, amines, xanthans, or mixtures thereof.

Preferably the accelerating agent is selected from mercaptobenzothiazole (MBT), N-cyclohexyl-2-benzothiazol-sulfenamide (CBS), N-tert-butyl-2-benzothiazolesulfenamide (TBBS) and mixtures thereof.

Commercial examples of accelerators suitable for use in this elastomeric composition are N-cyclohexyl-2-benzothiazol-sulfenamide Vulkacit^{®} (CBS or CZ) and N-tert-butyl-2-benzothiazolesulfenamide, Vulkacit ^{®} NZ/EGC marketed by Lanxess.

Vulcanisation accelerators may be used in the present elastomeric composition in an amount preferably from 0.05 phr to 10 phr, preferably from 0.1 phr to 7 phr, more preferably from 0.5 phr to 5 phr.

The elastomeric composition according to the invention may optionally comprise at least one vulcanisation retardant agent.

The vulcanisation retardant agent suitable for use in this elastomeric composition is preferably selected from urea, phthalic anhydride, N-nitrosodiphenylamine N-cyclohexylthiophthalimide (CTP or PVI) and mixtures thereof.

A commercial example of a suitable retardant agent is N-cyclohexylthiophthalimide VULKALENT G by Lanxess.

The vulcanisation retardant agent may be present in the present elastomeric composition in an amount preferably from 0.05 phr to 2 phr.

This elastomeric composition may comprise one or more vulcanisation retardant agents as defined above in a mixture.

The elastomeric composition according to the invention may optionally comprise at least 0.05 phr, preferably at least 0.1 phr or 0.5 phr, more preferably at least 1 phr or 2 phr of at least one silane coupling agent.

Preferably, the elastomeric composition according to the invention comprises 0.1 phr to 20.0 phr or 0.5 phr to 10.0 phr, even more preferably from 1.0 phr to 5.0 phr of at least one silane coupling agent.

Preferably, said coupling agent is a silane coupling agent selected from those having at least one hydrolyzable silane group, which can be identified, for example, by the following general formula (IX):

(R')₃Si-CₙH₂ₙ-T (IX)

where the R' groups, equal to or different from each other, are selected from: alkyl, alkoxy or aryloxy groups or from halogen atoms, provided that at least one of the R' groups is an alkoxy or aryloxy group; n is an integer from 1 to 6; T is a group selected from: nitrous, mercapto, amino, epoxy, vinyl, imide, chlorine, -(S)ₘCₙH₂ₙ-Si-(R')₃ and -S-COR', where m and n are integers from 1 to 6 and the R' groups are defined as above.

Particularly preferred silane coupling agents are bis(3-triethoxysilyl-propyl) tetrasulfide and bis(3-triethoxysilylpropyl) disulfide, also called polysulfide compatibilizing agents. Said coupling agents may be added as such or in admixture with an inert filler (for example carbon black) so as to facilitate their incorporation into the elastomeric composition.

An example of a silane coupling agent is TESPT: bis(3-triethoxysilylpropyl) tetrasulfide Si69 marketed by Evonik.

The elastomeric composition according to the invention may further comprise one or more additional ingredients commonly used in the industry, such as for example plasticising oils, resins, antioxidants and/or antiozonants (anti-ageing agents), waxes, adhesives and the like.

For example, the elastomeric composition according to the present invention with the aim of further improving the processability of the compound may further comprise at least one plasticising oil.

The amount of plasticiser is preferably from 1 phr to 80 phr, preferably from 10 phr to 70 phr, more preferably from 30 phr to 50 phr.

The expression "plasticising oil" is used to indicate a petroleum-derived process oil or a mineral oil or oil of plant origin or an oil of synthetic origin or combinations thereof.

The plasticising oil may be a petroleum-derived process oil selected from paraffins (saturated hydrocarbons), naphthenes, polycyclic aromatic hydrocarbons and mixtures thereof.

Examples of suitable petroleum-derived process oils are aromatic, paraffinic, naphthenic oils such as MES (Mild Extract Solvated), DAE (Distillate Aromatic Extract), TDAE (Treated Distillate Aromatic Extract), TRAE (Treated Residual Aromatic Extract), RAE (Residual Aromatic Extract) known in the industry.

The plasticising oil may be an oil of natural or synthetic origin derived from the esterification of glycerol with fatty acids, comprising glycerine triglycerides, diglycerides, monoglycerides or mixtures thereof.

Examples of suitable vegetable oils are sunflower oil, soya oil, linseed oil, rapeseed oil, castor oil and cotton oil.

The plasticising oil may be a synthetic oil selected from the alkyl or aryl esters of phthalic acid or phosphoric acid.

The elastomeric composition according to the present invention may further comprise at least one resin. The resin, if used in the composition, is a non-reactive resin, preferably selected from the group comprising hydrocarbon resins, phenolic resins, natural resins and mixtures thereof.

The amount of resin may be from 0 phr to 80 phr, preferably from 10 phr to 40 phr. The elastomeric composition according to the invention may optionally comprise at least one wax.

The wax may for example be a petroleum wax or a paraffin mixture.

Commercial examples of suitable waxes are the mixture of N-paraffins by Repsol and the microcrystalline wax Antilux^{®} 654 by Rhein Chemie.

The wax may be present in the elastomeric composition of the invention in a generally overall amount from 0.1 phr to 20 phr, preferably from 0.5 phr to 10 phr, more preferably from 1 phr to 5 phr.

The elastomeric composition according to the invention may optionally comprise at least one antioxidant agent.

The antioxidant agent is preferably selected from N-isopropyl-N'-phenyl-p-phenylenediamine (IPPD), N- (1, 3-dimethyl-butyl)-N'-phenyl-p-phenylenediamine (6PPD), N,N'-bis- (1, 4-dimethyl-pentyl)-p-phenylenediamine (77PD), N,N'-bis- (1-ethyl-3-methylpentyl)-p-phenylene-diamine (DOPD), N,N'-Bis-(1,4-dimethylpentyl)-p-phenylenediamine, N,N'-diphenyl-p-phenylenediamine (DPPD), N,N'-ditolyl-p-phenylenediamine (DTPD) N,N'-di-beta-naphthyl-p-phenylenediamine (DNPD), N,N'-Bis(1-methylheptyl)-p-phenylenediamine, N,N'-Di-sec-butyl-p-phenylenediamine (44PD), N-phenyl-N'-cyclohexyl-p-phenylenediamine, N-phenyl-N'-1-methylpentyl-p-phenylenediamine and the like, and mixtures thereof, preferably it is N-1,3-dimethylbutyl-N-phenyl-p-phenylenediamine (6-PPD).

A commercial example of a suitable antioxidant agent is 6PPD by Eastman.

The antioxidant agent may be present in the elastomeric composition in an overall amount preferably from 0.1 phr to 20 phr, preferably from 0.5 phr to 10 phr.

A further aspect of the present invention is an elastomeric compound for a tyre obtained by mixing and possibly vulcanising the elastomeric composition according to the invention.

As described below, regarding the compound preparation process, depending on the conditions applied (mixing and vulcanisation temperature T-V), preparation stage and characteristic activation temperatures (T-B, T-Tetr) of the agent of formula (I), the elastomeric compound obtained may have different properties, i.e., being not cross-linkable and not vulcanisable (not yet containing neither the functionalized diene elastomeric polymer nor the vulcanising agent), not cross-linkable but vulcanisable (containing the vulcanising agent but not the functionalized diene elastomeric polymer), cross-linkable but not vulcanisable (containing the functionalized diene elastomeric polymer but not the vulcanising agent), cross-linkable and vulcanisable (containing both the functionalised diene elastomeric polymer and the vulcanising agent), cross-linked and vulcanisable (having the functionalised diene elastomeric polymer cross-linked but not vulcanised), cross-linkable and vulcanised (having the functionalised diene elastomeric polymer vulcanized but not cross-linked) or, lastly, cross-linked and vulcanised (having the functionalized diene elastomeric polymer cross-linked and vulcanized).

Advantageously, before vulcanisation, the elastomeric compound according to the invention can be easily processed. When vulcanised, the elastomeric compound has excellent properties comparable to those of similar compounds containing commercial functionalised polymers and better than those of similar compounds comprising non-functionalised diene elastomeric polymers, as shown in the present experimental part.

For example, the elastomeric compound of the invention, cross-linked and vulcanised, may have an increase in the value of E' at 10 Hz, 70°C of at least 5 % or even of 10 % and, still at 70°C, a decrease in the tan delta value of 5 % or even of 10 %, measured as described in the experimental part, with respect to similar compounds comprising non-functionalised elastomeric polymers.

A further aspect of the present invention is a process for preparing an elastomeric compound according to the invention.

The present process typically comprises one or more mixing steps in at least one suitable mixer, in particular at least one mixing step (i) (non- productive) and one mixing step (ii) (productive) as defined above, followed by a final vulcanisation step and optionally cross-linking step (iii).

Each mixing step may comprise several intermediate processing stages, characterised by the temporary interruption of mixing to allow the addition of one or more ingredients but generally without unloading the compound.

The process for preparing the elastomeric compound according to the invention preferably comprises:
- (i) a mixing step, in one or more stages as defined above, wherein said temperature T1 is comprised between 100 and 170 °C (non- productive step);
- (ii) a step of adding the vulcanising agent and mixing as defined above, wherein said temperature T2 is comprised between 50 and 120 °C (productive step), and
- (iii) a vulcanisation and optional cross-linking step, as defined above, wherein said temperature T3 is comprised between 140 and 190 °C, to obtain the vulcanised and, optionally, cross-linked elastomeric compound according to the invention.

Depending on the activation temperature of group B (T-B) and one or more activation temperatures of the tetrazole component (T-Tetr), which can be modulated by suitably choosing the appropriate R substituent, linker A and possible R2 substituent, the elastomeric polymer functionalisation reaction can be carried out before the subsequent vulcanisation and optionally cross-linking reactions.

After functionalisation carried out in situ, at normal mixing temperatures and in simple mixers, by reacting common commercial polymers with the agent of formula (I), the functionalised diene elastomeric polymer can therefore be easily incorporated into the elastomeric mixture until it is completely dispersed, without encountering the mixing difficulties which may arise as a result of the thickening of the mass due to unwanted cross-linking.

Subsequently, only when a satisfactory degree of homogeneity of the mixture has been achieved can mass consolidation be carried out directly in the mould thgrough classical sulfur vulcanisation and, optionally, cross-linking by reacting the activated tetrazole of the functionalised diene elastomeric polymer.

During the first mixing step (i) the reinforcing filler and the agent of formula (I) are dispersed into the elastomeric matrix at temperature T1. Under these conditions, the at least one tetrazole ring of the agent of formula (I) remains substantially stable and does not undergo significant decomposition, while the group B carbene or nitrene precursor of the agent of formula (I) decomposes and reacts with the elastomeric matrix, also functionalising the least reactive polymers.

In the subsequent productive step (ii), conducted at a temperature T2 at which both the tetrazole component and the vulcanising agent are stable, the vulcanising agent is dispersed, preferably together with vulcanisation accelerators and/or retardants. In the productive step (ii), the temperature T2 is generally kept below 120°C, preferably below 100°C, in order to avoid any unwanted pre-vulcanisation.

Lastly, in the final step (iii), the vulcanisable and cross-linkable compound is incorporated into one or more components of the tyre and it is subjected to vulcanisation, preferably conducted in the mould, at temperature T3 where the consolidation of the compound can be carried out both by cross-linking, through the decomposition of the tetrazole component and subsequent reaction of the nitrilimine intermediate with double vinyl bonds of polymers, and by the formation of sulfur bridges (poles) of the vulcanising agent.

In a variant, at least one of the one or more activation temperatures of the tetrazole component (T-Tetr) is higher than the vulcanisation temperature (T-V). Therefore, if at the final step (iii) of the process it is heated to a temperature T3 higher than the vulcanisation temperature (T-V) but lower than said temperature of at least one T-Tetr, there can be obtained a compound which is vulcanised but only partially or not cross-linked, given that the tetrazole functions were not activated or only partially and therefore did not react or did not fully react.

This compound, appropriately incorporated in tyre components, for example in the tread, may be cross-linked and therefore consolidated when the temperature of the tyre in use exceeds one or more of these activation temperatures T-Tetr of the unreacted tetrazole component.

In the present process, the mixing steps (i) and (ii) are preferably conducted in conventional mixers.

The mixing may be carried out, for example, using a mixer of the open-mill type or an internal mixer of the tangential-rotor type (Banbury^{®}) type or intermix rotor type, or in continuous mixers of the Ko-Kneader^{™} type (Buss^{®}) or of the twin-screw or multiple-screw type.

Preferably mixing steps are carried out at varying times, for example between 90 and 600 seconds.

A further aspect of the present invention is a vehicle wheel tyre component comprising, or preferably consisting of, an elastomeric compound according to the invention, preferably selected from tread band, under-layer, anti-abrasive layer, sidewall, sidewall insert, mini-sidewall, liner, underliner, rubberising layers, bead filler, bead reinforcing layers (flipper) and bead protecting layers (chafer), more preferably selected from tread, underlayer, rubberising layers and sidewall insert. The tyre component may comprise or preferably consist of an elastomeric mixture according to the invention which is not cross-linked and/or not vulcanised (green component) or an elastomeric compound according to the invention which is vulcanised and optionally cross-linked.

A further aspect of the present invention is a vehicle wheel tyre comprising at least one tyre component according to the invention.

The vehicle wheel tyre of the invention may comprise at least one tyre component consisting of an elastomeric compound according to the invention which is non-vulcanised and/or non-cross-linked (green tyre) or an elastomeric compound according to the invention which is vulcanised and optionally cross-linked (vulcanised tire).

Preferably said component is selected from the tread, underlayer, rubber layers and sidewall insert.

In an embodiment, a vehicle tyre according to the present invention comprises at least
- one carcass structure comprising at least one layer of carcass with opposite lateral edges associated with respective bead structures;
- a pair of sidewalls, each optionally comprising a sidewall insert, respectively applied to the lateral surfaces of the carcass structure in an axially external position;
- optionally, a belt structure applied in a radial position outside the carcass structure;
- a tread band applied in a radial position outside the said carcass structure or, if present, belt structure,
- optionally, a layer of elastomeric material, said underlayer, applied in a radially internal position with respect to said tread band,
wherein at least one component, preferably the tread band, the rubbering of at least one carcass layer or the sidewall insert, comprises, or preferably consists of, the elastomeric compound according to the invention.

**The** tyre according to the invention may be a tyre for two, three or four-wheeled vehicles.

**In** an embodiment, the tyre according to the invention is a car tyre, preferably a high-performance car tyre.

**In** an embodiment, the tyre according to the invention is a motorcycle tyre in which at least one component comprises, or preferably consists of, the elastomeric compound according to the invention.

**In** a preferred embodiment, the tyre according to the invention is a tyre for motorcycle wheels, preferably for sports or racing motorcycles.

Typically, a motorcycle wheel tyre is a tyre that has a straight cross-section distinguished by a high transverse curvature.

The tyre according to the invention mat be for summer or winter use or for all seasons.

In an embodiment, the tyre according to the invention is a tyre for bicycle wheels.

A bicycle wheel tyre typically comprises a carcass structure turned up around a pair of circles at the rims at the beads and a tread band arranged in a position radially external to the carcass structure. Preferably at least the tread band and/or a rubberising layer comprises the elastomeric compound according to the invention. The tyre according to the present invention may be manufactured according to a process comprising:
- forming components of a green tyre on at least one forming drum;
- conforming, moulding and vulcanising the tyre;
wherein forming at least one of the components of a green tyre comprises:
- providing at least one green component comprising, or preferably consisting of, the vulcanizable elastomeric compound of the invention.

### DESCRIPTION OF A TYRE ACCORDING TO THE INVENTION

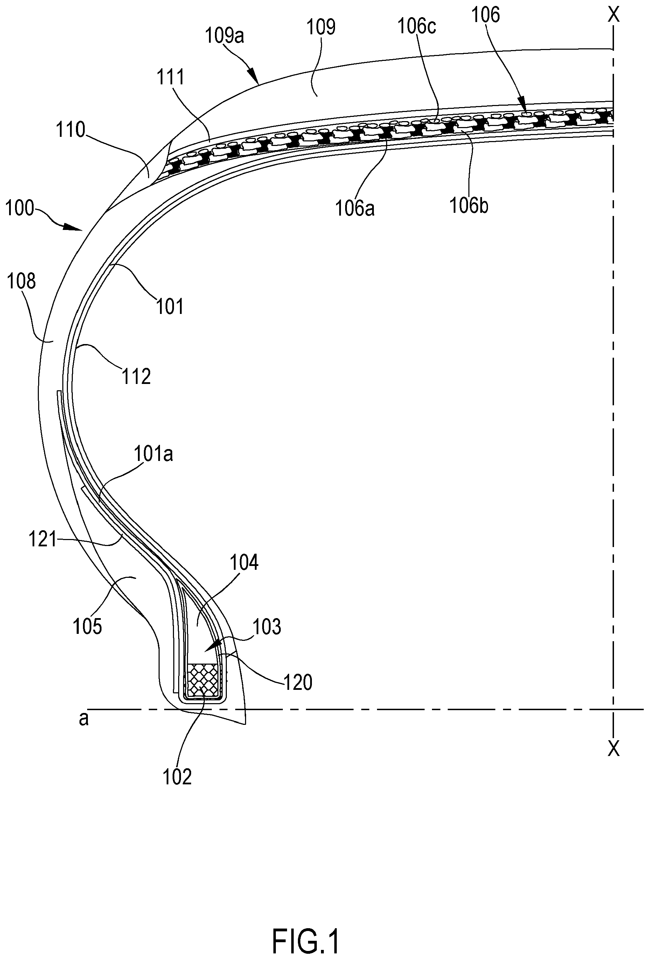

A vehicle wheel tyre according to the invention, comprising at least one component comprising the present elastomeric compound, is shown in a radial half-section in Figure 1.

In Figure 1, "a" indicates an axial direction and "X" indicates a radial direction, in particular X-X indicates the line of the equatorial plane. For the sake of simplicity, Figure 1 shows only one portion of the tyre, the remaining portion - not represented - being identical and arranged symmetrically with respect to the equatorial plane "X-X".

The tyre (100) for four-wheeled vehicles comprises at least one carcass structure, comprising at least one carcass layer (101) having respectively opposite end flaps engaged to respective annular anchoring structures (102), known as bands, optionally associated with a bead filler (104).

The area of the tire comprising the band (102) and the filler (104) forms a bead structure (103) intended to anchor the tyre on a corresponding mounting rim, not shown.

The carcass structure is usually of the radial type, that is the reinforcing elements of the at least one carcass layer (101) are located in planes comprising the rotation axis of the tyre and substantially perpendicular to the equatorial plane of the tyre. Said reinforcing elements generally consist of textile cords. Each bead structure is associated with the carcass structure by folding the opposite side edges of at least one carcass layer (101) backwards around the anchoring annular structure (102) so as to form the so-called turn-ups of the carcass (101a) as shown in Figure 1.

In an embodiment, the coupling between the carcass structure and the bead structure may be provided by means of a second carcass layer (not shown in figure 1) applied at an axially outer position with respect to the first carcass layer.

An anti-abrasive layer (105) optionally made with elastomeric material is arranged at an external position of each bead structure (103).

The carcass structure is associated with a belt structure (106) comprising one or more belt layers (106a), (106b) arranged in radial superimposition with respect to each other and with respect to the carcass layer, typically having textile and/or metallic reinforcing cords incorporated within a layer of elastomeric material.

Such reinforcing cords can have crossed orientation with respect to a circumferential extension direction of the tyre (100). The expression "circumferential" direction is used to indicate a direction generically directed according to the tyre rotation direction.

At least one zero-degree reinforcing layer (106c), commonly known as a "belt 0°", may be applied in a radially outermost position to the belt layers (106a), (106b), which generally incorporates a plurality of elongated reinforcing elements, typically metallic or textile cords, oriented in a substantially circumferential direction, therefore forming an angle of a few degrees (such as an angle of between about 0° and 6°) with respect to a direction parallel to the equatorial plane of the tyre, and coated with vulcanised elastomeric material.

A tread band (109) comprising the elastomeric compound according to the invention is applied in a position radially external to the belt structure (106).

On the lateral surfaces of the carcass structure, each extending from one of the lateral edges of the tread (109) to the respective bead structure (103), are also applied in an axially outer position respective sidewalls (108) made of elastomeric material.

In the radially external position, the tread band (109) has a rolling surface (109a) intended to come into contact with the ground. Circumferential grooves, which are connected by transverse notches (not shown in Figure 1) so as to define a plurality of blocks of various shapes and sizes distributed over the rolling surface (109a), are generally made on this surface (109a), which for the sake of simplicity is represented smooth in Figure 1.

An under-layer (111) may be arranged between the belt structure (106) and the tread band (109).

A strip consisting of elastomeric material (110), commonly known as "mini-sidewall", may optionally be present in the connecting area between the sidewalls (108) and the tread band (109), this mini-sidewall generally being obtained by co-extrusion with the tread band (109) and allowing an improvement of the mechanical interaction between the tread band (109) and the sidewalls (108). Preferably, the end portion of sidewall (108) directly covers the lateral edge of the tread band (109).

In the case of tubeless tyres, a rubber layer (112), generally known as "liner", which provides the necessary impermeability to the inflation air of the tyre, can also be provided in a radially inner position with respect to the carcass layer (101).

The rigidity of the tyre sidewall (108) can be improved by providing the bead structure (103) with a reinforcing layer (120) generally known as "flipper" or additional strip-like insert.

The flipper (120) is a reinforcing layer which is wound around the respective bead core (102) and the bead filler (104) so as to at least partially surround them, said reinforcing layer being arranged between the at least one carcass layer (101) and the bead structure (103 ). Usually, the flipper is in contact with said at least one carcass layer (101) and said bead structure (103).

The flipper (120) typically comprises a plurality of textile cords incorporated within a layer of elastomeric material.

The annular reinforcing structure or bead (103) of the tyre may comprise a further protective layer which is generally known by the term of "chafer" (121) or protective strip and which has the function of increasing the rigidity and integrity of the bead structure (103).

The chafer (121) usually comprises a plurality of cords incorporated within a rubberising layer of elastomeric material. Such cords are generally made of textile materials (such as aramide or rayon) or metal materials (for example steel cords).

A layer or sheet made of elastomeric material may be arranged between the belt structure and the carcass structure. The layer may have a uniform thickness. Alternatively, the layer may have a variable thickness in the axial direction. For example, the layer may have a greater thickness close to its axially outer edges with respect to the central area (crown).

Advantageously, the layer or sheet may extend on a surface substantially corresponding to the extension surface of said belt structure.

In a preferred embodiment, a layer or sheet of elastomeric material as described above may be placed between said belt structure and said tread band, said additional layer or sheet extending preferably on a surface substantially corresponding to the extension surface of said belt structure.

The elastomeric compound according to the present invention may be advantageously incorporated into one or more of the above-mentioned tyre components.

The packaging of the tyre (100) as described above may be carried out by assembling the respective semi-finished products to form the tyre components, on a forming drum, not shown, using at least one assembly device.

On the forming drum there may be constructed and/or assembled at least one part of the components intended to form the carcass structure of the tyre. More in particular, the forming drum is suitable for first receiving the possible liner, and subsequently the carcass structure. Subsequently, devices - not shown - coaxially engage around each of the end flaps one of the annular anchoring structures, arrange an outer sleeve comprising the belt structure and the tread band in a position coaxially cantered around the cylindrical carcass sleeve and shape the carcass sleeve in a toroidal configuration by radial expansion of the carcass structure, so as to determine the application thereof against a radially internal surface of the outer sleeve.

Subsequently to the packaging of the green tyre, a moulding and vulcanisation treatment are carried out, aimed at determining the structural stabilisation of the tyre by vulcanising the elastomeric compositions, as well as imprinting on the tread band a desired tread pattern and any distinctive graphic marks on the sidewalls.

### EXPERIMENTAL PART

### Analysis method

### Thermogravimetric analysis (TGA)

The thermal behaviour of 2,5-disubstituted tetrazoles (Table 1) and of the functionalising cross-linking agents (I) of the invention (Table 2) has been investigated, in particular the temperatures at which the decomposition of thermally unstable groups with nitrogen release (T-B and/or T-Tetr) began, through thermogravimetric analysis, with a Mettler Toledo TGA / DSC1 StarE model equipment, by adding approximately 5 mg of pure substance into the crucible and by applying a thermal heating program from 30°C to 500°C with a ramp of 5°/min. under N₂ flow. The temperatures at which the decomposition of thermally unstable groups with nitrogen release (T-B and/or T-Tetr) began were identified as the temperatures at which the derivative before the sample weight curve with respect to time became negative and greater in absolute value at 0.15.

NMR The samples were prepared by dissolving 5-10 mg of the compound subject of analysis in 0.6 ml of deuterated solvent (Chloroform, DMSO, D₂O).

The NMR spectra were recorded with a Bruker AVANCE III HD 400 MHz spectrometer. The chemical displacements (δ) are expressed in parts per million (ppm) and the coupling constants are given in Hz. The split patterns are indicated as follows: s = singlet, d = doublet, t = triplet, q = quartet, m = multiplet, br = broad.

IR the IR spectra were recorded with an FT-IR Perkin Elmer Spectrum 100 spectrometer provided with a universal ATR sampling accessory. All spectra were acquired with a resolution of 4 cm⁻¹, in the mid-infrared region ranging from 4000 cm⁻¹ to 550 cm⁻¹. The reported spectra are the average of 16 scans per sample, from which the baseline was subtracted.

The sample was loaded directly onto the crystal and pressed with a metal tip. The spectrum was recorded in ATR (Attenuated Total Reflectance) mode.

### Measuring the mechanical properties of the compounds

The elastomeric materials prepared in the examples were vulcanised to give specimens on which the mechanical properties were evaluated.

Unless otherwise indicated, vulcanisation was conducted in a mould, in a hydraulic press at 190°C and at a pressure of 204 kg/cm² for a time of about 30 minutes.

The static mechanical properties were measured at 23°C according to the ISO 37:2005 standard. The tensile tests were carried out on vulcanised Dumbbell straight axis specimens. In particular, the load at different elongation levels (10 %, 50 %, 100 % and 300 %, respectively called CA0.1 CA0.5, CA1 and CA3), the tensile strength CR and the elongation at break AR % were measured.

The dynamic mechanical properties at compression E' (dynamic elastic modulus) E" (dynamic viscosity modulus) and the Tan delta (loss factor) were measured using an Instron Model 1341 dynamic device in the tensile-compression mode as described here. A test piece of vulcanised material (190°C for 30 minutes) having a cylindrical shape (length = 25 mm; diameter = 14 mm), preloaded by compression to a longitudinal deformation of 25% of the initial length and maintained at the fixed temperature of 0°C, or 70°C throughout the test, was subjected to a dynamic sinusoidal stress having an amplitude of +/- 3.5% with respect to the length under pre-load, with a frequency of 100 Hz. The dynamic mechanical properties are expressed in terms of values of E' and Tan delta. The Tan delta value was calculated as the ratio of the dynamic moduli E" / E'.

The shear dynamic mechanical properties G' (shear dynamic elastic modulus), G" (shear dynamic viscosity modulus), Tan delta (loss factor) and Delta G' were measured at 70°C, frequency 10 Hz, at the % deformations indicated in the tables. The reagents used in the preparations of 2,5 disubstituted tetrazoles and cross-linking functionalising agents (I) were purchased from Fluorochem or Tokyo Chemical Industry and used as received. Chromatographic purifications were performed using Merck 9385 silica gel, pore size 60 Å (230-400 mesh).

Abbreviations: AcOEt ethyl acetate; AcCN, acetonitrile; BPTD: 3-[4-bromomethyl)phenyl] -3-(trifluoromethyl)-3H-diazirine; DABCO 1,4-diazabicyclo[2.2.2] octane or triethylenediamine; DEAD diethyl azodicarboxylate; DMF dimethylformamide; DMSO dimethyl sulfoxide; DPPA diphenylphosphoryl azide, etOH ethanol; PPh₃: triphenylphosphine TMAH tetramethylammonium hydroxide; THF tetrahydrofuran; TEA triethylamine.

### Example 1

### Preparation of 2,5-disubstituted tetrazoles and study of activation temperature (T-Tetr)

### 2,5-disubstituted tetrazoles 1.1 - 1.33 shown in Table 1 below were prepared:

**Table 1**

| Tetrazole No. | Formula | T-Tetr °C. |
|---|---|---|
| 1.1 | 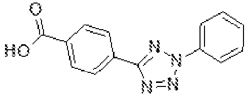 | 210 |
| 1.2 | 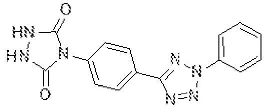 | 200 |
| 1.3 | 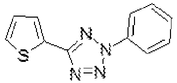 | 150 |
| 1.4 | 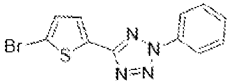 | 150 |
| 1.5 | 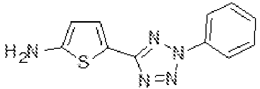 | 165 |
| 1.6 | 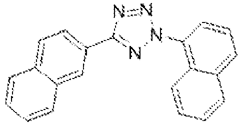 | 100 |
| 1.7 | 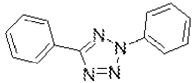 | 170 |
| 1.8 | 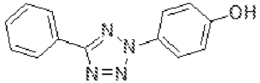 | 150 |
| 1.9 | 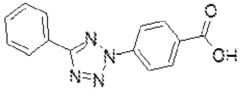 | 180 |
| 1.10 | 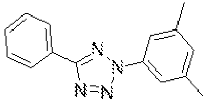 | 165 |
| 1.11 | 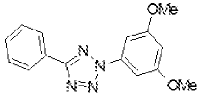 | 160 |
| 1.12 | 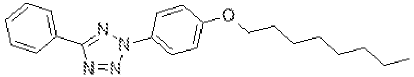 | 180 |
| 1.13 | 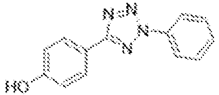 | 190 |
| 1.14 | 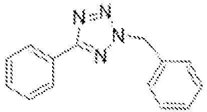 | 200 |
| 1.15 | 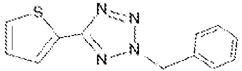 | 210 |
| 1.16 | 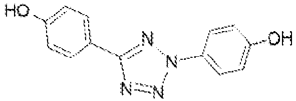 | 180 |
| 1.17 | 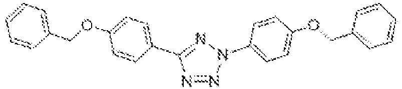 | 250 |
| 1.18 | 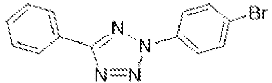 | 170 |
| 1.19 | 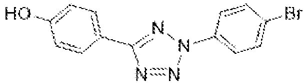 | 200 |
| 1.20 | 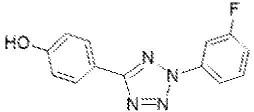 | 180 |
| 1.21 | 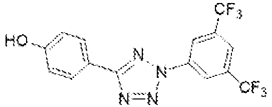 | 190 |
| 1.22 | 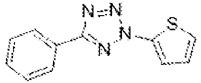 | 150 |
| 1.23 | 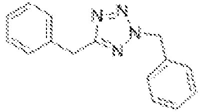 | 220 |
| 1.24 | 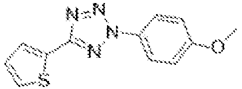 | 180 |
| 1.25 | 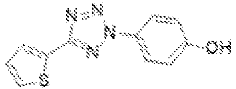 | 190 |
| 1.26 | 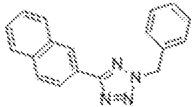 | 230 |
| 1.27 | 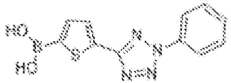 | 140 |
| 1.28 | 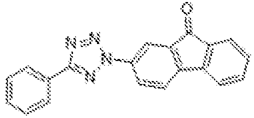 | 195 |
| 1.29 | 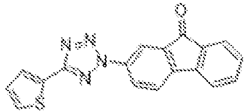 | 185 |
| 1.30 | 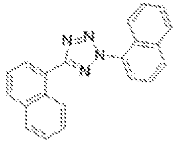 | 145 |
| 1.31 | 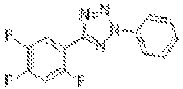 | 165 |
| 1.32 | 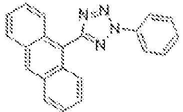 | 170 |
| 1.33 | 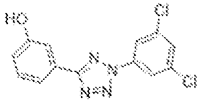 | 170 |

The thermal behaviour of these tetrazoles was assessed by thermogravimetric analysis in order to investigate the effect of the substituent groups present at positions 2 and 5 of tetrazole on the activation temperature T-Tetr.

Some of these tetrazoles, including a reactive group Y, in particular tetrazoles 1.13, 1.25, 1.33 and the monosubstituted tetrazole described below (Vla), were then used as intermediates in the synthesis of functionalised cross-linking agents of formula (I). The 2,5 disubstituted tetrazoles in Table 1 were prepared as described below.

### 1.1 Synthesis of tetrazoles from aldehyde (V) via hydrazone (IV)

Tetrazoles having an aromatic group at position 2 and an aromatic group at position 5, optionally substituted, were prepared as described in Chem. Commun. (2016), 52, 9426, in line with the General Synthesis scheme (a1) or (a2) previously described from the corresponding aldehyde (V) by forming the intermediate hydrazone (IV).

The following scheme 7 refers in particular to derivatives wherein the aromatic group at 2 and 5 is a phenyl but it is similarly applicable to derivatives where those aromatic groups are other systems, such as thiophenyl or naphthyl, optionallysubstituted:

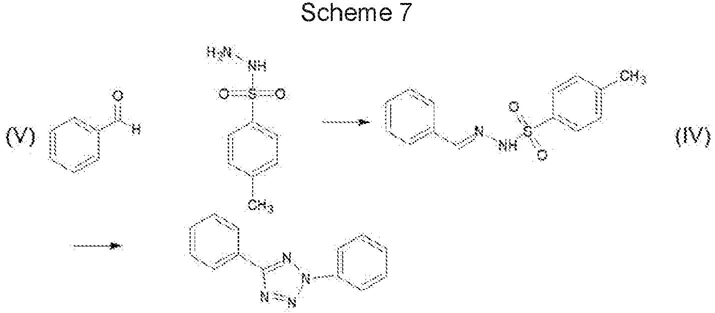

As reported in literature, the synthesis comprised two steps:
- hydrazone synthesis: aromatic aldehyde was dissolved (1 eq.) in ethanol. Tosylhydrazine (1 eq.) was added and it was stirred for 4 - 5 hours to reflux. Water was then added, and the precipitate formed by filtration was recovered. The product thus obtained was used for the second step without further purification.
- synthesis of disubstituted tetrazole: the solid hydrazone obtained in the first step (1 eq.) was dissolved in pyridine to obtain solution A. At the same time, solution B was prepared by adding a NaNO₂ solution (1 eq.) in water to a cooled solution of the appropriate aromatic amine R-NH₂ (VIII) (1 eq.), HCI conc. and water/ethanol (1:1). Solution B was added to the ice-bath cooled solution A by slowly dripping and at the end of the addition, it was stirred overnight at room temperature. The reaction mixture with diluted HCI was then neutralised, recovering the precipitate formed by filtration. The reaction crude was purified by chromatographic column or crystallised by appropriate solvent depending on the type of tetrazole, as detailed below. By way of example, detailed below are the syntheses and analyses of some of the tetrazoles in Table 1 and the relative intermediates. Where not specifically described, final tetrazoles and the respective intermediates may be prepared in a similar manner.

### Synthesis of tetrazoles 1.8, 1.9, 1.10, 1.11, 1.12, 1.14, 1.18, 1.28 (phenyl not substituted at position 5 of tetrazole, other substituent at 2)

Tetrazoles 1.8, 1.9, 1.10, 1.11, 1.12, 1.14, 1.18 and 1.28 were synthesized from benzaldehyde (V-a) and p-toluenesulfonyl hydrazide by forming the corresponding tosylhydrazone (IV-a) according to Scheme 8: 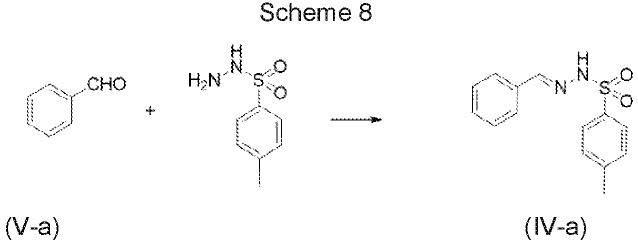 and the conversion thereof into tetrazole by reacting with the appropriate amine (VIII) according to the procedure described above.

The tosylhydrazone intermediate (E)-N'-benzylidene-4-methylbenzenesulfonohydrazide (IV-a) appeared as a white solid and was used for the next step without further purification.

FTIR-ATR (cm⁻¹): 574, 619, 664, 686, 703, 750, 815, 836, 853, 907, 957, 1022, 1042, 1093, 1107, 1161, 1187, 1227, 1292, 1311, 1326, 1366, 1437, 1452, 1495, 1596, 2284, 2916, 3033, 3225.

### Synthesis of 2-(4-bromophenyl)-5-phenyl-2H-tetrazole (1.18)

Tetrazole **1.18** was prepared from the tosylhydrazone intermediate (IV-a) by reacting with 4-bromoaniline (VIII-c) as shown in Scheme 9 below: 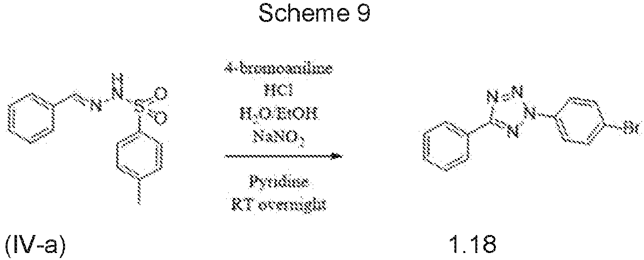 according to the following procedure: 1.013 g (3.69 mmol) of (E)-N'-benzylidene-4-methylbenzenesulfonhydrazide (IV-a) were dissolved in pyridine (70 ml) in a round-bottom flask to obtain solution A. At the same time, a NaNO₂ solution (0.254 g, 3.69 mmol) in water was added drop by drop to a cooled mixture (0 °C) of 4-bromoaniline (VIII-c) (0.635 g, 3.69 mmol) and concentrated HCI (0.254 g, 11.07 mmol) dissolved in 20 ml of H₂O / EtOH (1:1) to obtain solution B. Solution A was cooled with an ice bath and Solution B was then added slowly. The resulting mixture was allowed to react overnight. The mixture was poured into an acid solution (5% HCI, 200 ml) and the precipitate formed was collected with a filtering funnel. The crude product was purified by chromatography on silica gel by eluting with a hexane:AcOEt mixture (8:2) to collect the pure product as a red solid (0.72 g, yield: 65%)
¹ H NMR (400 MHz, CDCl₃) δ 8.20 - 8.15 (m, 2H), 8.06 - 8.00 (m, 2H), 7.67 - 7.62 (m, 2H), 7.49 - 7.42 (m, 3H).

TGA analysis: T-Tetr 170 °C. Decomposition occurred before fusion.

### Synthesis of 2-(5-phenyl-2H-tetrazol-2-yl)-9H-fluoren-9-one (1.28)

Tetrazole **1.28** was prepared from the tosylhydrazone intermediate (IV-a) by reacting with 2-amino-9H-fluoren-9-one (VIII- B) as shown in Scheme 10 below: 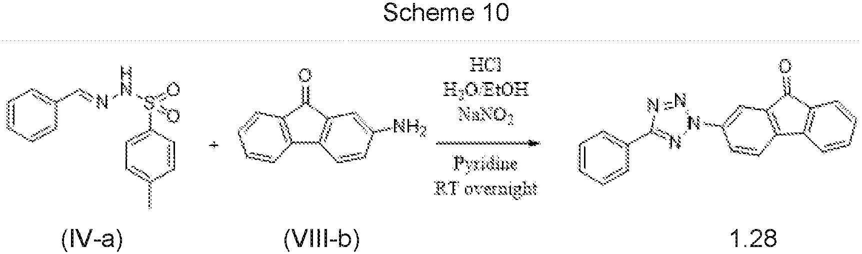 according to the following procedure: 0.494 g (1.8 mmol) of (E)-N'-benzylidene-4-methylbenzenesulfonhydrazide (IV-a) were dissolved in pyridine (70 ml) in a round-bottom flask to obtain solution A. At the same time, a NaNO₂ solution (0.114 g, 1.8 mmol) in water was added drop by drop to a cooled mixture (0 °C) of 2-amino-9H-fluoren-9-one (VIII- b) (0.342 g, 1.8 mmol) and concentrated HCI (0.197 g, 5.4 mmol) dissolved in 20 ml of H₂O / EtOH (1:1) to obtain solution B. Solution A was cooled with an ice bath and solution B was then added slowly. The reaction was carried out overnight. The mixture was poured into an acid solution (5% HCI, 300 ml) and the precipitate formed was collected with a filtering funnel. The crude product was purified by chromatography on silica gel by eluting with a dichloromethane:hexane mixture (8:2) to collect the pure product as a green solid (0.070 g, yield: 12%).

¹H NMR (400 MHz, CDCl₃) δ 8.50 (d, *J* = 2.0 Hz, 1H), 8.39 (dd, *J* = 8.1, 2.0 Hz, 1H), 8.27 (dd, J = 7.5, 2.0 Hz, 2H), 7.75 (dd, J = 7.7, 5.5 Hz, 2H), 7.64 (d, *J* = 7.4 Hz, 1H), 7.60 - 7.51 (m, 4H), 7.39 (t, *J* = 7.1 Hz, 1H).

TGA analysis: T-Tetr 195 °C. Decomposition occurred before fusion.

### Synthesis of tetrazoles 1.13, 1.16, 1.17, 1.19, 1.20 and 1.21 (4-Oh-phenyl at position 5 of the tetrazole, OH optionally protected)

Tetrazoles 1.13, 1.16, 1.17, 1.19, 1.20 and 1.21 were prepared starting from 4-hydroxybenzaldehyde (V-b) and p-toluenesulfonyl hydrazide by forming the corresponding tosylhydrazone (IV-b) according to Scheme 11 below: 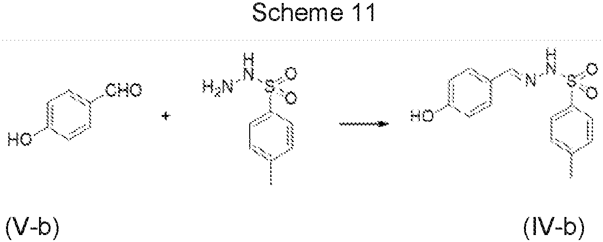 and the conversion thereof into tetrazole by reacting with the appropriate amine R-NH₂ (VIII) according to the procedure described above.

The tosylhydrazone intermediate (E)-N'-(4-hydroxybenzylidene)-4-methylbenzene sulfonyl hydrazide (IV-b) appeared as a light brown solid and it was used for the next step without further purification.

### Synthesis of 4-(2-phenyl-2H-tetrazol-5-yl)- phenol (1.13)

Tetrazole 1.13 was prepared from the tosylhydrazone intermediate (IV-b) by reacting aniline (VIII-a) according to the procedure described above. The crude product was purified by chromatography on silica gel by eluting with a hexane:AcOEt mixture (8:2) and obtaining the pure product as an orange solid (yield: 53%).

¹H-NMR (500 MHz, DMSO) δ 10.16 (s, 1H), 8.19 - 8.10 (m, 2H), 8.06 - 7.97 (m, 2H), 7.75 - 7.66 (m, 2H), 7.66 - 7.58 (m, 2H), 7.02 - 6.92 (m, 1H).

TGA analysis: T-Tetr 190 °C. Decomposition occurred before fusion.

### Synthesis of 4-(2-(4-bromophenyl)-2H-tetrazole-5-yl)-phenol (1.19)

Tetrazole **1.19** was prepared from the tosylhydrazone intermediate (IV-b) by reacting with 4-bromoaniline (VIII-c) as shown in Scheme 12 below: 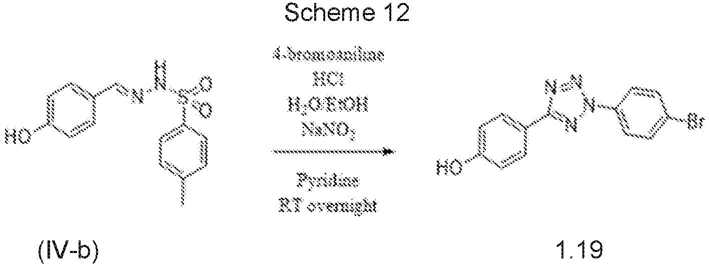 according to the following procedure: 1.131 g (3.9 mmol) of (E)-N'-(4-hydroxybenzylidene)-4-methylbenzenesulfonhydrazide (IV-b) were dissolved in pyridine (70 ml) in a round-bottom flask to obtain solution A. At the same time, a NaNO₂ solution (0.67 g, 3.9 mmol) in water was added drop by drop to a cooled mixture (0 °C) of 4-bromoaniline (VIII-c) (0.269 g, 3.9 mmol) and concentrated HCI (0.426 g, 11.7 mmol) dissolved in 20 ml of H₂O / EtOH (1:1) to obtain solution B. Solution A was cooled with an ice bath and solution B was then added slowly. The resulting mixture was allowed to react overnight. The mixture was poured into an acid solution (5% HCI, 300 ml) and the precipitate formed was collected by filtration. The crude product was purified by chromatography on silica gel by eluting with a hexane:AcOEt mixture (3:2) to collect the pure product as a light pink solid (0.057 g, yield: 4.7%).

¹ H NMR (400 MHz, CDCl₃) δ 8.17 - 8.12 (m, 2H), 8.10 - 8.06 (m, 2H), 7.73 - 7.68 (m, 2H), 7.01 - 6.95 (m, 2H).

TGA analysis: T-Tetr 200 °C. Decomposition occurred before fusion.

### Synthesis of 2-(3-fluorophenyl)-5-phenyl-2H-tetrazole (1.20)

Tetrazole **1.20** was prepared from the tosylhydrazone intermediate (IV-b) by reacting with 3-fluoroaniline (VIII-d) as shown in Scheme 13 below: 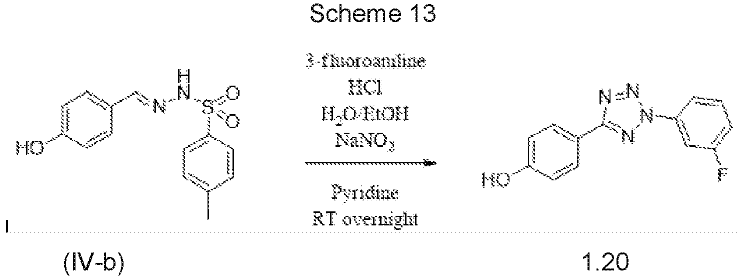 according to the following procedure: 1.3 g (4.48 mmol) di (E)-N'-(4-hydroxybenzylidene)-4-methylbenzenesulfonhydrazide (IV-b) were dissolved in pyridine (70 ml) in a round-bottom flask to obtain solution A. At the same time, a NaNO₂ solution (0.309 g, 4.48 mmol) in water was added drop by drop to a cooled mixture (0 °C) of 3-fluoroaniline (VIII-d) (0.498 g, 4.48 mmol) and concentrated HCl (0.490 g, 13.44 mmol) dissolved in 20 ml di H₂O / EtOH (1:1) to obtain solution B. Solution A was cooled with an ice bath and Solution B was then added slowly. The resulting mixture was allowed to react overnight. The mixture was poured into an acid solution (5% HCl, 300 ml) and the precipitate formed was collected with a filtering funnel. The crude product was purified by chromatography on silica gel by eluting with a hexane:AcOEt mixture (3:2) to collect the pure product as a purple solid (0.115 g, yield: 10%).

¹ H NMR (400 MHz, CDCl₃) δ 8.20 - 8.15 (m, 2H), 8.04 (d, *J* = 8.3 Hz, 1H), 7.96 (dt, *J* = 9.3, 2.2 Hz, 1H), 7.61 - 7.53 (m, 1H), 7.26 - 7.20 (m, 1H), 7.03 - 6.98 (m, 2H). TGA analysis: T-Tetr 180 °C. Decomposition occurred before fusion.

### Synthesis of tetrazoles 1.3, 1.4, 1.5, 1.24 1.25, 1.27 and 1.29 (thiophene at position 5 of the tetrazole, optionally substituted)

The tetrazoles 1.3, 1.4, 1.5, 1.24, 1.25, 1.27 and 1.29 were prepared starting from 2-thiophene-carboxaldehyde (v-c), optionally substituted (V-d), and p-toluenesulfonyl hydrazide by forming the tosylhydrazide intermediate (IV-c and IV-d) thiophene and the conversion thereof into the desired tetrazole by reacting with the appropriate amine (VIII) according to the procedure described above.

### Synthesis of 2-phenyl-5-(2-thienyl)-2H-tetrazole (1.3)

### i) Synthesis of (E)-4-methyl-N'-(thiophen-2-ylmethylene)benzenesulfonohydrazide (IV-c)

The synthesis of intermediate hydrazone (IV-c) was conducted as described below for tetrazole 1.24.

### ii) synthesis of 2-phenyl-5-(2-thienyl)-2H-tetrazole (1.3)

Tetrazole **1.3** was prepared from the tosylhydrazone intermediate (IV- c) by reacting with aniline (VIII- A) as shown in Scheme 14 below: 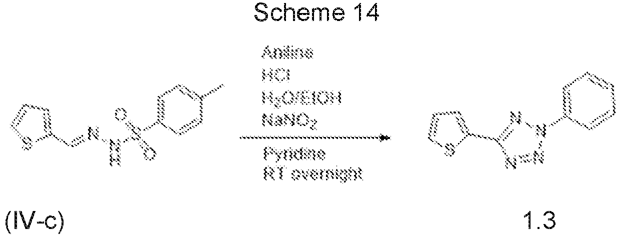 according to the following procedure: 2.30g (8.20 mmol) of (E)-4-methyl-N'-(thiophene-2-ylmethylene)benzenesulfonohydrazide (IV-c) were dissolved in pyridine (30 ml) in a round-bottom flask to obtain solution A. At the same time, a NaNO₂ solution (0.57g, 8.20 mmol) in water was added drop by drop to a cooled mixture (0 °C) of aniline (VIII-c) (0.76 g, 8.20 mmol) and concentrated HCl (0.89 g, 24.60 mmol) dissolved in 20 ml of H₂O / EtOH (1:1) to obtain solution B. Solution A was cooled with an ice bath and Solution B was then added slowly. The resulting mixture was allowed to react overnight. The mixture was poured into an acid solution (5% HCl, 300 ml) and the precipitate formed was collected with a filtering funnel. The crude product was purified by chromatography on silica gel by eluting with a hexane: dichloromethane mixture 1:1 to collect the pure product as a yellow solid (1.03 g, yield: 55%).

¹ H NMR (400 MHz, CDCl₃) δ 8.24 - 8.18 (m, 2H), 7.94 (dd, J = 3.7, 1.2 Hz, 1H), 7.64 - 7.57 (m, 2H), 7.56 - 7.50 (m, 2H), 7.25 - 7.20 (m, 1H)
TGA analysis: T-Tetr 150 °C. Decomposition occurred before fusion.

### Synthesis of 2-(4-methoxyphenyl)-5-(thiophene-2-yl)-2H-tetrazole (1.24)

### i) synthesis of (E)-4-methyl-N'-(thiophen-2-ylmethylene)benzenesulfonohydrazide (IV-c)

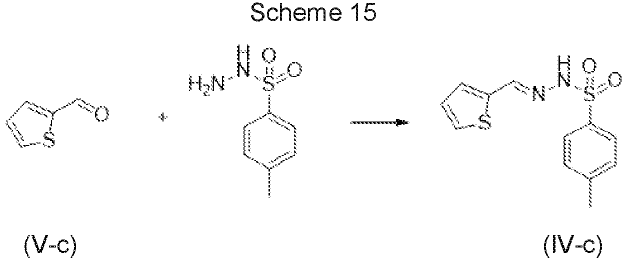

5.00 g (44.6 mmol) thiophene-2-carbaldehyde (v-c), 8.3 g (44.6 mmol) p-toluenesulfonyl hydrazide and 50ml of EtOH were added to a round-bottom flask provided with a water condenser. The reaction mixture was heated to reflux under magnetic stirring for 5 hours. The reaction mixture was allowed to cool to room temperature and then poured into cold water. The precipitate formed was collected by filtration to obtain the desired compound as a light yellow solid (12.0 g, yield: 96%). The product was used for the next step without further purification.

¹H NMR (400 MHz, DMSO) δ 11.36 (s, 1H), 8.08 (s, 1H), 7.75 - 7.70 (m, 2H), 7.59 (dt, J = 5.0, 0.9 Hz, 1H), 7.41 (d, J = 8.0, 0.9 Hz, 1H).41 (d, J = 8.0 Hz, 2H), 7.35 (dd, J = 3.6, 1.0 Hz, 1H), 7.07 (dd, J = 5.0, 3.6 Hz, 1H), 2.37 (s, 3H).

### ii) synthesis of 2-(4-methoxyphenyl)-5-(thiophene-2-yl)-2H-tetrazole (1.24)

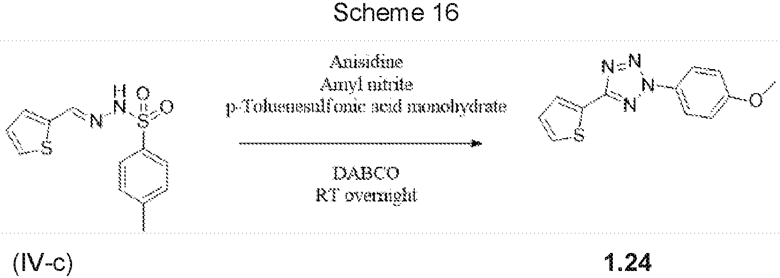

(E)-4-methyl-N'-(thiophen-2-ylmethylene)benzenesulfonohydrazide (IV-c) (2.53 g, 9 mmol) and DABCO (3.03 g, 27 mmol) were dissolved in AcCN (60 ml) in a round-bottom flask to obtain solution A. At the same time, anisidine (2.2 g, 18 mmol), p-Toluenesulfonic acid monohydrate (3.4 g, 18 mmol) were dissolved in AcOEt; amyl nitrite (4.8 ml, 36 mmol) was added after 15 minutes and the solution was allowed to stir for 15 minutes to collect solid B. Solid B was filtered and washed with AcOEt. Solution A was cooled with an ice and salt bath to -15 °C and solid B was then added slowly. The resulting mixture was allowed to react overnight. The mixture was poured into water and the precipitate formed was collected by filtration. The crude product was purified by chromatography on silica gel by eluting with dichloromethane to collect the pure product as an orange solid (1.2 g, yield: 51%).

¹ H NMR (400 MHz, CDCl₃) δ 8.11 - 8.06 (m, 2H), 7.89 (dd, J = 3.6, 1.2 Hz, 1H), 7.49 (dd, J = 5.0, 1.1 Hz, 1H), 7.19 (dd, J = 5.0, 3.7 Hz, 1H), 7.09 - 7.03 (m, 2H), 3.90 (s, 3H).

TGA analysis: T-Tetr 180 °C. Decomposition occurred before fusion.

### Synthesis of 4-(5-(thiophene-2-yl)-2H-tetrazole-2-yl)phenol (1.25)

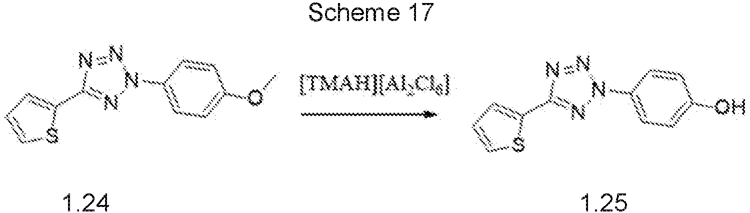

Aluminium chloride (5.0 g, 37.2 mmol) was suspended in dichloromethane and cooled with an ice bath in nitrogen atmosphere. Then trimethylammonium chloride (1.8 g, 18.6 mmol) was added under stirring. After addition, the suspension was heated to room temperature and stirred for 2 hours. 2-(4-methoxyphenyl)-5-(thiophen-2-yl)-2H-tetrazole (1.24) (1.2 g, 4.6 mmol) was then added to the solution and the mixture was heated to reflux. The reaction was monitored with TLC. When the reaction was completed, the mixture was poured into a 1M HCl solution. The aqueous layer was extracted three times with AcOEt. The organic phase was washed with saturated NaHCO₃ solution and salt solution, then the ethyl acetate was dried with Na₂SO₄ and the solvent was evaporated. The crude product was purified by chromatography on silica gel by eluting with dichloromethane to collect the pure product as a green solid (1.0 g yield: 89%).

¹H NMR (400 MHz, CDCl₃) δ 8.07 - 8.03 (m, 2H), 7.89 (dd, J = 3.7, 1.2 Hz, 1H), 7.49 (dd, J = 5.0, 1.2 Hz, 1H), 7.19 (dd, J = 5.0, 3.7 Hz, 1H), 7.02 - 6.97 (m, 2H).

TGA analysis: T-Tetr 190 °C. Decomposition occurred before fusion.

### Synthesis of [5-(2-phenyl-2H-tetrazole-5-yl)-2-thienyl]boronic acid (1.27)

Tetrazole 1.27 was prepared according to scheme 18 below: 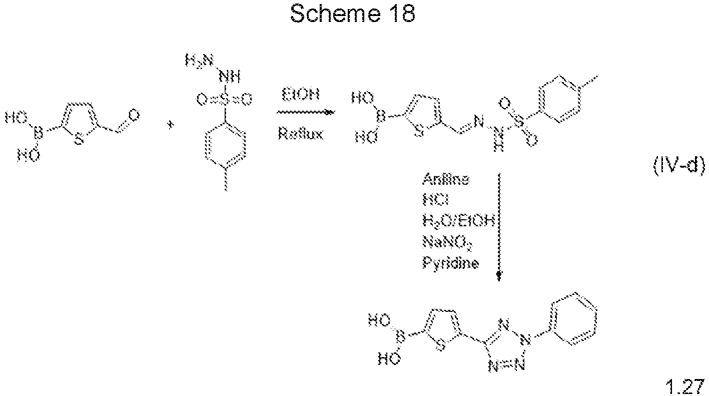
i) Preparing hydrazone [5-(2-phenyl-2H-tetrazole-5-yl)-2-thienyl]boronic acid (IV-d) 5-formyl-2-thienylboronic acid (V-d) (1 eq.) was dissolved in ethanol. Tosylhydrazide (1 eq.) was added and it was stirred for 4 hours to reflux. Water was then added, and the precipitate formed by filtration was recovered. The product (IV-d) thus obtained was used for the second step without further purification.
ii) Conversion of hydrazone [5-((E)-{[(4-methylphenyl)sulfonyl]hydrazone}methyl)-2-thienyl]boronicacid (IV-d) into [5-(2-phenyl-2H-tetrazole-5-yl)-2-thienyl]boronic acid (**1.27**)
   - The solid obtained in step 1 (1 eq.) was dissolved in pyridine to obtain solution A. At the same time, solution B was prepared by adding a NaNO₂ solution (1 eq.) in water to a cooled solution of aniline (VIII-a) (1 eq.), HCl conc. and water / ethanol (1:1).

Solution B was slowly added drop by drop to the ice-bath cooled solution A and, at the end of the addition, it was stirred overnight at room temperature. The reaction mixture with diluted HCl was then neutralised, recovering the precipitate formed by filtration. The reaction crude product was washed with dichloromethane to obtain a light orange solid.

¹H NMR (400 MHz, DMSO) δ 8.50 (s, 1H), 8.14 (dd, *J* = 8.3, 1.0 Hz, 1H), 7.93 (d, *J* = 3.6 Hz, 1H), 7.78 (d, *J =* 3.6 Hz, 1H), 7.74 - 7.67 (m, 1H), 7.67 - 7.61 (m, 1H). TGA analysis: The thermogravimetric analysis showed that the weight loss due to the release of nitrogen started at a temperature around 140 °C.

### Synthesis of 2-(5-(thiophen-2-yl)-2H-tetrazole-2-yl)-9H-fluoren-9-one (1.29)

### i) Synthesis of 2-nitro-9H-fluoren-9-one

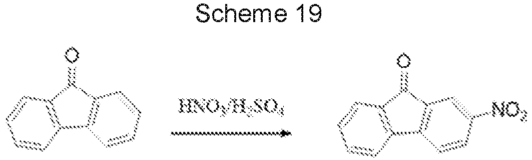

A mixture of 9H-fluoren-9-one (4.050 g, 22.5 mmol) and H₂O (4 ml) was brought to 80 °C. A mixture of HNO₃ (65%, 4.0 ml, 68.55 mmol) and H₂SO₄ (98%, 4.7 ml, 88.8 mmol) was then added drop by drop. After stirring at 90°C for 2.5 hours, the reaction mixture was quenched in water (80 ml). The solid was filtered, washed with water and dried. TLC indicated an incomplete reaction. For further purification, the solid was flushed back with EtOH (90 ml) for 1 hour. After cooling, the solid was filtered and re-crystallised by AcCN (175 ml) to collect the pure product as a yellow solid (3.474 g, yield: 69%).

¹H NMR (400 MHz, CDCl₃) δ 8.49 (dd, *J* = 2.2, 0.5 Hz, 1H), 8.42 (dd, *J* = 8.2, 2.2 Hz, 1H), 7.80 - 7.76 (m, 1H), 7.71 (dd, J = 8.2, 2.2 Hz, 1H).71 (dd, *J* = 8.2, 0,5 Hz, 1H), 7.69 - 7.66 (m, 1H), 7.61 (td, *J* = 7.5, 1.2 Hz, 1H), 7.48 - 7.44 (m, 1H).

### ii) Synthesis of 2-amino-9H-fluoren-9-one (VIII-b)

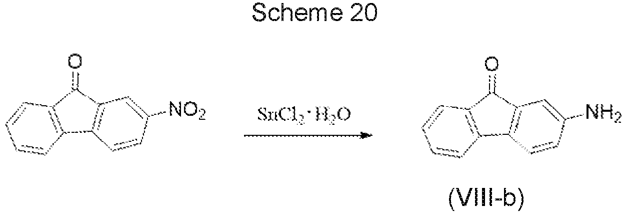

SnCl₂ -2H₂ O (12.0 g, 53.29 mmol) was added to a solution of 2-nitro-9H-fluoren-9-one (4.0 g, 17.76 mmol) in AcOEt (44 ml), under nitrogen atmosphere. The mixture was stirred for 24 hours at reflux temperature and then poured on ice (100 g). The pH of the mixture was made basic (pH 9-10) by adding aqueous NaOH and finally extracted with AcOEt. The organic layer was dried on anhydrous sodium sulphate and, after filtration, the solvent was removed. The crude product was purified by chromatography on silica gel by eluting with a dichloromethane:AcOEt mixture (8:2) to collect the pure product as a dark purple solid (3.0 g, yield: 87%).

¹H NMR (400 MHz, CDCl₃) δ 7.58 - 7.55 (m, 1H), 7.40 (td, *J* = 7.4, 1.2 Hz, 1H), 7.36 - 7.32 (m, 1H), 7.28 (dd, *J* = 7.9, 0.5 Hz, 1H).9, 0.5 Hz, 1H), 7.15 (td, *J* = 7.4, 1.1 Hz, 1H), 6.97 (dd, *J* = 2.3, 0.5 Hz, 1H), 6.73 (dd, *J* = 7.9, 2.3 Hz, 1H).

### iii) Synthesis of 2-(5-(thiophen-2-yl)-2H-tetrazole-2-yl)-9H-fluoren-9-one (1.29)

Tetrazole **1.29** was prepared from the tosylhydrazone intermediate (IV-c) by reacting with 2-amino-9H-fluoren-9-one (VIII-b) as shown in Scheme 21 below: 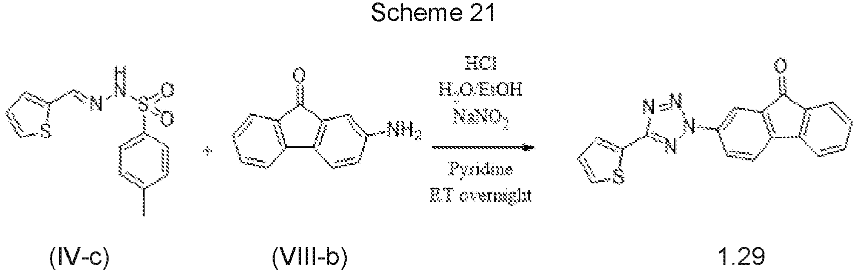 according to the following procedure: 0.804 g (2.9 mmol) of (E)-4-methyl-N'-(thiophene-2-ylmethylene)benzenesulfonohydrazide (IV-c) were dissolved in pyridine (70 ml) in a round-bottom flask to obtain solution A. At the same time, a NaNO₂ solution (0.200 g, 2.9 mmol) in water was added drop by drop to a cooled mixture (0°C) of 2-amino-9H-fluoren-9-one (VIII-b) (0.559 g, 2.9 mmol) and concentrated HCl (0.317 g, 8.7 mmol) dissolved in 20 ml of H₂O / EtOH (1:1) to obtain solution B. Solution A was cooled with an ice bath and Solution B was then added slowly. The reaction was carried out overnight. The mixture was poured into an acid solution (5% HCl, 300 ml) and the precipitate formed was collected with a filtering funnel. The crude product was purified by chromatography on silica gel by eluting with dichloromethane to collect the pure product as a red solid (0.090 g, yield: 9%).

¹H NMR (400 MHz, CDCl₃) δ 8.48 (d, *J* = 2.0 Hz, 1H), 8.36 (dd, *J* = 8.1, 2.0 Hz, 1H), 7.94 (dd, *J* = 3.6, 1.0 Hz, 1H), 7.74 (t, J = 8.0 Hz, 1H).74 (t, *J* = 8.2 Hz, 2H), 7.65 - 7.51 (m, 3H), 7.39 (dd, *J* = 7.4, 6.6 Hz, 1H), 7.21 (dd, *J* = 5.0, 3.7 Hz, 1H).

TGA analysis: T-Tetr 185 °C. Decomposition occurred before fusion.

### Synthesis of tetrazoles 1.1, 1.2, 1.6, 1.30, 1.31 and 1.32 (substituted phenyl or other aromatic optionally substituted at position 5 of tetrazole)

Tetrazoles 1.1, 1.2, 1.6, 1.30, 1.31 and 1.32 were prepared starting from the corresponding carboxaldehyde (V), optionally substituted, and p-toluenesulfonyl hydrazide by forming the tosylhydrazide intermediate (IV) and the conversion thereof into the desired tetrazole by reacting with the appropriate amine (VIII) according to the procedure described above.

### Synthesis of 4-(2-phenyl-2H-tetrazol-5-yl) 1-benzoic acid (1.1)

### i) synthesis of (E)-methyl 4-((2-tosylhydrazone)methyl)-benzoate (IV-I)

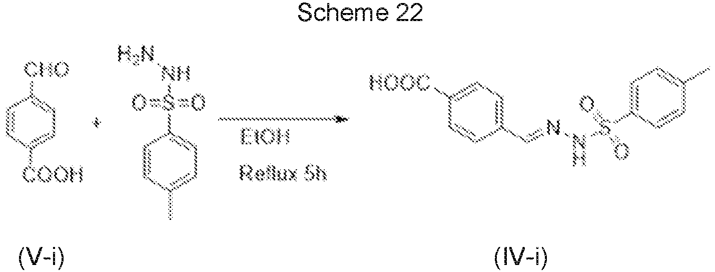

1.50g (9.99 mmol) of 4-formylbenzoic acid (V-i), 1.85 g (9.99 mmol) p-toluenesulfonyl hydrazide and 30ml of EtOH were added to a round-bottom flask provided with a water condenser. The reaction mixture was heated to reflux under magnetic stirring for 5 hours. The reaction mixture was allowed to cool to room temperature and then poured into cold water. The precipitate formed was collected by filtration to obtain the desired compound as a white solid (3.12 g, yield: 98%). The product was used for the next step without further purification.

### ii) synthesis of 4-(2-phenyl-2H-tetrazol-5-yl)]-benzoic acid (1.1)

Tetrazole **1.1** was prepared from the tosylhydrazone intermediate (IV-i) by reacting with aniline (VIII-a) and subsequent hydrolysis as shown in Scheme 23 below: 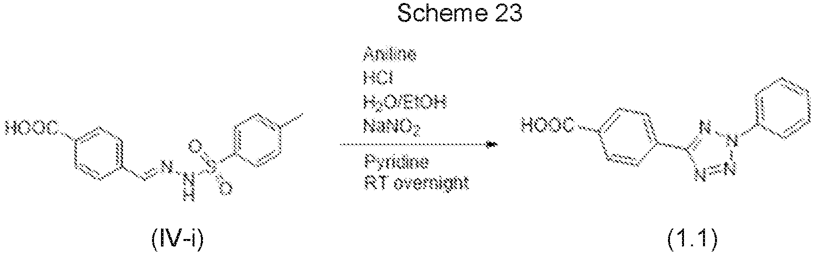 according to the following procedure: 3.01g (9.45 mmol) of (E)-methyl 4-((2-tosylhydrazone)methyl)-benzoic acid (IV-i) were dissolved in pyridine (70 ml) in a round-bottom flask to obtain solution A. At the same time, a NaNO₂ solution (0.65 g, 9.45 mmol) in water was added drop by drop to a cooled mixture (0 °C) of aniline (VIII-a) (0.68 g, 9.45 mmol) and concentrated HCl (1.03 g, 28.35 mmol) dissolved in 10 ml H₂O / EtOH (1:1) to obtain solution B. Solution A was cooled with an ice bath and Solution B was then added slowly. The resulting mixture was allowed to react overnight. The mixture was poured into an acid solution (5% HCl, 300 ml) and the precipitate formed was collected with a filtering funnel. The crude product was purified by washing with methanol to collect the pure product as a white solid (1.76 g, yield: 70%).

¹ H NMR (400 MHz, DMSO-d6) δ 13.35 (s, 1H), 8.34 - 8.27 (m, 2H), 8.23 - 8.13 (m, 4H), 7.73 (tt, J = 8.8, 1.8 Hz, 2H), 7.70 - 7.62 (m, 1H).

TGA analysis: T-Tetr 210 °C. Decomposition occurred before fusion.

### Synthesis of 4-[4-(2-phenyl-2H-tetrazol-5-yl)phenyl]-1,2,4-triazolidine-3,5-dione (1.2)

### i) synthesis 2-((4-(2-phenyl-2H-tetrazol-5-yl)phenyl)carbamoyl)ethyl hydrazincarboxylate (IV-j)

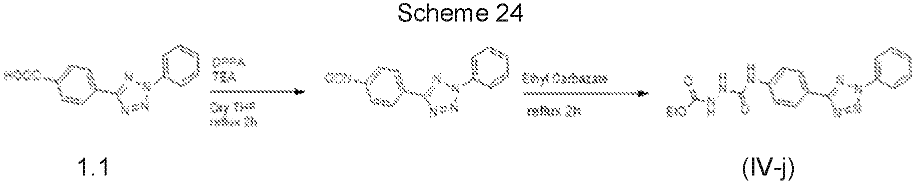

200 mg (0.75 mmol) of tetrazole 1.1 and 25 ml of anhydrous THF were added to a round-bottom flask equipped with a bubble dropper under nitrogen atmosphere. The reaction was cooled to 0°C, then 230 mg (0.83 mmol) diphenyl phosphoryl azide (DPPA) was added and after 10 min., 80 mg (0.83 mmol) triethylamine (tea) were added. The reaction was heated to reflux under magnetic stirring for 2 hours. Subsequently, 70 mg (0.75 mmol) of ethyl carbazate were added and heated to reflux for another 2 hours. The low pressure solvent was removed, the crude product was extracted 3 times with AcOEt, and washed with NaHCO₃ (aq.), H₂O and HCl (1M). The organic phase was anhydrified, filtered and evaporated at low pressure, to obtain the intermediate product (209 mg, yield: 76%). The product was used for the next step without further purification.

### ii) synthesis of 4-[4-(2-phenyl-2H-tetrazol-5-yl)phenyl]-1,2,4-triazolidine-3,5-dione (1.2)

Tetrazole **1.2** was prepared from the intermediate (IV-j) as shown in scheme 25 below: 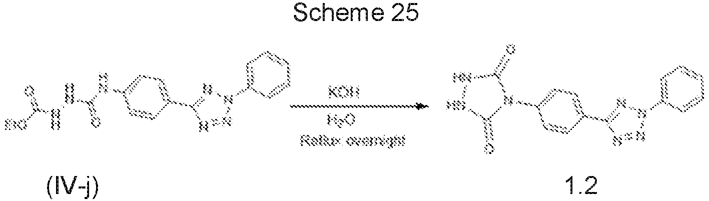 according to the following procedure: 100 mg (0.27 mmol) of 2-((4-(2-phenyl-2H-tetrazol-5-yl)phenyl)carbamoyl)ethyl hydrazincarboxylate and 10 ml of a KOH solution (5M) were added to a round-bottom flask equipped with a bubble dropper. The reaction was heated to reflux for 12 hours, under magnetic stirring. After cooling, HCl was added to reach pH 2. The precipitate formed was filtered to obtain the product as a white solid (86 mg, 99% yield).

¹ H NMR (400 MHz, D₂O) δ 8.32 - 8.29 (m, 2H), 8.17 - 8.13 (m, 1H), 7.70 - 7.63 (m, 4H), 7.59 - 7.56 (m, 2H).

TGA analysis: T-Tetr 200 °C. Decomposition occurred before fusion.

### Synthesis of 2-(naphthalene-1-yl)-5-(naphthalene-2-yl)-2H-tetrazole (1.6)

Tetrazole **1.6** was prepared from the tosylhydrazone intermediate (IV-h) by reacting with Naphthalene-1-amine (VIII-e) as shown in Scheme 26 below: 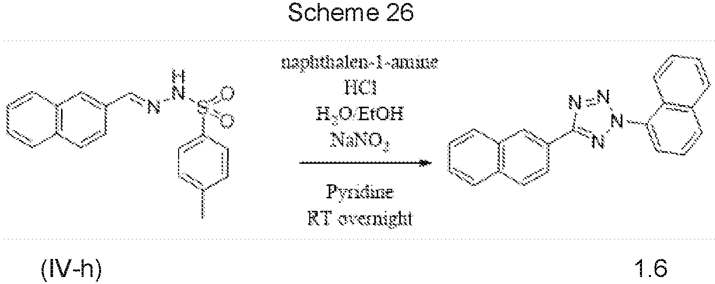 according to the following procedure: 1.034 g (3.2 mmol) of (E)-4-methyl-N'-(naphthalen-2-ylmethylene)benzenesulfonohydrazide (IV-h) were dissolved in pyridine (70 ml) in a round-bottom flask to obtain solution A. At the same time, a NaNO₂ solution (0.220 g, 3.2 mmol) in water was added drop by drop to a cooled mixture (0°C) of naphthalene-1-amine (VIII-e) (0.458 g, 3.2 mmol) and concentrated HCl (0.350 g, 9.6 mmol) dissolved in 20 ml of H₂O / EtOH (1:1) to obtain solution B. Solution A was cooled with an ice bath and Solution B was then added slowly. The resulting mixture was allowed to react overnight. The mixture was poured into an acid solution (5% HCl, 300 ml) and the precipitate formed was collected with a filtering funnel. The crude product was purified by chromatography on silica gel by eluting with a dichloromethane:hexane mixture (7:3) to collect the pure product as a light purple solid (0.696 g, yield: 67%).

¹H NMR (400 MHz, CDCl₃) δ 8.86 (s, 1H), 8.38 (dd, *J* = 8.5, 1.7 Hz, 1H), 8.17 - 8.08 (m, 2H), 8.05 - 7.99 (m, 3H), 7.99 - 7.90 (m, 2H), 7.65 (ddd, *J* = 8.5, 5.9, 5.5 Hz, 3H), 7.60 - 7.55 (m, 2H).

TGA analysis: T-Tetr 100 °C. Decomposition occurred before fusion.

### Synthesis of 2.5-di(naphthalen-1-yl)-2H-tetrazole (1.30)

Tetrazole **1.30** was prepared from the tosylhydrazone intermediate (IV-f) by reacting with Naphthalene-1-amine (VIII-e) as shown in Scheme 27 below: 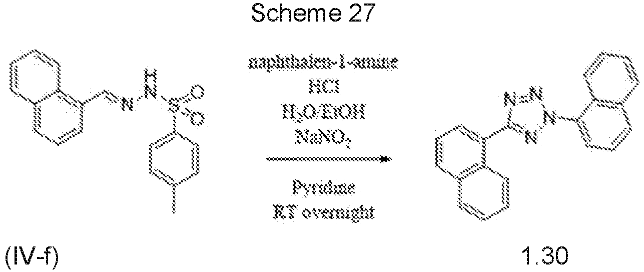 according to the following procedure: 1.775 g (5.46 mmol) of (E)-4-methyl-N'-(naphthalen-1-ylmethylene)benzenesulfonohydrazide (IV-f), prepared from 1-formyl-naphthalene (V-f) according to a procedure similar to that of Scheme 18, were dissolved in pyridine (70 ml) in a round-bottom flask to obtain solution A. At the same time, a NaNO₂ solution (0.377 g, 5.46 mmol) in water was added drop by drop to a cooled mixture (0 °C) of naphthalene-1-amine (VIII-e) (0.782 g, 5.46 mmol) and concentrated HCl (0.597 g, 16.38 mmol) dissolved in 20 ml of H₂O / EtOH (1:1) to obtain solution B. Solution A was cooled with an ice bath and solution B was then added slowly. The resulting mixture was allowed to react overnight. The mixture was poured into an acid solution (5% HCl, 300 ml) and the precipitate formed was collected with a filtering funnel. The crude product was purified by chromatography on silica gel by eluting with a dichloromethane:hexane mixture (9:1) to collect the pure product as a light yellow solid (1.32 g, yield: 75%).

¹H NMR (400 MHz, CDCl₃) δ 9.11 (d, *J* = 8.6 Hz, 1H), 8.48 (dd, *J* = 7.2, 1.1 Hz, 1H), 8.19 (dd, *J* = 6.3, 3.5 Hz, 1H), 8.12 (d, *J* = 8.3 Hz, 1H), 8.07 - 7.96 (m, 4H), 7.71 - 7.56 (m, 6H).

TGA analysis: T-Tetr 145 °C. Decomposition occurred before fusion.

### Synthesis of 2-phenyl-5-(2,4,5-trifluorophenyl)-2H-tetrazole (1.31)

### i) synthesis of (E)-4-methyl-N'-(2,4,5-trifluorobenzylidene) benzene-sulfonyl hydrazide (IV-e)

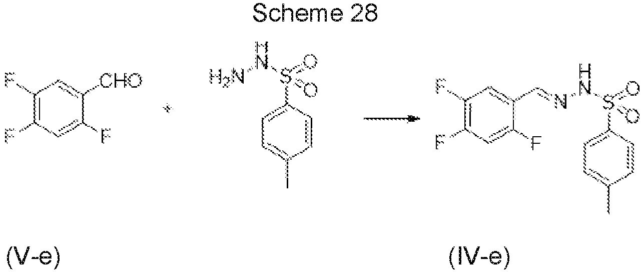

2.816 g (17.6 mmol) of 2,4,5-trifluoro benzaldehyde (V-e), 3.28 g (17.6 mmol) of p-toluenesulfonyl hydrazide and 60 ml of EtOH were added to a round-bottom flask provided with a water condenser. The reaction mixture was heated to reflux under magnetic stirring for 5 hours. The reaction mixture was allowed to cool to room temperature and then poured into cold water. The precipitate formed was collected by filtration to obtain the desired compound (IV-e) as an orange solid (5.604 g, yield: 97%). The product was used for the next step without further purification.

¹H NMR (400 MHz, CDCl₃) δ 7.86 (dd, J = 6.6, 1.7 Hz, 3H), 7.66 (ddd, J = 10.5, 8.9, 6.6 Hz, 1H), 7.34 (d, J = 8.2 Hz, 2H), 6.91 (td, J = 9.7, 6.3 Hz, 1H), 2.43 (s, 3H).

¹⁹F NMR (376 MHz, CDCl₃) δ -122.48 (dd, J = 15.3, 4.1 Hz), -128.60 - -128.90 (m), -140.93 (dd, J = 20.8, 15.2 Hz).

### ii) synthesis of 2-phenyl 5-(2,4,5-trifluorophenyl)-2H-tetrazole (1.31)

Tetrazole **1.31** was prepared from the tosylhydrazone intermediate (IV-e) by reacting with aniline (VIII-a) as shown in Scheme 29 below: 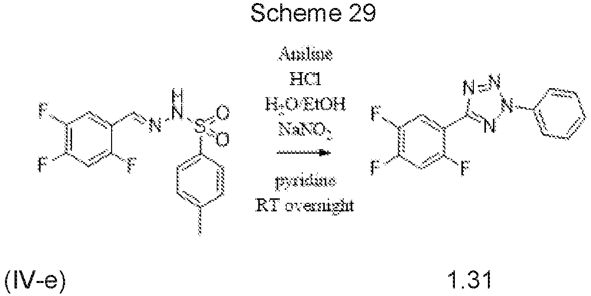 according to the following procedure: 5.60 g (20.29 mmol) of (E)-4-methyl-N'-(2,4,5-trifluorobenzylidene) benzenesulfonohydrazide (IV-e) were dissolved in pyridine (70 ml) in a round-bottom flask to obtain solution A. At the same time, a NaNO₂ solution (1.40 g, 20.29 mmol) in water was added drop by drop to a cooled mixture (0 °C) of aniline (VIII-a) (1.89 g, 20.29 mmol) and concentrated HCl (2.22 g, 60.86 mmol) dissolved in 20 ml di H₂O / EtOH (1:1) to obtain solution B. Solution A was cooled with an ice bath and Solution B was then added slowly. The resulting mixture was allowed to react overnight. The mixture was poured into an acid solution (5% HCl, 300 ml) and the precipitate formed was collected with a filtering funnel. The crude product was purified by chromatography on silica gel by eluting with a dichloromethane:hexane mixture (8:2) to collect the pure product as a red solid (0.430 g, yield: 8%).

¹ H NMR (400 MHz, CDCl₃) δ 8.23 - 8.18 (m, 2H), 8.12 - 8.04 (m, 1H), 7.60 (tt, *J* = 8.8, 2.0 Hz, 2H), 7.57 - 7.51 (m, 1H), 7.1 (td, *J* = 9.8, 6.4 Hz, 1H).

¹⁹F NMR (376 MHz, CDCl₃) δ -111.75 (dd, J = 15.3, 5.5 Hz), -129.02 (dd, J = 21.6, 6.2 Hz), -141.24 (dd, J = 21.6, 15.6 Hz).

TGA analysis: T-Tetr 165 °C. Decomposition occurred before fusion.

### Synthesis of 5-(anthracene-9-yl)-2-phenyl-2H-tetrazole (1.32)

### i) synthesis of (E)-N'-(anthracene-9-ylmethylene)-4-methylbenzenesulfonhydrazide (IV-g)

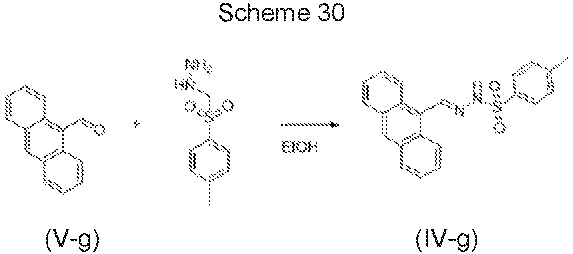

0.70 g (3.4 mmol) of anthracene-9-carboxaldehyde (V-g), 0.632 g (3.4 mmol) of p-toluenesulfonyl hydrazide and 60 ml of EtOH were added to a round-bottom flask provided with a water condenser. The reaction mixture was heated to reflux under magnetic stirring for 5 hours. The reaction mixture was allowed to cool to room temperature and then poured into cold water. The precipitate formed was collected by filtration to obtain the desired compound as a yellow solid (0.805 g, yield: 63%). The product was used for the next step without further purification.

¹H NMR (400 MHz, CDCl₃) δ 8.57 (s, 1H), 8.28 (s, 1H), 8.07 (d, J = 8.5 Hz, 2H), 7.80 - 7.76 (m, 2H), 7.58 (dd, J = 6.9, 1.7 Hz, 3H), 7.55 - 7.49 (m, 1H), 7.46 - 7.41 (m, 2H), 7.39 (dd, J = 8.8, 4.6 Hz, 2H), 2.52 (s, 3H).

### ii) synthesis of 5-(anthracene-9-yl)-2-phenyl-2H-tetrazole (1.32)

Tetrazole **1.32** was prepared from the tosylhydrazone intermediate (IV-g) by reacting with aniline (VIII-a) as shown in Scheme 31 below: 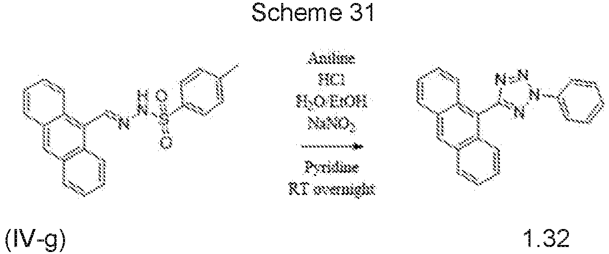 according to the following procedure: 0.303 g (0.8 mmol) of (E)-4-methyl-N'-(2,4,5-trifluorobenzylidene) benzenesulfonohydrazide (IV-g) were dissolved in pyridine (70 ml) in a round-bottom flask to obtain solution A. At the same time, a NaNO₂ solution (0.056 g, 0.8 mmol) in water was added drop by drop to a cooled mixture (0 °C) of aniline (VIII-a) (0.075 g, 0.8 mmol) and concentrated HCl (0.088 g, 2.4 mmol) dissolved in 20 ml of H₂O / EtOH (1:1) to obtain solution B. Solution A was cooled with an ice bath and Solution B was then added slowly. The resulting mixture was allowed to react overnight. The mixture was poured into an acid solution (5% HCl, 300 ml) and the precipitate formed was collected with a filtering funnel. The crude product was purified by chromatography on silica gel by eluting with dichloromethane to collect the pure product as a brown solid (0.027 g, yield: 11%).

¹ H NMR (400 MHz, CDCl₃) δ 8.66 (s, 1H), 8.35 (dd, J = 7.8, 1.7 Hz, 2H), 8.09 (dd, J = 7.2, 2.2 Hz, 2H), 7.93 - 7.88 (m, 2H), 7.63 (dd, J = 8.4, 7.1 Hz, 2H), 7.58 - 7.45 (m, 5H).

TGA analysis: T-Tetr 170 °C. Decomposition occurred before fusion.

### 1.2 Synthesis of tetrazole (VI) from nitrile (VII) and alkylation

An alternative route of synthesis of the 2,5-disubstituted tetrazoles included the preparation of monosubstituted tetrazole in 5 (VI) starting from the appropriate nitrile R-CN (VII) and its subsequent alkylation in 2 in line with the syntheses (b1) and (b2) shown above.

By way of example, the syntheses and analyses of some of the tetrazoles in Table 1 and the relative intermediates are detailed below. Where not specifically described, final tetrazoles and the respective intermediates may be prepared in a similar manner.

### Synthesis of tetrazoles 1.6, 1.14, 1.15, 1.16, 1.22, 1.23 and 1.26

Tetrazoles 1.6, 1.14, 1.15, 1.16, 1.22, 1.23 and 1.26 were prepared through nitrogen alkylation in 2 of the 2H-tetrazole intermediate according to general Schemes 5 and 6 (synthesis b1 and b2), more particularly according to schemes 32 - 38 below.

### Synthesis of 2-(naphthalen-1-yl)-5-(naphthalen-2-yl)-2H-tetrazole (1.6)

Tetrazole **1.6** was prepared by reacting 5-(naphthalen-2-yl)-2H-tetrazole (VI-d) with naphthalen-1-ylboronic acid as shown in Scheme 32 below: 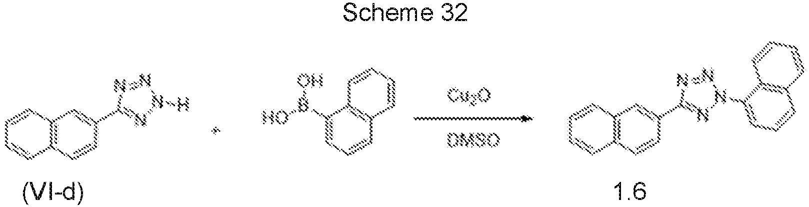 according to the following procedure: 5-(naphthalen-2-yl)-2H-tetrazole (VI-d) (0.3 mmol, 0.059 g), naphthalen-1-ylboronic acid (0.6 mmol, 0.103 g), Cu₂O (0.3 mmol, 0.043 g) and DMSO (4 ml) were added to a 50 ml round-bottom flask. The reaction mixture was stirred at 100°C until the tetrazole disappeared, monitored by TLC. The reaction mixture was then cooled to room temperature and diluted with 40 ml AcOEt, washed consecutively with 5 ml 12 M HCl and 5 ml salt solution (four times). The organic layer was separated and dried on MgSO₄, then concentrated at low pressure. The crude product was purified by chromatography on silica gel by eluting with a hexane:dichloromethane mixture (1:1) to collect the pure product as a white solid 1.6 (0.015 g, yield: 16%).

¹H NMR (400 MHz, CDCl₃) δ 8,86 (d, *J* = 0.7 Hz, 1H), 8,38 (dd, *J* = 8.5, 1.7 Hz, 1H), 8.16 - 8.13 (m, 1H), 8.11 (dd, *J* = 8.3, 0.8 Hz, 1H), 8.04 - 7.99 (m, 3H), 7.96 (dd, *J* = 7.4, 1.2 Hz, 1H), 7.94 - 7.90 (m, 1H), 7.65 (ddd, *J* = 5.8, 4.6, 1.8 Hz, 3H), 7.59 - 7.55 (m, 2H).

TGA analysis: T-Tetr 100 °C. Decomposition occurred before fusion.

### Synthesis of 2,5-diphenyl-2H-tetrazole (1.7)

Tetrazole **1.7** was prepared by reacting 5-phenyl-2H-tetrazole (VI-a) with 2-phenylboronic acid as shown in Scheme 33 below: 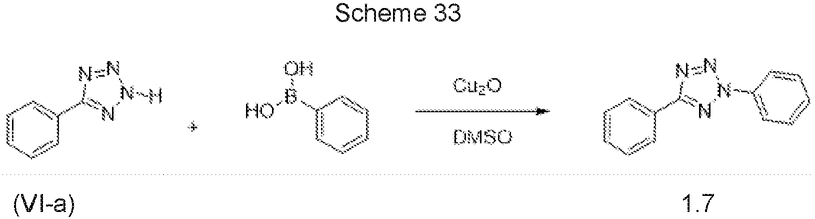 according to the following procedure.

5-phenyl tetrazole (VI-a) (0.51 mmol, 0.074 g), phenylboronic acid (1.12 mmol, 0.137 g), Cu₂O (5 mol%, 0.03 mmol, 0.004 g) and DMSO (4 ml) were added to a 50 ml round-bottom flask. The reaction mixture was stirred at 100 °C until the tetrazole (VI-a) disappeared, monitored by TLC. The reaction mixture was then cooled to room temperature and diluted with 40 ml AcOEt, washed consecutively with 5 ml 12 M HCl and 5 ml salt solution (four times). The organic layer was separated and dried on MgSO₄, then concentrated at low pressure. The crude product was purified by chromatography on silica gel by eluting with dichloromethane to collect the pure product as a white solid 1.7 (0.016 g, yield: 14%).

¹H NMR (400 MHz, CDCl₃) δ 8.26 (m, 2H), 8.23 - 8.18 (m, 2H), 7.62 - 7.49 (m, 6H). TGA analysis: T-Tetr 170 °C. Decomposition occurred before fusion.

### Synthesis of 2-benzyl-5-phenyl-2H-tetrazole (1.14)

Tetrazole 1.14 was prepared according to scheme 34 below:

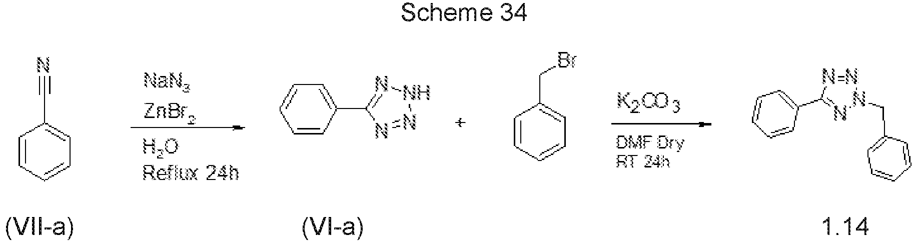

### (I) synthesis 5-phenyl-2H-tetrazole (VI-a)

Benzonitrile (1 eq.) (VII-a) was suspended in H₂O, ZnBr₂ (1 eq.) and sodium azide (1.1 eq.) was added. The reflux mixture was heated for 48 hours under stirring. The reaction was quenched with HCl (37%) and extracted with ethyl acetate. The organic phase was anhydrified and the solvent evaporated at low pressure. The resulting solid was treated with a 0.25 M NaOH solution stirring for 30 minutes. The zinc oxide thus formed was filtered by washing with NaOH 1 N. The resulting aqueous solution was treated with concentrated HCl up to acidic pH. The precipitated tetrazole was recovered, filtering and washing with 3 M HCl and finally drying the product in the stove. Tetrazole (VI-a) was recovered as white powder (yield 76%).

### ii) synthesis 2-benzyl-5-phenyl-2H-tetrazole (1.14)

The glassware was flushed under the flow of N₂. 5-phenyl-tetrazole (VI-a) (1 eq.) was dissolved in anhydrous dimethylformamide, K₂CO₃ (1.2 eq.) was added and after 15 minutes, benzyl bromide (1 eq.) was added, it was stirred magnetically for 24 hours at room temperature. The reaction mixture with dichloromethane was extracted. The organic phase was anhydrified and evaporated at low pressure. The crude reaction was purified by column chromatography, obtaining 2-benzyl-5-phenyl-2H-tetrazole **1.14** as a white solid (90% yield).

¹H NMR (400 MHz, CDCl₃) δ 8.16 - 8.10 (m, 2H), 7.50 - 7.33 (m, 8H), 5.81 (s, 2H). TGA analysis: T-Tetr 200 °C. Decomposition occurred before fusion.

### Synthesis of 2-benzyl-5-(thiophen-2-yl)-2H-tetrazole (1.15)

Tetrazole 1.15 was prepared according to scheme 35 below:

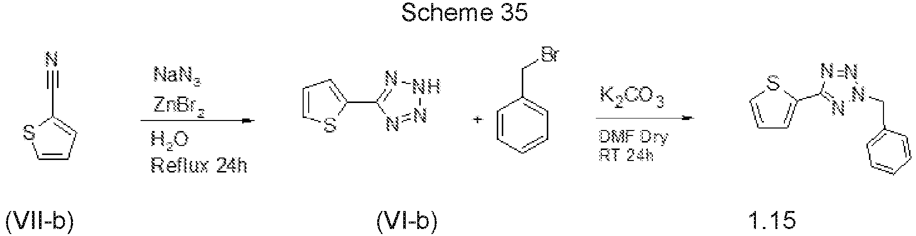

### i) Synthesis of 5-(thiophen-2-yl)-2H-tetrazole (VI-b)

2-thiophenecarbonitrile (VII-b) (1 eq.) was suspended in H₂O and ZnBr₂ (1 eq.) and sodium azide (1.1 eq.) was added.

The reflux mixture was heated for 48 hours under stirring. The reaction was quenched with HCl (37%) and extracted with ethyl acetate. The organic phase was anhydrified and the solvent evaporated at low pressure. The resulting solid was treated with a 0.25 M NaOH solution stirring for 30 minutes. The zinc oxide thus formed was filtered by washing with NaOH 1 N. The resulting aqueous solution was treated with concentrated HCl up to acidic pH. The precipitated tetrazole was recovered, filtering and washing with 3 M HCl and finally drying the product in the stove. Tetrazole (VI-b) was recovered as white powder (yield 74%).

¹H NMR (400 MHz, DMSO) δ 7.93 - 7.78 (m, 2H), 7.30 (dd, *J* = 5.0, 3.7 Hz, 1H).

### ii) synthesis 2-benzyl-5-(thiophen-2-yl)-2H-tetrazole 1.15

The glassware was flushed under the flow of N₂. 5-Thiophenyl-tetrazole (1 eq.) was dissolved in anhydrous dimethylformamide, K₂CO₃ (1.2 eq.) was added and after 15 minutes, benzyl bromide (1 eq.) was added, it was stirred magnetically for 24 hours at room temperature. The reaction mixture with dichloromethane was extracted. The organic phase was anhydrified and evaporated at low pressure. The crude reaction was purified by means of column chromatography of silica gel with dichloromethane as eluent, obtaining 2-benzyl-5-(thiophen-2-yl) -tetrazole as white solid (85% yield).

¹ H NMR (500 MHz, CDCl₃) δ 7.79 (d, *J =* 2.8 Hz, 1H), 7.46 -7.34 (m, 6H), 7.13 (dd, *J = 4.8,* 3.8 Hz, 1H), 5.78 (s, 2H)

TGA analysis: T-Tetr 210 °C. Decomposition occurred before fusion.

### Synthesis of 5-phenyl-2-(thiophen-2-yl)-2H-tetrazole (1.22)

Tetrazole **1.22** was prepared by reacting 5-phenyl-2H-tetrazole (VI-a) with thiophene -2- ylboronic acid as shown in Scheme 36 below:

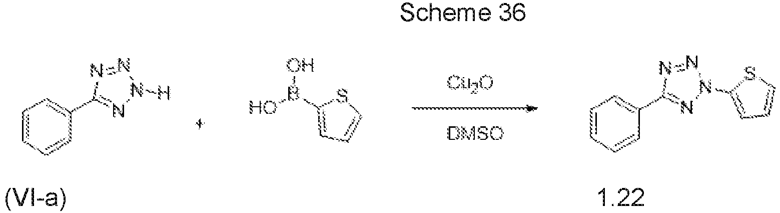

According to the following procedure: 5-phenyl tetrazole (VI-a) (0.83 mmol, 0.121 g), thiophene-2-ylboronicacid (1.66 mmol, 0.212 g), Cu₂O (0.83 mmol, 0.119 g) and DMSO (4 ml) were added to a 50 ml round-bottom flask. The reaction mixture was stirred at 100 °C until the tetrazole (VI-a) disappeared, monitored by TLC. The reaction mixture was then cooled to room temperature and diluted with 40 ml AcOEt, washed consecutively with 5 ml 12 M HCl and 5 ml salt solution (four times). The organic layer was separated and dried on MgSO₄, then concentrated at low pressure. The crude product was purified by chromatography on silica gel by eluting with dichloromethane to collect the pure product as a white solid 1.22 (0.033 g, yield: 17%).

¹H NMR (400 MHz, CDCl₃) δ 8.26 - 8.20 (m, 2H), 7.70 (dd, *J* = 3.8, 1.4 Hz, 1H), 7.52 (dd, *J* = 5.2, 2.0 Hz, 3H), 7.30 (dd, *J* = 5.4, 1.4 Hz, 1H), 7.10 (dd, *J* = 5.4, 3.9 Hz, 1H).

TGA analysis: T-Tetr 150 °C. Decomposition occurred before fusion

### Synthesis of 2,5-diphenyl-2H-tetrazole (1.23)

Tetrazole 1.23 was prepared according to scheme 37 below: 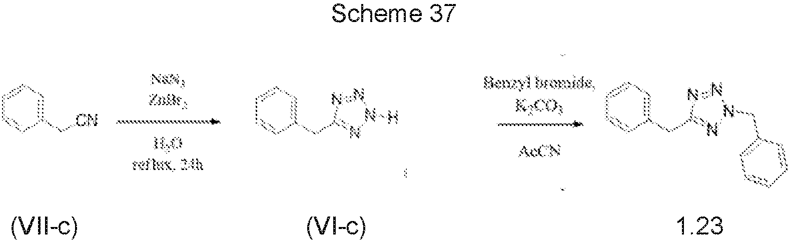 similarly to the one described for the previous tetrazole **1.15.**

The intermediate 5-benzyl-2H-tetrazole (VI-c) appeared as a white solid.

¹H NMR (400 MHz, DMSO) δ 7.32 (ddd, *J* = 23.2, 7.3, 5.3 Hz, 5H), 4.29 (s, 2H). The final 2,5-dibenzyl-2H-tetrazole **1.23** appeared as a white solid.

¹H NMR (400 MHz, CDCl₃) δ 7.31 - 7.15 (m, 6H), 7.04 - 6.91 (m, 4H), 5.24 (s, 2H), 4.08 (s, 2H).

TGA analysis: T-Tetr 220°C. Decomposition occurred before fusion.

### Synthesis of 2- benzyl -5-(naphthalen-2-yl)-2H-tetrazole (1.26)

Tetrazole 1.26 was prepared according to scheme 38 below:

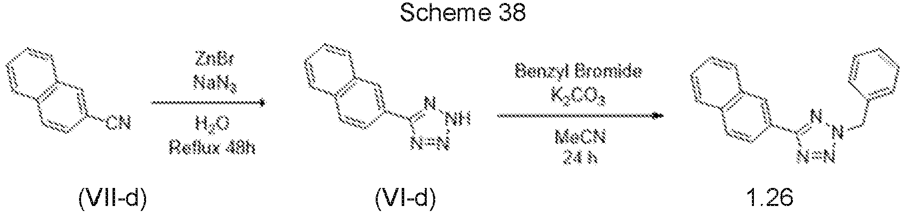

### i) synthesis 5-(naphthalen-2-yl)-2H-tetrazole (VI-d)

Naphthalen-2-carbonitrile (VII-d) (1 eq.) was suspended in H₂O and ZnBr₂ (1 eq.) and sodium azide (1.1 eq.) was added. The reflux mixture was heated for 48 hours under stirring. The reaction was quenched with HCl (37%) and extracted with ethyl acetate. The organic phase was anhydrified and the solvent evaporated at low pressure. The resulting solid was treated with a 0.25 M NaOH solution stirring for 30 minutes. The zinc oxide thus formed was filtered by washing with NaOH 1 N. The resulting aqueous solution was treated with concentrated HCl up to acidic pH. The precipitated tetrazole was recovered, filtering and washing with 3 M HCl and finally drying the product in the stove. 5-naphthalen-2-yl-tetrazole (Vi-d) was obtained as a white powder (yield 41 %).

### ii) synthesis of 2-benzyl-5-(naphthalen-2-yl)-2H-tetrazole (1.26)

The glassware was flushed under the flow of N₂. 5-naphthyl-tetrazole (VI-d) (1 eq.) was dissolved in anhydrous acetonitrile, K₂CO₃ (10 eq.) was added, and benzyl bromide (1 eq.) was added after 15 minutes, it was stirred magnetically for 24 hours at room temperature.

The reaction mixture with dichloromethane was extracted. The organic phase was anhydrified and evaporated at low pressure. The crude reaction was purified by column chromatography obtaining 2-benzyl-5-(naphthalen-2-yl)-2H-tetrazole (1.26) as a white solid (38% yield).

¹H NMR (400 MHz, CDCl₃) δ: 8,68 (s, 1H), 8,21 (d, 1H), 7,94 (d, 2H), 7,53 (m, 2H), 7,46 (d, 2H), 7,42 - 7,37 (dd, 4H), 5,85 (s, 2H).

TGA analysis: T-Tetr 210 °C. Decomposition occurred before fusion.

### Synthesis of tetrazole 1.33 (3-OH-phenyl at position 5 of tetrazole)

Tetrazole 1.33 was prepared starting from 3-hydroxybenzaldehyde (V-k) and p-toluenesulfonyl hydrazide by forming the corresponding tosylhydrazone (IV-k) according to Scheme 39 below: 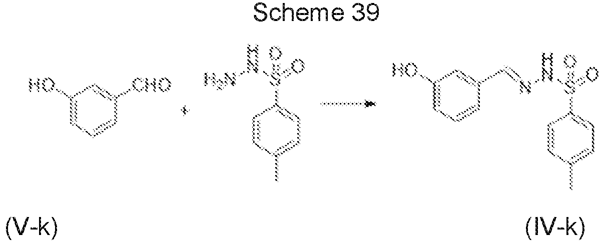 and the conversion thereof into tetrazole by reacting with the appropriate amine R-NH₂ (VIII) according to the procedure described above.

The tosylhydrazone intermediate (E)-N'-(3-hydroxybenzylidene)-4-methylbenzene sulfonyl hydrazide (IV-k) appeared as a light brown solid and it was used for the next step without further purification.

### Synthesis of 3-[2-(3,5-dichlorophenyl)-2H-tetrazol-5-yl]phenol (1.33)

Tetrazole **1.33** was prepared from the tosylhydrazone intermediate (IV-k) by reacting with 3,5-dichloroaniline (VIII-f) as shown in Scheme 40 below: 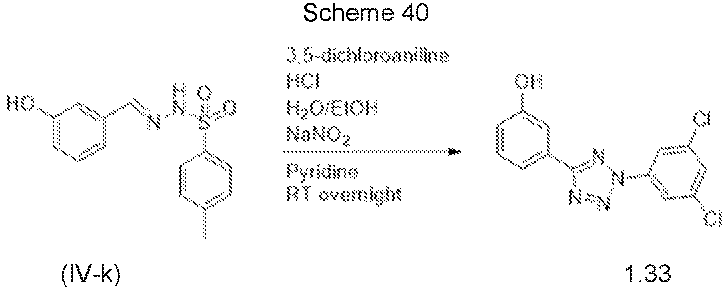 according to the following procedure: 5.00 g (17.22 mmol) di (E)-N'-(3-Hydroxybenzylidene)-4-methylbenzenesulfonhydrazide (IV-k) were dissolved in pyridine (150 ml) in a round-bottom flask to obtain solution A. At the same time, a NaNO₂ solution (1.20 g, 17.22 mmol) in water was added drop by drop to a cooled mixture (0 °C) of 3,5-dichloroaniline (VIII-f) (2.79 g, 17.22 mmol) and concentrated HCl (2.00 g, 51.66 mmol) dissolved in 30 ml of H₂O / EtOH (1:1) to obtain solution B. Solution A was cooled with an ice bath and Solution B was then added slowly. The resulting mixture was allowed to react overnight. The mixture was poured into an acid solution (5% HCl, 500 ml) and the precipitate formed was collected by filtration. The crude product was purified by chromatography on silica gel by eluting with a hexane:AcOEt mixture (3:2) to collect the pure product as a light orange solid (2.17 g, yield: 41%).

¹ H NMR (400 MHz, CDCl₃) δ 8.15 (d, J = 1.8 Hz, 1H), 7.85 - 7.79 (m, 1H), 7.73 (dd, J = 2.5, 1.5 Hz, 1H), 7.50 (t, J = 1.8 Hz, 1H), 7.42 (t, J = 7.9 Hz, 1H), 7.01 (ddd, J = 8.2, 2.6, 1.0 Hz, 1H), 5.07 (s, 1H).

TGA analysis: T-Tetr 170 °C. Decomposition occurred before fusion.

### Thermogravimetric analysis of tetrazoles 1.1-1.33

The 2,5-disubstituted tetrazoles shown in Table 1 were subjected to thermogravimetric analysis according to the method described above.

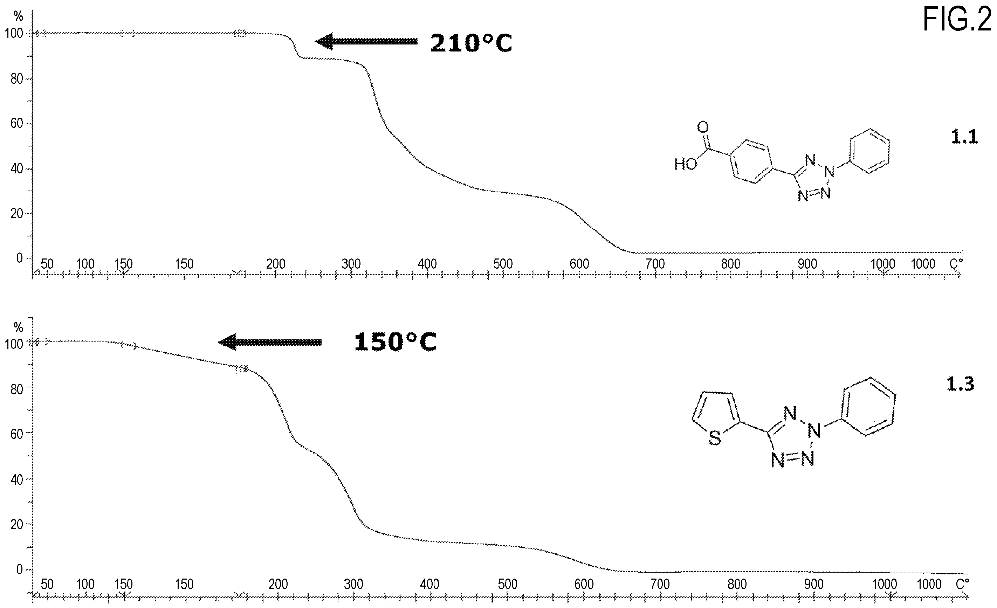

Figure 2 shows the graphs obtained in the TGA of tetrazoles **1.1** and **1.3.** As observable, tetrazole 1.1 showed a marked increase around 210°C at the decomposition of the tetrazole ring with release of nitrogen. Tetrazole 1.3 instead gave rise to a more gradual decomposition starting from about 150°C.

As shown in Table 1, the activation temperature T-Tetr of these derivatives was comprised between 100 and 250°C and was affected by the nature of the substituting groups present at positions 2 and 5.

In particular, it was observed that the electron-withdrawing groups EW, such as for example carboxyl or triazolidindione (tetrazoles 1.1 and 1.2), if present in the para position of a carbon-bound phenyl at 5 of the tetrazole ring, stabilised the tetrazole by increasing the activation temperature T-Tetr, while electron-donating groups ED such as for example thiophene, optionally substituted with amino (tetrazole 1.3 and 1.5) when bound to the carbon of the tetrazole ring, had an opposite effect.

The activation temperature T-Tetr values reported in Table 1 showed that tetrazoles with activation temperatures T-Tetr comprised in a wide range of technologically relevant temperatures could be synthetically obtained. Therefore, combining the substituents on tetrazole appropriately allowed to adapt the activation temperature T-Tetr of the system to the desired application.

### Example 2: reactivity tests of the tetrazole and carbene function

### Example 2A: test for reactivity and stability of 2,5-disubstituted tetrazoles

In order to verify the stability and reactivity of the 2,5-disubstituted tetrazoles against the more reactive double bonds of polymers, represented by the end-vinyls, cycloaddition tests of certain tetrazoles of Table 1 were carried out with an oligomer, as shown in Scheme 41 below: 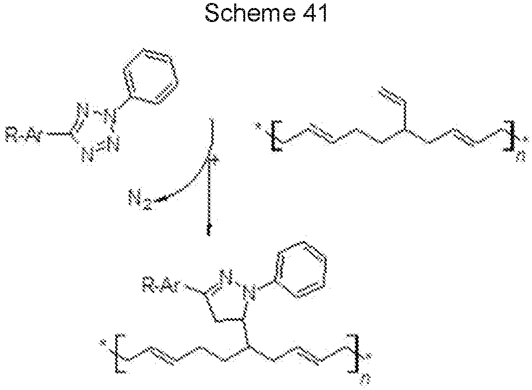 under different heating conditions, as described in examples 2A1-2A3 below.

To test the polymer functionalization reaction, POLYVEST^{®} 130 (purchased from Evonik), a stereospecific oligomer of polybutadiene, schematised below, was used: 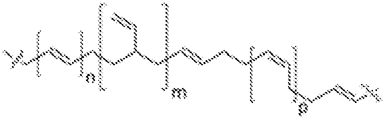 with an average molar mass of 4600 g/mol, comprising:
- 1,4-cis double bonds about 77 % (p)
- 1,4-trans double bonds about 22% (n)
- 1,2-vinyl double bonds around 1% (m)

This polymer has a low vinyl content (about 1%), allowing a qualitative assessment of the selectivity of the chosen reaction. Furthermore, being liquid, it was easy to mix even without using solvent.

Example 2A1: the tetrazole derivative 1.1 and the POLYVEST^{®} 130 oligomer (tetrazole/polymer ratio 1:100 in moles, tetrazole/vinyl polymer groups ratio 1:1) were mixed in a glass tube, in the absence of solvent, and the mixture was heated for 15-30 minutes at the activation temperature of tetrazole T-Tetr.

Formation of pyrazoline by cycloaddition was detected by fluorescence to UV light (365 nm) of the samples and confirmed by IR and NMR spectra measured at the end of the reaction on the modified oligomer by reaction with tetrazole after precipitating it in ethanol. The oligomer was subsequently suspended in ethanol and centrifuged (repeating this process 3 times) to remove unreacted tetrazole and byproducts.

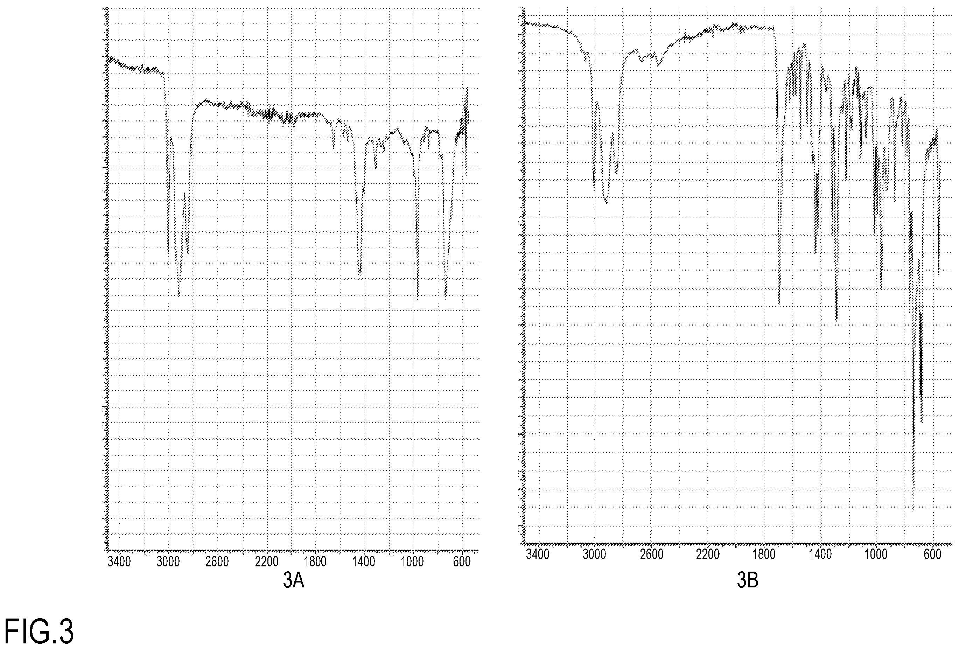

Figure 3 shows the IR spectra of POLYVEST^{®} 130 (Figure 3A) and the reaction product between tetrazole 1.1 and POLYVEST^{®} 130 (Figure 3B) measured with the Perkin-Elmer spectrum 100 apparatus (FT-IR).

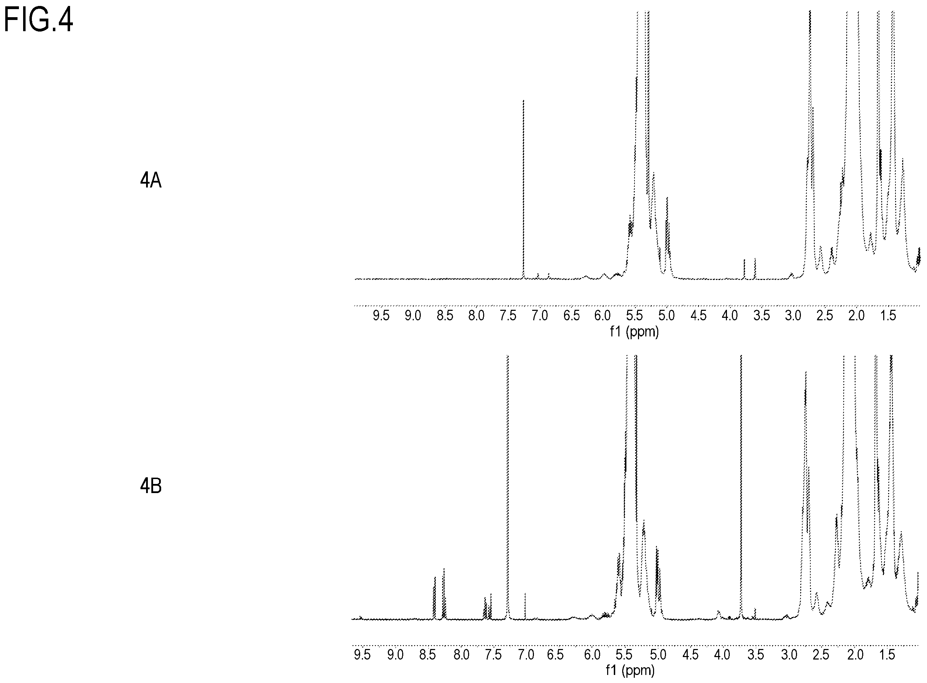

- Figure 4 shows the H-NMR spectrum of POLYVEST^{®} 130 before (figure 4A) and after (Figure 4B) the cycloaddition reaction with tetrazole 1.1.

In the 1H-NMR spectrum after the reaction (Figure 4B), new signals are observed compared to those of POLYVEST^{®} 130, attributable to the formation of pyrazoline, in particular signals around 9.5 ppm (carboxyl proton), those between 8.5 and 8.0 ppm (phenyl protons), and those around 4 ppm (pyrazolin ring protons).

Tests and analyses carried out in this example showed that tetrazole had decomposed and nitrilimine reacted with the double bonds of POLYVEST^{®} 130, providing the corresponding pyrazole, thus functionalising the oligomer.

Example 2A2: the pre-selected tetrazole and the POLYVEST^{®} 130 oligomer were mixed in a vial, heating to 70 °C to make the oligomer more fluid and better disperse the tetrazole. A portion of the mixture was subsequently put in the crucible of the thermogravimeter. The mixture was heated with a heating ramp of 5 °C/min., which went from 30°C to 500°C. It was observed that tetrazole decomposed only when the respective activation temperature T-Tetr was reached and exceeded.

Example 2A3: Another mode of heating of the POLYVEST^{®} 130 - tetrazole 1.3 mixture in TGA was conducted which reproduced the thermal steps to which the elastomeric mixture is typically subjected under normal production conditions, to assess the stability of tetrazole at temperatures below the activation temperature T-Tetr and its activation reached and exceeded that temperature.

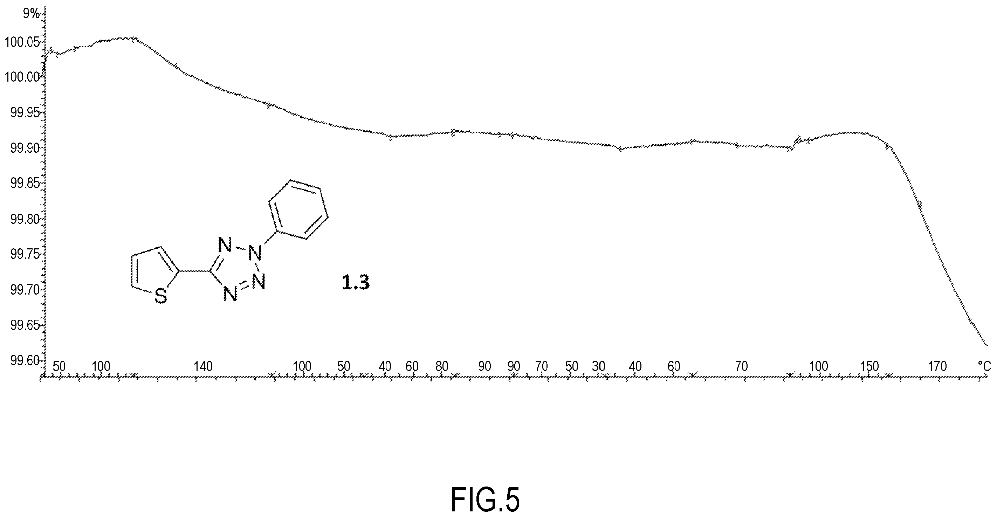

The procedure comprised in succession: a first heating at 140 °C for 30 minutes, corresponding to an initial mixing step in the absence of tetrazole, a cooling to 40 °C, a heating to 90°C for 30 minutes, corresponding to the productive step of mixing with incorporation of tetrazole, a second cooling to 30°C and finally heating to mimic the reaction conditions of tetrazole with temperatures increasing up to at least 20°C above the activation temperature T-Tetr. Figure 5 shows the thermogram with rapidly decreasing sample weight including tetrazole 1.3 at temperatures above its activation temperature T-Tetr of 150°C.

As shown by the only weight loss detectable in TGA, it was observed that tetrazole 1.3 remained unaffected throughout the compound processing heat cycle which is activated only once the activation temperature T-Tetr was reached and exceeded.

Example 2B: reactivity test of the carbene function

A few milligrams of commercial 3-[4-(bromomethyl)phenyl]-3-(trifluoromethyl)-3H-diazirine (III-a) (BPTD) were homogeneously dispersed in POLYVEST^{®} 130 in a molar ratio of 1:1 compared to vinyl. The mixture was then heated to the diazirine activation temperature (T-B about 100°C) for 30 minutes to obtain the carbene. During the reaction, there could be observed the development of nitrogen bubbles, proof of thermal activation. The reaction scheme relating to the polymer functionalization is reported below:

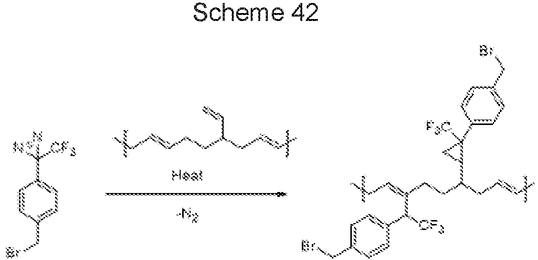

At the end of the reaction, the polymer was purified to remove the unreacted BPTD by dissolving it in a small amount of dichloromethane, precipitating it into methanol and centrifuging it. The purified polymer was characterised using NMR to demonstrate actual functionalisation.

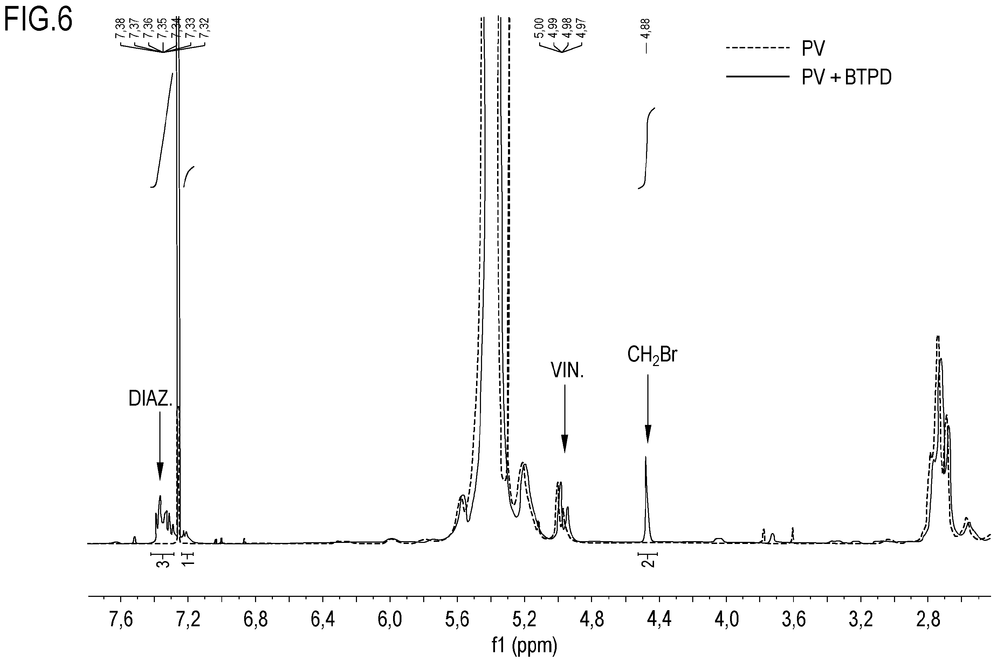

As shown in the NMR spectrum in Figure 6, there was observed the appearance of aromatic peaks in the area comprised between 7.39 and 7.31 ppm, attributable to the aromatic ring of BPTD. The area of the double vinyl bonds of the polymer at 4.99 ppm, on the other hand, was slightly different compared to the uncontaminated polymer, given that these bonds were more likely to react with the functionalising agent. Furthermore, the aliphatic carbon of CH₂ Br appeared at 4.48 ppm indicative of the reaction with BTDP.

### Example 3

### Synthesis of functionalised cross-linking agents (I)

The following functionalised cross-linking of formula (I) agents comprising a group B carbene precursor (3.1 - 3.3) or nitrene precursor (3.4 - 3.6) were synthesised and characterised as shown in Table 2 below:

**Table 2:**

| Agents of formula (I) | | | | |
|---|---|---|---|---|
| N° | Formula | Brute formula | Mol. weight (g/mol) | T-B / T-Tetr (°C) |
| 3.1 | 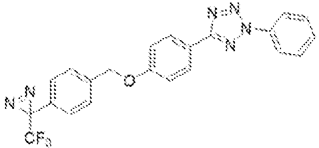 | C₂₂H₁₅F₃N₆O | 436.40 | 110/175 |
| 3.2 | 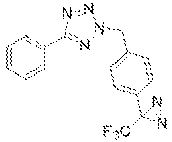 | C₁₆H₁₁F₃N₆ | 344.30 | 110/190 |
| 3.3 | 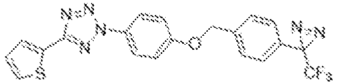 | C₂₀H₁₃F₃N₆OS | 442.42 | 130/190 |
| 3.4 | 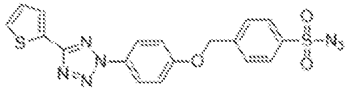 | C₁₈H₁₃N₇O₃S₂ | 439.48 | 130/190 |
| 3.5 | 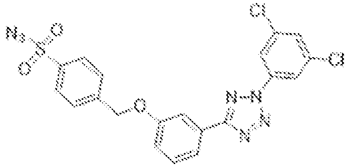 | C₂₀H₁₃Cl₂N₇O₃S | 502.34 | 130/170 |
| 3.6 | 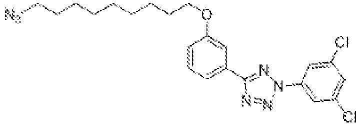 | C₂₂H₂₅Cl₂N₇O | 474.39 | 120/170 |

The reported activation temperatures T-B and T-Tetr are those observed when the sample comprising the agent of formula (I) dispersed in POLYVEST^{®} 130 starts to lose weight on thermo-gravimetric analysis (TGA). The two activation temperatures of the agent (I) and its solubility in the elastomeric matrix can be specifically modified by choosing the appropriate substituents.

### Synthesis of 2-phenyl-5-(4-((4-(3-trifluorophenyl-3H-diazirin-3-yl)-benzyl)oxy)phenyl)-2H-tetrazole (3.1) by alkylation

The cross-linking functionalising agent 3.1 was prepared starting from the tetrazole intermediate 1.13 as generally shown in Scheme 2 and herein specifically in Scheme 43: 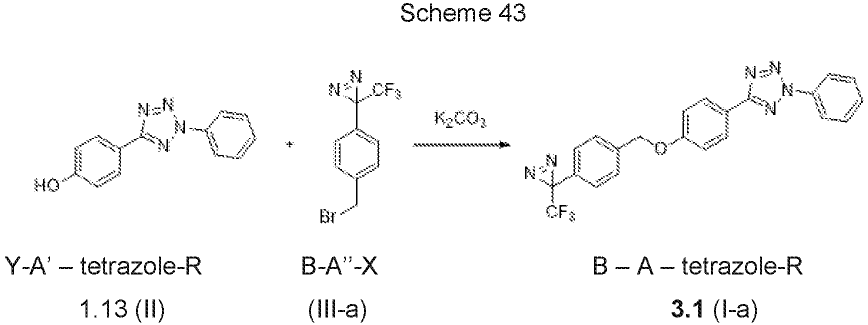 by alkylation with BPTD (III-a) according to the following procedure: in an inert and anhydrous atmosphere, 4-(2-phenyl-2H-tetrazol-5-yl)-phenol **(1.13,** 0.734 g, 3.1 mmol), K₂CO₃ (4.284 g, 31 mmol) and 100 ml of AcCN were added to a round-bottom flask. After 15 minutes, commercial BPTD (III-a) (0.5 ml, 3.1 mmol) was added, allowing to stir at room temperature overnight. The mixture was poured into water (300 ml) and extracted with dichloromethane (2x20 ml), washing with saline solution (2x10 ml). The organic layer was dried on Na₂SO₄, filtered and evaporated at low pressure. The crude product was purified by chromatography on silica gel by eluting with a dichloromethane:hexane mixture (7:3) to collect the pure product as a white solid 3.1 (0.913 g, yield: 72%).

¹H-NMR (400 MHz, CDCl₃) δ 8.21 - 8.17 (m, 4H), 7.60 - 7.55 (m, 2H), 7.50 (tt, J = 5.9, 1.2 Hz, 3H), 7.24 (d, J = 8.1 Hz, 2H), 7.11 - 7.07 (m, 2H), 5.16 (s, 2H).

FTIR-ATR (cm⁻¹): 578, 609, 633, 681, 694, 706, 736, 757, 809, 820, 837, 857, 872, 919, 939, 992, 1007, 1018, 1037, 1052, 1076, 1112, 1150, 1171, 1194, 1239, 1305, 1321, 1343, 1389, 1426, 1456, 1462, 1474, 1498, 1520, 1542, 1586, 1598, 1614, 1912, 2059, 2195, 2354, 2922, 3061.

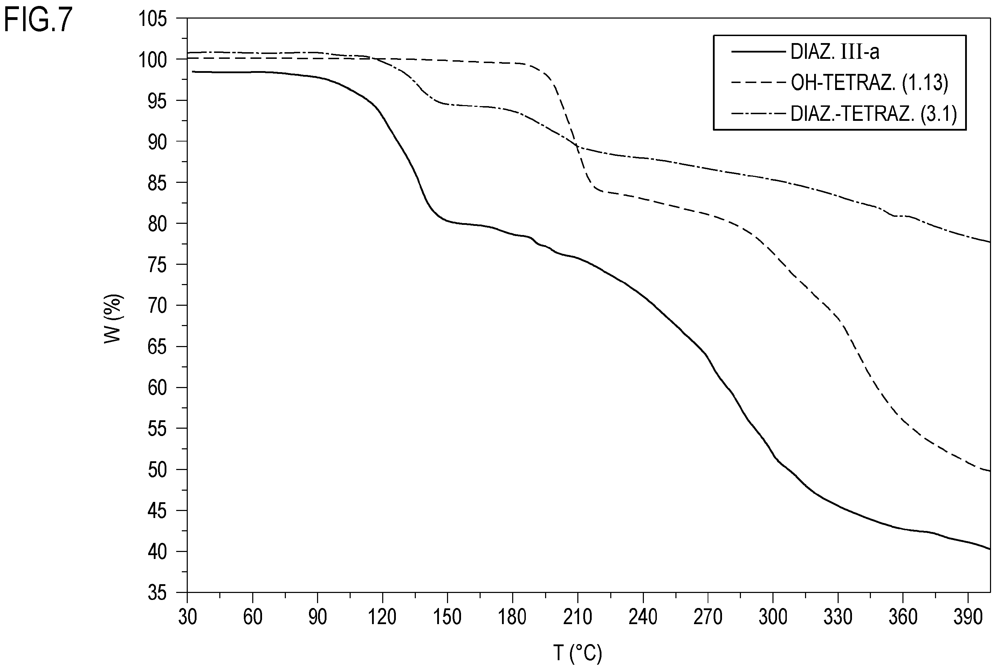

TGA analysis: T-B: 110 °C and T-Tetr: 175°C. Figure 7 shows the TGA analysis of the starting products (diazirine and tetrazole) and the end product 3.1. It can be observed that the end product showed a weight loss of around 120 °C, corresponding to the nitrogen loss from the diazirine fraction and a second weight loss of around 190 °C, corresponding to the nitrogen loss from the tetrazole fraction.

### Synthesis of 2-phenyl-5-(4-((4-(3-(trifluorophenyl)-3H-diazirin-3-yl)-benzyl)oxy)phenyl)-2H-tetrazole (3.1) by Mitsunobu

The cross-linking functionalising agent **3.1** was also prepared starting from the tetrazole intermediate **1.13** as generally shown in Scheme 2 and herein specifically in Scheme 44: 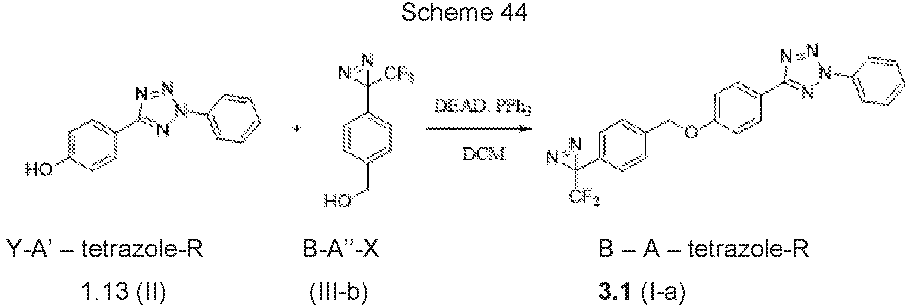 by Mitsunobu reaction with 4-(3-trifluorophenyl-3H-diazirin-3-yl)-phenyl-methanol (III-b) according to the following procedure: commercial 4-(2-phenyl-2H-tetrazol-5-yl)-phenol **(1.13)** (0.500 g, 2.1 mmol), 4-(3-trifluorophenyl-3H-diazirin-3-yl)-phenyl-methanol (III-b, 0.302 g, 1.4 mmol), PPh₃ (0.734 g, 2.8 mmol) and 20 ml of dichloromethane, were added to a round-bottom flask. The mixture was cooled to 0 °C and then diethyl azodicarboxylate (DEAD, 0.488 g, 2.8 mmol) was added by portions. The reaction was left under stirring at room temperature overnight. The mixture was concentrated at low pressure and purified by chromatography on silica gel eluting with a dichloromethane/hexane mixture (7:3) to collect the pure product as a white solid **3.1** (0.531 g, yield: 87%).

¹H-NMR (400 MHz, CDCl₃) δ 8.21 - 8.17 (m, 4H), 7.60 - 7.55 (m, 2H), 7.50 (tt, J = 5.9, 1.2 Hz, 3H), 7.24 (d, J = 8.1 Hz, 2H), 7.11 - 7.07 (m, 2H), 5.16 (s, 2H).

FTIR-ATR (cm⁻¹): 578, 609, 633, 681, 694, 706, 736, 757, 809, 820, 837, 857, 872, 919, 939, 992, 1007, 1018, 1037, 1052, 1076, 1112, 1150, 1171, 1194, 1239, 1305, 1321, 1343, 1389, 1426, 1456, 1462, 1474, 1498, 1520, 1542, 1586, 1598, 1614, 1912, 2059, 2195, 2354, 2922, 3061.

TGA analysis: T-B 110 °C; T-Tetr 175 °C. Decomposition occurred before fusion.

### Synthesis of 5-phenyl-2-(4-(3-trifluorophenyl-3H-diazirin-3-yl)benzyl)-2H-tetrazole (3.2) by alkylation

The cross-linking functionalising agent **3.2** was prepared starting from 5-phenyl-2H-tetrazole (VI-a) as generally shown in Scheme 6 (synthesis b2) and herein specifically in Scheme 45: 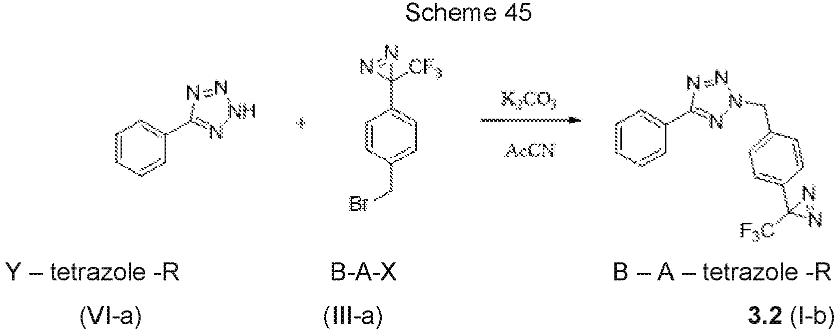 by alkylation with BPTD (III-) according to the following procedure: in an inert and anhydrous atmosphere, 5-phenyl-2H-tetrazole (VI-a) (0.036 g, 0.25 mmol), K₂CO₃ (0.346 g, 2.5 mmol) and 10 ml of AcCN were added to a round-bottom flask. Commercial BPTD (III-a) (0.04 ml, 0.25 mmol) were added after 15 minutes. The reaction was conducted at room temperature overnight. The mixture was poured into water (300 ml) and extracted with AcOEt (2 x 20 ml), washing with saline solution (2 x 10 ml). The organic layer was dried on Na₂SO₄, filtered and evaporated at low pressure. The crude product was purified by chromatography on silica gel by eluting with dichloromethane to collect the pure product as a white solid 3.2 (0.057 g, yield: 66%).

¹H NMR (400 MHz, CDCl₃) δ 8.17 - 8.13 (m, 2H), 7.53 - 7.47 (m, 5H), 7.24 (d, *J* = 8.1 Hz, 2H), 5.84 (s, 2H).

FTIR-ATR (cm⁻¹): 581, 612, 635, 682, 697, 702, 739, 760, 808, 838, 856, 874, 922, 941, 993, 1007, 1018, 1034, 1051, 1112, 1150, 1172, 1193, 1240, 1321, 1345, 1388, 1426, 1464, 1499, 1520, 1545, 1588, 1911, 2062, 2196, 2355, 2924, 3060. TGA analysis: T-B 110 °C; T-Tetr 190 °C Decomposition occurred before fusion.

### Synthesis of 5-(thiophen-2-yl)-2-(4-((4-(3-trifluorophenyl-3H-diazirin-3-yl)benzyl)oxy)phenyl)-2H-tetrazole (3.3) by Mitsunobu

The cross-linking functionalising agent **3.3** was prepared starting from 4-(5-(thiophen-2-yl)-2H-tetrazol-2-yl)phenol **(1.25)** as shown in Scheme 46: 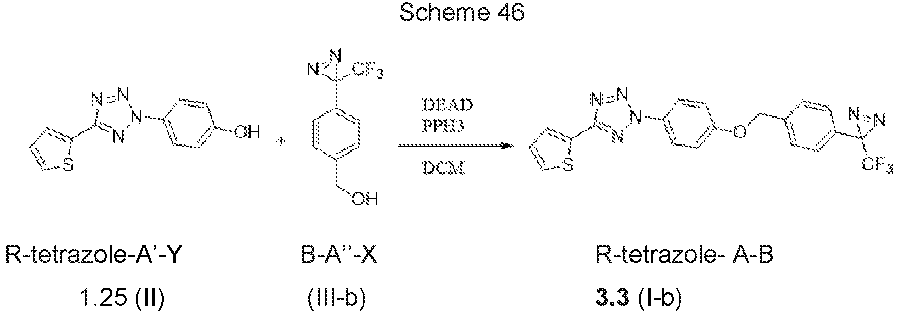 by Mitsunobu reaction with (4-(3-trifluorophenyl-3H-diazirin-3-yl)phenyl)methanol (III) according to the following procedure: commercial 4-(5-(thiophen-2-yl)-2H-tetrazole-2-yl)phenol (1.25) (0.403 g, 1.65 mmol), 4-(3-trifluorophenyl-3H-diazirin-3-yl)-phenyl-methanol (III-b) (0.238 g, 1.1 mmol), PPh₃ (0.577 g, 2.2 mmol) and 20 ml of dichloromethane, were added to a round-bottom flask. The mixture was cooled to 0 °C and then DEAD (0.950 g, 2.2 mmol) was added by portions. The reaction was left under stirring at room temperature overnight. The next day, the mixture was concentrated at low pressure and purified by chromatography on silica gel by eluting with dichloromethane to collect the pure product as a light yellow solid **3.3** (0.445 g, yield: 91%).

¹H NMR (400 MHz, CDCl₃) δ 8.08 (t, J = 9.1 Hz, 3H), 7.89 (dd, J = 3.6, 1.2 Hz, 1H), 7.52 - 7.47 (m, 3H), 7.18 (dd, J = 5.0, 3.7 Hz, 1H), 7.10 (d, J = 9.1 Hz, 2H), 7.04 (d, J = 9.1 Hz, 1H), 5.16 (s, 2H).

FTIR-ATR (cm⁻¹): 576, 613, 686, 710, 735, 750, 812, 834, 852, 938, 966, 1002, 1011, 1031, 1112, 1148, 1240, 1302, 1345, 1384, 1456, 1477, 1512, 1565, 1608, 1654, 1778, 1946, 1971, 2006, 2021, 2049, 2064, 2122, 2142, 2169, 2207, 2932, 3090.

TGA analysis: T-B 130 °C; T-Tetr 190 °C. Decomposition occurred before fusion.

### Synthesis of 5-(2-thienyl)-2-(4-{[4-(2l5-triaz-1-en-2-in-1-yl-sulfonyl)benzyl]oxy}phenyl)-2H-tetrazole (3.4)

The cross-linking functionalising agent **3.4** was prepared by alkylation of the tetrazole intermediate 1.25 as generally shown in Scheme 2 and herein specifically in Scheme 47 below: 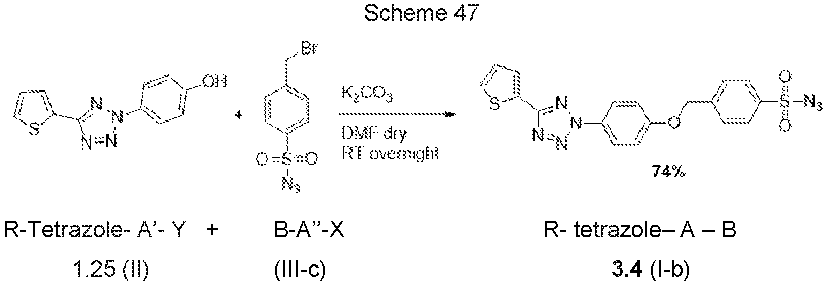 by alkylation according to the following procedure: 4-(5-(thiophen-2-yl)-2H-tetrazol-2-yl)phenol (1.25) (1.30 g, 5.30 mmol) was dissolved in 25 ml of anhydrous DMF, in a round-bottom flask under nitrogen. K₂CO₃ (0.88 g, 6.36 mmol) was added and, 1-{[4-(bromomethyl)phenyl]sulfonyl}-azide (III-c) (1.47 g, 5.30 mmol) was added after 15 minutes. The reaction was conducted at room temperature for 48 hours. The mixture was poured into water (100 ml) and extracted with AcOEt (3 x 20 ml), washing with saline solution (3 x 10 ml). The organic phase was dried on Na₂SO₄, filtered and evaporated at low pressure. The crude product was purified by chromatography on silica gel by eluting with a dichloromethane:AcOEt mixture (ratio 3:2) to obtain the pure product as a pink solid **3.4** (1.72 g, yield: 74%).

1H NMR (400 MHz, CDCl3) δ 8.23 - 8.04 (m, 2H), 7.91 (ddd, J = 21.5, 19.5, 8.4 Hz, 3H), 7.63 - 7.46 (m, 3H), 7.23 - 7.16 (m, 3H), 4.51 (s, 2H).

TGA analysis: T-B 130 °C; T-Tetr 190 °C. Decomposition occurred before fusion.

### Synthesis of 2-(3.5-dichlorophenyl)-5-(3-{[4-(215-triaz-1-en-2-in-1-yl-sulfonyl)benzyl]oxy}phenyl)-2H-tetrazole (3.5)

The cross-linking functionalising agent **3.5** was prepared by alkylation of the tetrazole intermediate 1.33 as generally shown in Scheme 2 and herein specifically in Scheme 48 below: 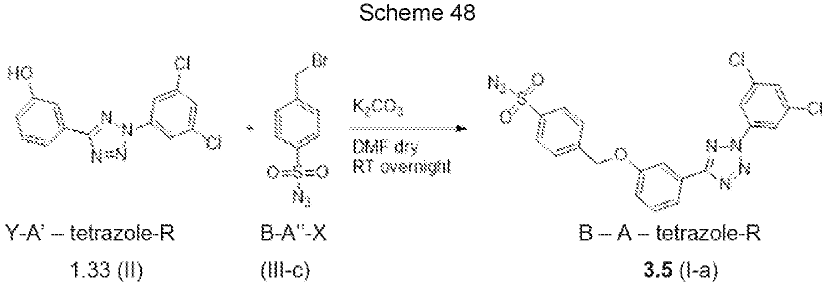 by alkylation according to the following procedure: 3-[2-(3,5-dichlorophenyl)-2H-tetrazol-5-yl]phenol (1.33) (3.00 g, 9.77 mmol) was dissolved in 30 ml of anhydrous DMF, in a round-bottom flask under nitrogen. K₂CO₃ (1.62 g, 11.72 mmol) was added and, 1-{[4-(bromomethyl)phenyl]sulfonyl}-azide (III-c) (2.70 g, 9.77 mmol) was added after 15 minutes. The reaction was conducted at room temperature for 48 hours. The mixture was poured into water (100 ml) and extracted with AcOEt (3 x 20 ml), washing with saline solution (3 x 10 ml). The organic phase was dried on Na₂SO₄, filtered and evaporated at low pressure. The crude product was purified by chromatography on silica gel by eluting with a dichloromethane:AcOEt mixture (ratio 3:2) to obtain the pure product as a pink solid **3.5** (3.00 g, yield: 61%).

1H NMR (400 MHz, CDCl3) δ 8.19 - 8.15 (m, 1H), 8.13 (d, J = 1.8 Hz, 2H), 7.94 - 7.89 (m, 2H), 7.89 - 7.85 (m, 1H), 7.52 - 7.50 (m, 2H), 7.50 - 7.46 (m, 2H), 7.17 (ddd, J = 8.2, 2.4, 1.0 Hz, 1H), 4.49 (s, 2H).

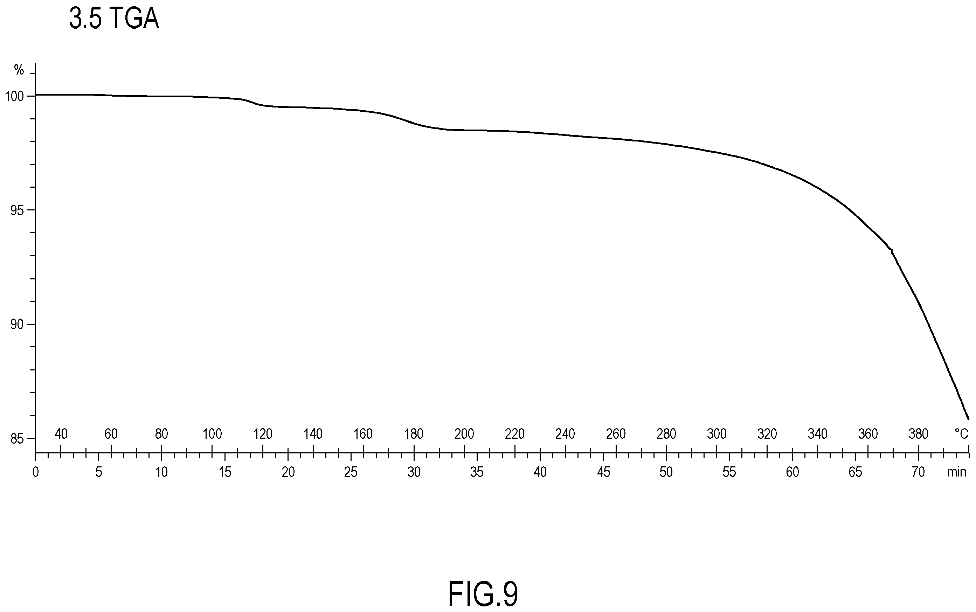

TGA Analysis (Figure 9): T-B 130 °C; T-Tetr 170 °C. Decomposition occurred before fusion.

### Synthesis of 2-(3.5-dichlorophenyl)-5-(3-{[9-(triaz-1-en-2-in-1-il)nonyl]oxy}phenyl)-2H-tetrazole (3.6)

The cross-linking functionalising agent **3.6** was prepared by the Mitsunobu reaction of the tetrazole intermediate 1.33 and subsequent nucleophilic substitution as generally shown in Scheme 2 and herein in the specific Schemes 49 and 50: 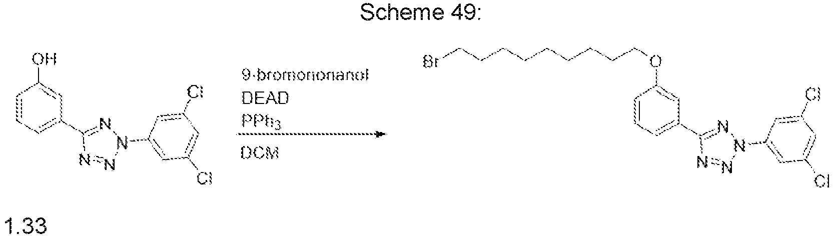 by Mitsunobu reaction with 9-bromononanol according to the following procedure: commercial 3-[2-(3,5-dichlorophenyl)-2H-tetrazol-5-yl]phenol (1.33) (0.200 g, 0.65 mmol), 9-bromononanol (0.145 g, 0.65 mmol), PPh₃ (0.341 g, 1.3 mmol) and 10 m of dichloromethane were added to a round-bottom flask. The mixture was cooled to 0 °C and then DEAD (0.226 g, 1.3 mmol) was added by portions. The reaction was left under stirring at room temperature overnight. The next day, the mixture was concentrated at low pressure and purified by chromatography on silica gel by eluting with a dichloromethane/heptane mixture (1:1) to collect the pure product as a light 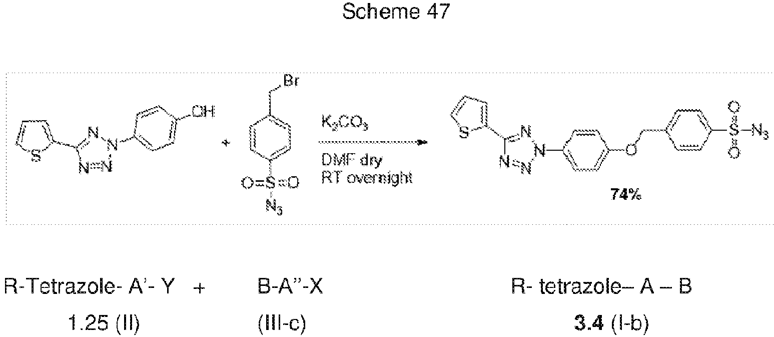 by alkylation according to the following procedure: 4-(5-(thiophen-2-yl)-2H-tetrazol-2-yl)phenol (1.25) (1.30 g, 5.30 mmol) was dissolved in 25 ml of anhydrous DMF, in a round-bottom flask under nitrogen. K₂CO₃ (0.88 g, 6.36 mmol) was added and, 1-{[4-(bromomethyl)phenyl]sulfonyl}-azide (III-c) (1.47 g, 5.30 mmol) was added after 15 minutes. The reaction was conducted at room temperature for 48 hours.

The mixture was poured into water (100 ml) and extracted with AcOEt (3 x 20 ml), washing with saline solution (3 x 10 ml). The organic phase was dried on Na₂SO₄, filtered and evaporated at low pressure. The crude product was purified by chromatography on silica gel by eluting with a dichloromethane : AcOEt mixture (ratio 3:2) to obtain the pure product as a pink solid **3.4** (1.72 g, yield: 74%).

1H NMR (400 MHz, CDCl3) δ 8.23 - 8.04 (m, 2H), 7.91 (ddd, J = 21.5, 19.5, 8.4 Hz, 3H), 7.63 - 7.46 (m, 3H), 7.23 - 7.16 (m, 3H), 4.51 (s, 2H).

TGA analysis: T-B 130 °C; T-Tetr 190 °C. Decomposition occurred before fusion.

### Synthesis of 2-(3.5-dichlorophenyl)-5-(3-{[4-(2I5-triaz-1-en-2-in-1-yl-sulfonyl)benzyl]oxy}phenyl)-2H-tetrazole (3.5)

The cross-linking functionalising agent **3.5** was prepared by alkylation of the tetrazole intermediate 1.33 as generally shown in Scheme 2 and herein specifically in Scheme 48 below: 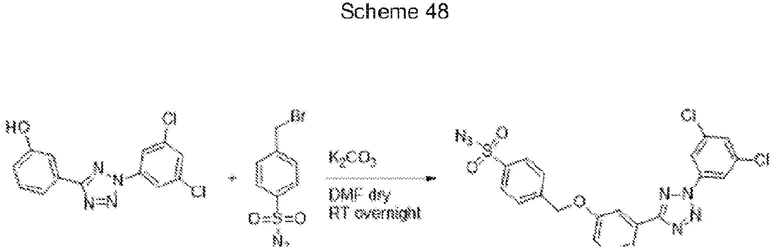 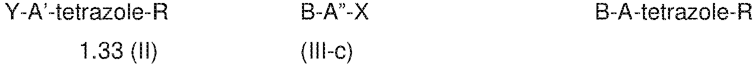 by alkylation according to the following procedure: 3-[2-(3,5-dichlorophenyl)-2H-tetrazol-5-yl]phenol (1.33) (3.00 g, 9.77 mmol) was dissolved in 30 ml of anhydrous DMF, in a round-bottom flask under nitrogen. K₂CO₃ (1.62 g, 11.72 mmol) was added and, 1-{[4-(bromomethyl)phenyl]sulfonyl}-azide (III-c) (2.70 g, 9.77 mmol) was added after 15 minutes. The reaction was conducted at room temperature for 48 hours. The mixture was poured into water (100 ml) and extracted with AcOEt (3x20 ml), washing with saline solution (3x10 ml). The organic phase was dried on Na₂SO₄, filtered and evaporated at low pressure. The crude product was purified by chromatography on silica gel by eluting with a dichloromethane:AcOEt mixture (ratio 3:2) to obtain the pure product as a pink solid **3.5** (3.00 g, yield: 61%).

1H NMR (400MHz, CDCl3) δ 8.19 - 8.15 (m,1H), 8.13 (d,J=1.8 Hz,2H), 7.94-7.89 (m,2H), 7.89-7.85 (m,1H), 7.5-7.50 (m,2H), 7.50-7.46 (m,2H), 7.17 (ddd, J=8.2, 2.4, 1.0Hz,1H), 4.49 (s,2H).

TGA Analysis (Figure 9): T-B 130°C; T-Tetr 170°C. Decomposition occurred before fusion.

### Synthesis of 2-(3.5-dichlorophenyl)-5-(3-{[9-(triaz-1-en-2-in-1-il)nonyl]oxy}phenyl)-2H-tetrazole (3.6)

The cross-linking functionalising agent **3.6** was prepared by the Mitsunobu reaction of the tetrazole intermediate 1.33 and subsequent nucleophilic substitution as generally shown in Scheme 2 and herein in the specific Schemes 49 and 50: 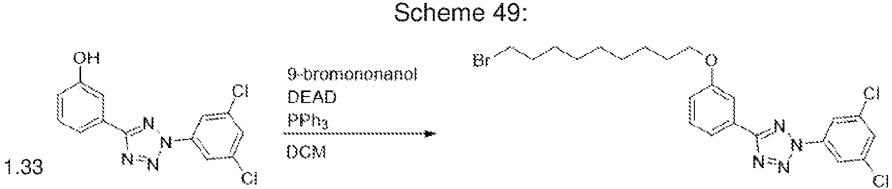 by Mitsunobu reaction with 9-bromononanol according to the following procedure: commercial 3-[2-(3,5-dichlorophenyl)-2H-tetrazol-5-yl]phenol (1.33) (0.200 g, 0.65 mmol), 9-bromononanol (0.145 g, 0.65 mmol), PPh₃ (0.341 g, 1.3 mmol) and 10 m of dichloromethane were added to a round-bottom flask. The mixture was cooled to 0 °C and then DEAD (0.226 g, 1.3 mmol) was added by portions. The reaction was left under stirring at room temperature overnight. The next day, the mixture was concentrated at low pressure and purified by chromatography on silica gel by eluting with a dichloromethane/heptane mixture (1:1) to collect the pure product as a light yellow solid (0.100 g, yield: 30%).

1H NMR (400 MHz, CDCl3) δ 8.14 (d, J = 1.8 Hz, 2H), 7.82 - 7.78 (m, 1H), 7.74 (dd, J = 2.4, 1.5 Hz, 1H), 7.47 (t, J = 1.8 Hz, 1H), 7.41 (t, J = 8.0 Hz, 1H), 7.04 (ddd, J = 8.3, 2.6, 0.9 Hz, 1H), 4.06 (t, J = 6.5 Hz, 2H), 3.45 - 3.38 (m, 2H), 1.92 - 1.79 (m, 2H), 1.56 - 1.47 (m, J = 10.5, 5.0 Hz, 2H), 1.47 - 1.39 (m, 2H), 1.39 - 1.27 (m, 8H).

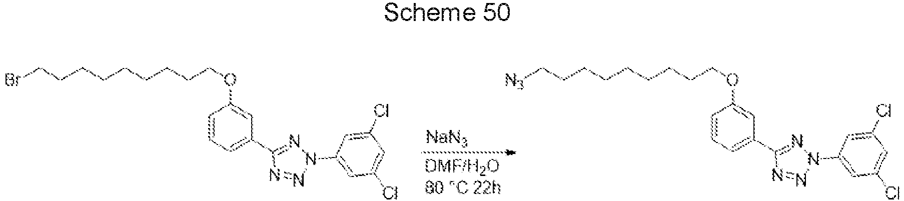

5-{3-[(9-bromononyl)oxy]phenyl}-2-(3,5-dichlorophenyl)-2H-tetrazole (0.100 g, 0.195 mmol) and sodium azide (0.026 g, 0.390 mmol) were dissolved in 3 ml of a DMF/H₂O mixture (9:1). The reaction was heated to 80 °C for 22 hours. The mixture was extracted with ethyl acetate, the organic phase was anhydrified, filtered and evaporated at low pressure, to obtain the pure product (0.092 g, yield: 99%).

¹H NMR (400 MHz, CDCl₃) δ 8.14 (d, J = 1.8 Hz, 2H), 7.84 - 7.77 (m, 1H), 7.74 (dd, *J* = 2.4, 1.5 Hz, 1H), 7.48 (t, *J* = 1.8 Hz, 1H), 7.41 (t, *J* = 8.0 Hz, 1H), 7.04 (ddd, *J* = 8.3, 2.6, 0.9 Hz, 1H), 4.06 (t, J = 6.5 Hz, 2H), 3.25 (t, *J* = 7.0 Hz, 2H), 1.87 - 1.78 (m, 2H), 1.59 (dd, *J* = 14.1, 6.8 Hz, 2H), 1.54 - 1.46 (m, 2H), 1.41 - 1.27 (m, 8H).

### Example 4

### Preparation of elastomeric compounds comprising the carbene cross-linking functionalising agent (I)

There were prepared comparative elastomeric compounds (E.g. 4.1 not containing the agent of formula (I), therefore with unchanged SBR) and according to the invention (Ex. 4.2 and Ex. 4.3 containing the carbene cross-linking functionalising agent 3.1, then with functionalised SBR).

The amounts of the various components expressed in phr and their addition step are reported in Table 3 below:

**Table 3: Compositions for elastomeric compounds (Carbene cross-linking functionalising agent 3.1)**

| Stage | Phr ingredients | Ex. 4.1 | Ex. 4. 2 | Ex. 4.3 |
|---|---|---|---|---|
| | | Comp | Inv | Inv |
| 1.0 | SBR | 100 (137.5) | 100 (137.5) | 100 (137.5) |
| 1.1 | Agent **3.1** | -- | 0.62 | 1.24 |
| 2.1 | Silica | 60 | 60 | 60 |
| 2.1 | TESPD | 4.8 | 4.8 | 4.8 |
| 2.2 | Stearic acid | 2 | 2 | 2 |
| 2.2 | ZnO | 2 | 2 | 2 |
| 2.2 | 6PPD | 2 | 2 | 2 |
| 3.1 | S | 1 | 1 | 1 |
| 3.1 | CBS | 3 | 3 | 3 |

wherein:
stages 1.0 - 2.2: non- productive step or step (i);
stage 3.1: productive step or step (ii);
SBR: SLR4630 styrene-butadiene copolymer with 25% styrene and 62% vinyl (on butadiene amount), extended oil with 37.5 phr of TDAE by Synthos; Silica: ZEOSIL 1165 MP, supplier Solvay Rhodia Operations; TESPD: silanizing agent, bis-(triethoxysylpropyl)disulfide, Si266 supplier: Evonik; Stearic Ac.: Stearin N supplier Sogis; ZnO: by Zincol Ossidi; 6PPD: N-(1.3-dimethylbutyl)-N'-phenyl-p-phenylenediamine, antioxidant agent, Santoflex^{™} 6PPD, supplier: Eastman; Sulphur: vulcanising agent, supplier Zolfindustria; CBS: N-cyclohexyl-2-benzothiazylsulfenamide, accelerator, Vulcacit ^{®}, supplier: Lanxess.

Mixing was conducted in multiple stages using a laboratory tangential rotor internal mixer from Brabender (60 ml mixing chamber).

In the first stage (1-0), elastomer was introduced and chewed for 30 seconds at 120°C (set temperature). In the subsequent stage (1.1), the cross-linking functionalising agent **3.1** was introduced into the mixtures 4.2 and 4.3 and mixed at 120 °C for approximately 5 minutes, unloading the functionalised polymer or, in the case of comparative compound 4.1, unchanged. In the subsequent non- productive step, silica and TESPD (2.1) were added to the respective compounds loaded in the same mixer, followed by stearic acid, ZnO and 6PPD (2.2) and the mixing continued for approximately 6 minutes at the temperature of 140 °C, after which, the compounds were unloaded.

Finally, in the productive step (stage 3.1) conducted using the same mixer, the vulcanising agent (sulfur) and the accelerator (CBS) were introduced, and the mixing continued for about 3 minutes at 80°C, when the final compounds were unloaded.

The end compounds, comparative compounds and compounds according to the invention, were analysed for the static and dynamic mechanical properties after vulcanisation, according to the methods described above.

The results of these analyses are reported in Table 4 below:

**Table 4**

| | | Ex. 4.1 | Ex. 4.2 | Ex. 4.3 |
|---|---|---|---|---|
| | | Comp | Inv | Inv |
| Agent **3.1** | | -- | 0.62 phr | 1.24 phr |
| | | | | |
| CA0.1(23°C) | MPa | 0.78 | 0.83 | 0.98 |
| CA0.5 (23°C) | MPa | 1.64 | 1.56 | 2.07 |
| Ca1 (23°C) | MPa | 2.64 | 2.48 | 3.52 |
| Ca3 (23°C) | MPa | 11.84 | 11.54 | 14.01 |
| CR (23°C) | MPa | 18.33 | 20.12 | 13.86 |
| AR (23°C) | % | 400.68 | 435.21 | 305.10 |
| E' (0°C 100Hz) | MPa | 18.58 | 19.39 | 22.54 |
| Tan Delta (0°C 100Hz) | -- | 0.777 | 0.747 | 0.675 |
| E' (70°C 100Hz) | MPa | 7.07 | 7.62 | 9.30 |
| Tan Delta (70°C 100Hz) | -- | 0.146 | 0.141 | 0.138 |

The compound according to the invention of Ex. 4.2 containing 0.62 phr of crosslinking functionalising agent 3.1 showed an increase in E' modulus and a reduction in hysteresis, similar to those that can be achieved with commercial functionalised polymers.

Surprisingly, the increase in cross-linking did not adversely affect the stretchability of the material.

The compound of Ex. 4.3, containing 1.24 phr of the cross-linking functionalising agent 3.1, showed that the functionalisation effect strongly depended on the amount of functionalising agent, having both static and dynamic modulus values much higher than those of the reference compound, significantly reduced hysteresis, but also decreased CR and AR values.

### Example 5

### Preparation of compounds comprising the carbene cross-linking functionalising agent and mixtures of poorly compatible elastomers

In order to assess the possible compatibilization effect of the agent of formula (I) on different elastomers in a blend, there were prepared compounds comprising two types of SBR that are scarcely similar to each other, in particular a comparative compound (E.g. 5.1 not containing the cross-linking functionalising agent and therefore not subject to any compatibilization) and one according to the invention (E.g. 5.2 containing the carbene cross-linking functionalising agent 3.1, in the amount selected in the previous experiment of 0.62 phr). The preparation procedure was similar to that in Example 4. In this case, the cross-linking functionalising agent was added and pre-reacted at the minor activation temperature T-B with only one of the two SBR (see below, in Table 5, SBR A), forming a single functionalised SBR. The amounts of the various components expressed in phr and their step of addition to the compound are reported in Table 5 below:

**Table 5: Compositions for compounds containing scarcely similar SBR**

| (Carbene cross-linking functionalising agent **3.1)** | | | |
|---|---|---|---|
| Stage | Phr ingredients | Ex. 5.1 | Ex. 5. 2 |
| | | Comp | Inv |
| 1.0 | SBR A | 50 (68.75) | 50 (68.75) |
| 1.1 | Agent **3.1** | -- | 0.62 |
| 2.0 | SBR B (Extended Oil) | 50 (68.75) | 50 (68.75) |
| 2.1 | Silica | 60 | 60 |
| 2.1 | TESPD | 4.8 | 4.8 |
| 2.2 | Stearic acid | 2 | 2 |
| 2.2 | ZnO | 2 | 2 |
| 2.2 | 6PPD | 2 | 2 |
| 3.1 | S | 1 | 1 |
| 3.1 | CBS | 3 | 3 |

wherein:
stages 1.0 - 2.2: non-productive step or step (i);
stage 3.1: productive step or step (ii);
SBR A: NT 120 partially hydrogenated styrene-butadiene copolymer, degree of hydrogenation 93.5%, extended with 37 phr of TDAE oil per 100 phr of dry elastomeric polymer (phr between brackets including oil), styrene 35%, vinyl 27%, Tg -31°C, density 0.92 g/cm³, supplier: ENEOS; SBR B: SLR4630 with 25% styrene and 62% vinyl (on the amount of butadiene) extended oil with 27.3% TDAE, supplier: Synthos; and the other components as defined in Table 3 above.

The final compounds, comparative compounds and compounds according to the invention, were analysed for static and dynamic mechanical properties, according to the methods described above.

The results of these analyses are reported in Table 6 below:

**Table 6**

| | | Ex. 5.1 | Ex. 5.2 |
|---|---|---|---|
| | | Comp | Inv |
| Agent **3.1** | | -- | 0.62 phr |
| | | | |
| CA0.1(23°C) | MPa | 1.02 | 0.93 |
| CA0.5 (23°C) | MPa | 2.20 | 2.19 |
| Ca1 (23°C) | MPa | 3.52 | 3.53 |
| Ca3 (23°C) | MPa | 14.71 | 14.76 |
| CR (23°C) | MPa | 20.81 | 22.02 |
| AR (23°C) | % | 391.55 | 414.25 |
| E' (0°C 100Hz) | MPa | 24.69 | 24.53 |
| Tan Delta (0°C 100Hz) | -- | 0.640 | 0.626 |
| E' (70°C 100Hz) | MPa | 9.35 | 9.40 |
| Tan Delta (70°C 100Hz) | -- | 0.135 | 0.134 |

Unlike the compounds in Example 4 comprising only one type of SBR, the data reported in Table 6 did not show a change in the modulus/hysteresis ratio, but a marked improvement in the tensile properties, as shown by the CR and AR values of the compound according to the invention.

This significant change in the tensile properties could be due to the improved interaction at the interface between the two poorly compatible elastomeric polymers of the compound, attributable to the agent of formula (I) of the invention.

### Example 6

### Preparation of elastomeric compounds comprising the nitrene cross-linking functionalising agent (I)

There were prepared comparative elastomeric compounds (E.g. 6.1 not containing the agent of formula (I) therefore with unchanged SBR) and according to the invention (E.g. 6.2 containing the nitrene agent (I) **3.4,** then with functionalised SBR). The preparation procedure was entirely similar to that described in Example 4.

The amounts of the various components expressed in phr and their step of addition to the compound are reported in Table 7 below:

**Table 7: Compositions for elastomeric compounds**

| (Nitrene cross-linking functionalising agent **3.4)** | | | |
|---|---|---|---|
| Stage | Ingredients in phr | Ex. 6.1 | Ex. 6. 2 |
| | | Comp | Inv |
| 1.0 | SBR B (extended oil) | 80 (110) | 80 (110) |
| 1.0 | BR | 20 | 20 |
| 1.0 | Agent **3.4** | -- | 1.2 |
| 2.1 | Silica | 60 | 60 |
| 2.1 | TESPD | 4.8 | 4.8 |
| 2.2 | Stearic acid | 2 | 2 |
| 2.2 | ZnO | 2 | 2 |
| 2.2 | 6PPD | 2 | 2 |
| 3.1 | S | 1 | 1 |
| 3.1 | CBS | 3 | 3 |

wherein:
BR: BUNA CB25 High-cis polybutadiene polymer produced in solution with a neodymium catalyst, supplier Lanxess, and the other components as defined in Table 3 above.

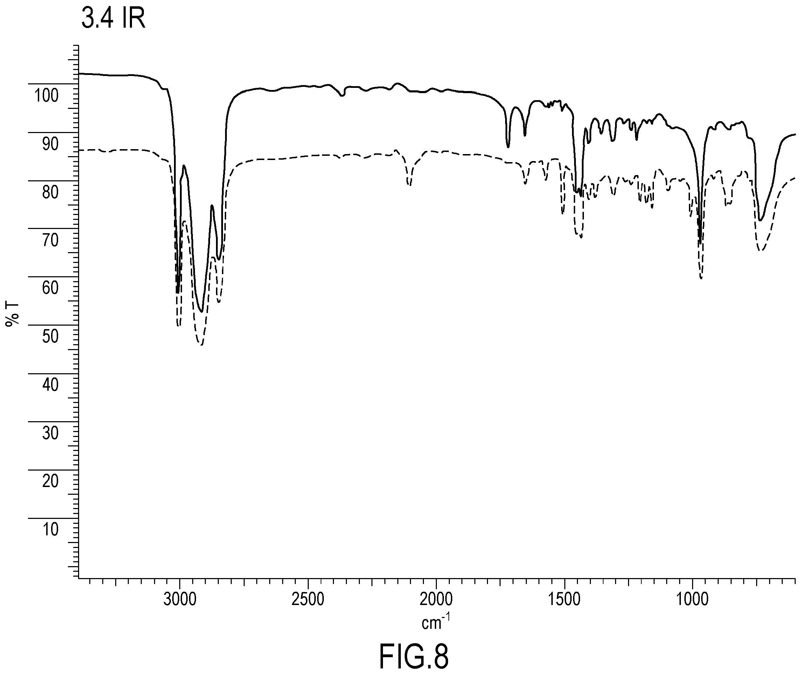

Figure 8 reports the overlapping IR spectra, measured before (dashed line) and after (solid line) the thermal treatment at 140 °C of a blend comprising the agent **3.4** and POLYVEST^{®} 130, which show the disappearance of the azide band at 2100 cm⁻¹ by reacting nitrene with double polymer bonds.

The final compounds, comparative compounds and compounds according to the invention, were analysed for static and dynamic mechanical properties, according to the methods described above.

The results of these analyses are reported in Table 8 below:

**Table 8**

| | | Ex. 6.1 | Ex. 6.2 |
|---|---|---|---|
| | | Comp | Inv |
| Agent **3.4** | | -- | 1.2 phr |
| | | | |
| CA0.1(23°C) | MPa | 0.61 | 0.64 |
| CA0.5 (23°C) | MPa | 1.32 | 1.81 |
| Ca1 (23°C) | MPa | 2.03 | 3.44 |
| Ca3 (23°C) | MPa | 7.04 | 11.73 |
| CR (23°C) | MPa | 19.41 | 19.61 |
| AR (23°C) | % | 634.98 | 478.45 |
| G' (70°C 10 Hz 3% deformation) | MPa | 1.78 | 2.45 |
| Tan Delta (70°C 10 Hz 9% deformation) | -- | 0.158 | 0.164 |
| Delta G" (70°C 10 Hz 0.5-10% deformation) | MPa | 1.37 | 1.53 |

The data reported in Table 8 showed an increasing effect of static moduli similar to that observed in the case of example 4.3, which was surprisingly not associated with a decrease in the tensile strength, which remained unchanged, while the elongation was reduced due to the increased rigidity. Lastly, dynamic shear moduli increased without a significant increase in hysteresis and Payne effect.

In conclusion, the tests carried out and the results of the tests outlined above showed that the agent of formula (I) of the invention incorporated in tyre compounds had a significant stiffening effect without jeopardising the tensile strength. Furthermore, it improved the compatibilization of non-similar polymers in a compound. The final compounds of the invention had optimal properties given that they combined significant mechanical reinforcement and good tensile properties with less hysteresis. These results support the use of cross-linking functionalising agents (I) of the invention in tyre compounds as an alternative to or optionally combined with conventional functionalised polymers, the agents of the invention, however, enjoying the undoubted advantages of a considerable simplification and versatility of the preparation process and of a wide applicability even to low reactive polymers.

## Claims

1. An agent of formula (I)
wherein 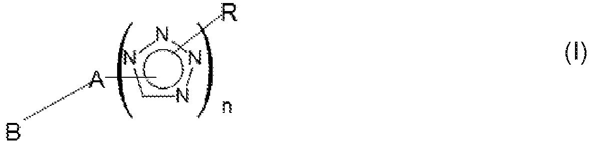
n is an integer from 1 to 3;
B is an organic group capable of generating a carbene or nitrene,
A represents an at least divalent organic linker residue between the B group and the one or more tetrazoles, where A is covalently linked to position 2 or 5 of the one or more tetrazoles, where the one or more tetrazoles are 2,5 disubstituted tetrazoles;
R is an organic group covalently linked respectively to position 5 or 2 of the one or more tetrazoles, selected from linear or branched C₁-C₁₀ alkyl; C₆-C₂₀ aryl; C₃-C₁₀ cycloalkyl; 5- or 6- membered, saturated, unsaturated or aromatic, mono- or bicyclic optionally benzocondensed heterocyclyl, comprising at least one heteroatom selected from N, S, O, R being in turn optionally substituted by at least one electron-withdrawing group EW or at least one electron-donating group ED,
wherein said agent of formula (I) is **characterised by** an activation temperature (T-B) of group B and one or more activation temperatures (T-Tetr) of the one or more tetrazoles, wherein said one or more activation temperatures (T-Tetr) are higher than the activation temperature (T-B).

2. The agent of formula (I) according to claim 1 wherein n = 1 and the organic residue A is a divalent organic residue.

3. The agent of formula (I) according to claim 1 or 2 wherein the organic residue A (linker) comprises at least one or it consists of: a C₁-C₂₀ , preferably C₁-C₁₀, saturated or unsaturated, linear or branched alkylene, optionally comprising in the chain one or more heteroatoms and/or one or more linking functional groups; a C₆-C₂₀, more preferably C₆-C₁₀ arylene; a mono or bicyclic, with 5 or 6 membered-rings, saturated, unsaturated or aromatic, optionally benzocondensed heterocyclylene comprising at least one heteroatom selected from N, S and O, said alkylene, arylene and heterocyclylene being optionally substituted, or combinations thereof.

4. The agent of formula (I) according to any one of the preceding claims wherein at least one of said arylene and/or heterocyclylene groups of the organic residue A is bound directly or with the interposition of a CH₂- group to the tetrazole.

5. The agent of formula (I) according to any one of the preceding claims wherein the organic residue A has a molecular weight of less than 1000 g/mol, preferably less than 500 g/mol, more preferably less than 300 g/mol.

6. The agent of formula (I) according to any one of the preceding claims wherein the R group is selected from optionally substituted C₆-C₁₀ aryl or heterocyclyl, preferably it is selected from phenyl, 3-chlorophenyl, 3,5-dichlorophenyl and thiophenyl.

7. The agent of formula (I) according to any one of the preceding claims wherein the group B capable of generating a carbene or a nitrene is selected from diazirine, diazo, ketene, sulfonazide, azide and isocyanate.

8. The agent of formula (I) according to any one of the preceding claims wherein n=1 and of formula (I-a) or (I-b): 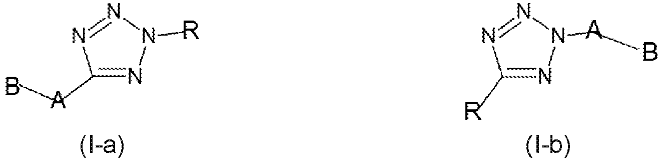 wherein B, A and R take the meanings according to any one of the preceding claims.

9. The agent of formula (I) according to any one of the preceding claims wherein n=1 and A is a divalent organic residue (linker) of formula A"-A' wherein
A" - directly bound to the B-group - is selected from C₆-C₁₀ arylene and aromatic mono- or bicyclic, with 5- or 6-membered rings, optionally benzocondensed heterocyclylene, comprising at least one heteroatom selected from N, S and O,
A' may be absent or, if present, it comprises C₆-C₁₀ -arylene, aromatic heterocyclylene, C₁-C₁₀-alkylene- -oxy- C₆-C₁₀-arylene or C₁-C₁₀-alkylene- oxy - aromatic heterocyclylene, and it is bound to the tetrazole with the aromatic portion, A" and A' being preferably directly bound, without the interposition of linking functional groups,
B is a group capable of generating a carbene or a sulfonazide group capable of generating a nitrene, and R may take the meanings according to any one of the preceding claims.

10. The agent of formula (I) according to any one of claims 1 to 8 wherein n=1 and A is a divalent organic residue (linker) of formula A"-A' wherein
A" - directly bound to the B-group - is selected from C₁-C₁₀ -alkylene-, C₆-C₁₀ - arylene-, heterocyclylene with 5- or 6-membered rings, optionally benzocondensed, comprising at least one heteroatom selected from mono- or bicyclic N, S and O, C₁-C₁₀ -alkylene- C₆-C₁₀ -arylene- and C₁-C₁₀ alkylene-heterocyclylene,
A' may be absent or, if present, it comprises C₆-C₁₀-arylene, aromatic heterocyclenes, C₁-C₁₀-alkylene -oxy- C₆-C₁₀-arylene- or C₁-C₁₀-alkylene- oxy - aromatic heterocyclenes, as defined above, and it is bound to tetrazole with the aromatic portion,
A" and A' being preferably directly bound, without the interposition of linking functional groups
B is a nitrene precursor azide group, and R may take the meanings according to any one of the preceding claims.

11. The agent of formula (I) according to any one of the preceding claims wherein the activation temperature T-B of the carbene or nitrene group B precursor is less than 140°C, preferably less than 135°C, more preferably less than 130°C and/or the one or more activation temperatures T-Tetr of the tetrazole component is not less than 140°C, preferably it is not less than 150°C, more preferably it is not less than 160°C.

12. A functionalized diene elastomeric polymer obtained by reacting a diene elastomeric polymer with at least one agent of formula (I) according to any one of claims 1 to 11.

13. A process for preparing a functionalized diene elastomeric polymer according to claim 12 comprising
- providing a diene elastomeric polymer;
- providing an agent of formula (I) according to any one of claims 1 to 11;
- mixing the diene elastomeric polymer and the agent of formula (I), maintaining the blend at a temperature T1 above the activation temperature (T-B) and below the one or more activation temperatures (T-Tetr) of the agent of formula (I) for a time sufficient to complete the functionalisation reaction of the diene elastomeric polymer, to obtain the functionalized diene elastomeric polymer.

14. The process according to claim 13 wherein said temperature T1 is below 170°C, preferably below 160°C.

15. The process according to claim 13 or 14 wherein the agent of formula (I) is used in a percentage weight ratio with respect to the diene elastomeric polymer comprised between 0.1% and 10%, preferably between 0.5% and 3%.

16. An elastomeric composition for a tyre compound comprising at least
- 100 phr of at least one diene elastomeric polymer,
- at least 1 phr of at least one reinforcing filler,
- at least 0.1 phr of at least one agent of formula (I) according to any one of claims 1 to 11; and
- 0 to 20 phr of a vulcanising agent.

17. The elastomeric composition according to claim 16 comprising from 0.1 phr to 10 phr, preferably from 0.3 phr to 5 phr, more preferably from 0.5 phr to 3 phr of at least one agent of formula (I).

18. An elastomeric tyre compound obtained by mixing and optionally vulcanising the elastomeric composition according to claim 16 or 17.

19. A process for preparing a vulcanised and optionally cross-linked elastomeric tyre compound according to claim 18 comprising:
- (i) a mixing step, in one or more stages, of at least 100 phr of at least one diene elastomeric polymer, at least 0.1 phr of at least one agent of formula (I) according to any one of claims 1 to 11, and optionally other components, excluding the vulcanising agent, maintaining the temperature at a value T1 always lower than one or more activation temperatures of the tetrazole component (T-Tetr) of the agent of formula (I) and, at least for one mixing stage, higher than the activation temperature of group B (T-B) of the same agent of formula (I), to obtain a cross-linkable non-vulcanised compound comprising the functionalized diene elastomeric polymer (non-productive step);
- (ii) a step for adding to the previous compound the vulcanising agent, and optionally other components of the vulcanisation package, and mixing at a temperature T2 always lower than both said one or more temperatures for activating the tetrazole component (T-Tetr) and the vulcanisation temperature (T-V) of the compound, to obtain a vulcanisable and cross-linkable compound (productive step); and
- (iii) a step for vulcanising and, optionally, cross-linking the previous compound by heating, at a temperature T3 higher than the vulcanisation temperature (T-V) of the compound and, optionally, also at one or more of said temperatures for activating the tetrazole component (T-Tetr) to obtain the vulcanised and, optionally cross-linked elastomeric compound.

20. A vehicle wheel tyre component comprising, or preferably consisting of, an elastomeric compound according to claim 18, preferably selected from tread band, under-layer, anti-abrasive layer, sidewall, sidewall insert, mini-sidewall, liner, underliner, rubberising layers, bead filler, bead reinforcing layers (flipper) and bead protecting layers (chafer).

21. A vehicle wheel tyre comprising at least one tyre component according to claim 20.

## Patentansprüche

1. Mittel der Formel (I), 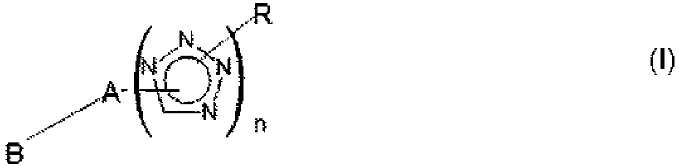 wobei
n eine ganze Zahl von 1 bis 3 ist;
B eine organische Gruppe ist, die in der Lage ist, ein Carben oder Nitren zu erzeugen,
A für einen mindestens zweiwertigen organischen Linkerrest zwischen der B-Gruppe und dem einen oder den mehreren Tetrazolen steht, wobei A kovalent an Position 2 oder 5 des einen oder der mehreren Tetrazole gebunden ist, wobei das eine oder die mehreren Tetrazole 2,5-disubstituierte Tetrazole sind; R eine organische Gruppe ist, die jeweils kovalent an Position 5 oder 2 des einen oder der mehreren Tetrazole gebunden ist, ausgewählt aus linearem oder verzweigtem C₁-C₁₀-Alkyl; C₆-C₂₀-Aryl; C₃-C₁₀-Cycloalkyl; 5- oder 6-gliedrigem, gesättigtem, ungesättigtem oder aromatischem, mono- oder bicyclischem, gegebenenfalls benzokondensiertem Heterocyclyl, umfassend mindestens ein Heteroatom, ausgewählt aus N, S, O, wobei R wiederum gegebenenfalls durch mindestens eine elektronenziehende Gruppe EW oder mindestens eine Elektronendonorgruppe ED substituiert ist,
wobei das Mittel der Formel (I) **gekennzeichnet ist durch** eine Aktivierungstemperatur (T-B) der Gruppe B und eine oder mehrere Aktivierungstemperaturen (T-Tetr) des einen oder der mehreren Tetrazole, wobei die eine oder die mehreren Aktivierungstemperaturen (T-Tetr) höher als die Aktivierungstemperatur (T-B) sind.

2. Mittel der Formel (I) nach Anspruch 1, wobei n = 1 und der organische Rest A ein zweiwertiger organischer Rest ist.

3. Mittel der Formel (I) nach Anspruch 1 oder 2, wobei der organische Rest A (Linker) mindestens eines von Folgendem umfasst oder daraus besteht: ein gesättigtes oder ungesättigtes, lineares oder verzweigtes C₁-C₂₀-, vorzugsweise C₁-C₁₀-Alkylen, das gegebenenfalls in der Kette ein oder mehrere Heteroatome und/oder eine oder mehrere bindende funktionelle Gruppen umfasst; ein C1-C₂₀-, mehr bevorzugt C₆-C₁₀-Arylen; ein mono- oder bicyclisches, gesättigtes, ungesättigtes oder aromatisches, gegebenenfalls benzokondensiertes Heterocyclylen mit 5- oder 6-gliedrigen Ringen, umfassend mindestens ein Heteroatom, ausgewählt aus N, S und O, wobei das Alkylen, Arylen und Heterocyclylen gegebenenfalls substituiert sind, oder Kombinationen davon.

4. Mittel der Formel (I) nach einem der vorstehenden Ansprüche, wobei mindestens eine der Arylen- und/oder Heterocyclylengruppen des organischen Restes A direkt oder unter Zwischenschaltung einer CH₂-Gruppe an das Tetrazol gebunden ist.

5. Mittel der Formel (I) nach einem der vorstehenden Ansprüche, wobei der organische Rest A ein Molekulargewicht von weniger als 1000 g/mol, vorzugsweise weniger als 500 g/mol, mehr bevorzugt weniger als 300 g/mol, aufweist.

6. Mittel der Formel (I) nach einem der vorstehenden Ansprüche, wobei die Gruppe R ausgewählt ist aus gegebenenfalls substituiertem C₆-C₁₀-Aryl oder Heterocyclyl, vorzugsweise ist sie ausgewählt aus Phenyl, 3-Chlorphenyl, 3,5-Dichlorphenyl und Thiophenyl.

7. Mittel der Formel (I) nach einem der vorstehenden Ansprüche, wobei die Gruppe B, die in der Lage ist, ein Carben oder ein Nitren zu erzeugen, ausgewählt ist aus Diazirin, Diazo, Keten, Sulfonazid, Azid und Isocyanat.

8. Mittel der Formel (I) nach einem der vorstehenden Ansprüche, wobei n=1 ist, und der Formel (I-a) oder (I-b), 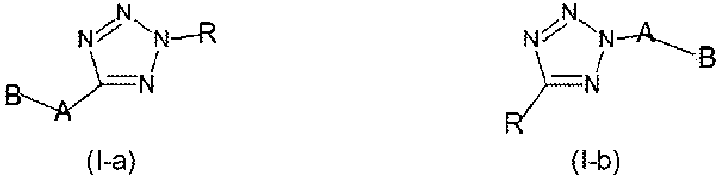 wobei B, A und R die Bedeutungen nach einem der vorstehenden Ansprüche annehmen.

9. Mittel der Formel (I) nach einem der vorstehenden Ansprüche, wobei n=1 und A ein zweiwertiger organischer Rest (Linker) der Formel A"-A' ist, wobei
A" - direkt an die B-Gruppe gebunden - ausgewählt ist aus C₆-C₁₀-Arylen und aromatischem mono- oder bicyclischem, gegebenenfalls benzokondensiertem Heterocyclylen mit 5- oder 6-gliedrigen Ringen, das mindestens ein Heteroatom umfasst, das aus N, S und O ausgewählt ist, A' kann fehlen oder, falls vorhanden, umfasst es C₆-C₁₀ -Arylen, aromatisches Heterocyclylen, C₁-C₁₀-Alkylen-oxy-C₆-C₁₀-Arylen oder C₁-C₁₀-Alkylen-oxy-aromatisches Heterocyclylen, und es ist mit dem aromatischen Teil an das Tetrazol gebunden, wobei A" und A' vorzugsweise direkt gebunden sind, ohne die Zwischenschaltung von bindenden funktionellen Gruppen,
B eine Gruppe ist, die zur Erzeugung eines Carbens befähigt ist, oder eine Sulfonazidgruppe, die zur Erzeugung eines Nitrens befähigt ist, und R kann die Bedeutungen nach einem der vorstehenden Ansprüche annehmen.

10. Mittel der Formel (I) nach einem der Ansprüche 1 bis 8, wobei n=1 und A ein zweiwertiger organischer Rest (Linker) der Formel A"-A' ist, wobei
A" - direkt an die B-Gruppe gebunden - ausgewählt ist aus C₁-C₁₀-Alkylen-, C₆-C₁₀-Arylen-, Heterocyclylen mit 5- oder 6-gliedrigen Ringen, gegebenenfalls benzokondensiert, umfassend mindestens ein Heteroatom, ausgewählt aus mono- oder bicyclischem N, S und O, C₁-C₁₀-Alkylen-C₆-C₁₀-Arylen- und C₁-C₁₀-Alkylen-Heterocyclylen,
A' fehlen kann oder, falls vorhanden, C₆-C₁₀-Arylen, aromatische Heterocyclene, C₁-C₁₀-Alkylen-oxy-C₆-C₁₀-Arylen- oder C₁-C₁₀-Alkylen-oxy-aromatische Heterocyclene umfasst, wie oben definiert, und mit dem aromatischen Teil an Tetrazol gebunden ist,
wobei A" und A' vorzugsweise direkt gebunden sind, ohne Zwischenschaltung bindender funktioneller Gruppen,
B eine Nitrenvorläufer-Azidgruppe ist, und R die Bedeutungen nach einem der vorstehenden Ansprüche annehmen kann.

11. Mittel der Formel (I) nach einem der vorstehenden Ansprüche, wobei die Aktivierungstemperatur T-B des Vorläufers der Carben- oder Nitrengruppe B weniger als 140 °C, vorzugsweise weniger als 135 °C, mehr bevorzugt weniger als 130 °C beträgt und/oder die eine oder die mehreren Aktivierungstemperaturen T-Tetr der Tetrazolkomponente nicht weniger als 140 °C betragen, vorzugsweise nicht weniger als 150 °C betragen, mehr bevorzugt nicht weniger als 160 °C betragen.

12. Funktionalisiertes elastomeres Dienpolymer, erhalten durch Umsetzen eines elastomeren Dienpolymers mit mindestens einem Mittel der Formel (I) nach einem der Ansprüche 1 bis 11.

13. Prozess zum Herstellen eines funktionalisierten elastomeren Dienpolymers nach Anspruch 12, umfassend
- Bereitstellen eines elastomeren Dienpolymers;
- Bereitstellen eines Mittels der Formel (I) nach einem der Ansprüche 1 bis 11;
- Mischen des elastomeren Dienpolymers und des Mittels der Formel (I), Halten der Mischung bei einer Temperatur T1 oberhalb der Aktivierungstemperatur (T-B) und unterhalb der einen oder mehreren Aktivierungstemperaturen (T-Tetr) des Mittels der Formel (I) für eine Zeit, die ausreicht, um die Funktionalisierungsreaktion des elastomeren Dienpolymers abzuschließen, um das funktionalisierte elastomere Dienpolymer zu erhalten.

14. Prozess nach Anspruch 13, wobei die Temperatur T1 unter 170 °C liegt, vorzugsweise unter 160 °C.

15. Prozess nach Anspruch 13 oder 14, wobei das Mittel der Formel (I) in einem prozentualen Gewichtsverhältnis in Bezug auf das elastomere Dienpolymer verwendet wird, das zwischen 0,1 % und 10 %, vorzugsweise zwischen 0,5 % und 3 %, umfasst ist.

16. Elastomere Zusammensetzung für eine Reifenmischung, umfassend mindestens
- 100 phr mindestens eines elastomeren Dienpolymers,
- mindestens 1 phr mindestens eines verstärkenden Füllstoffs,
- mindestens 0,1 phr mindestens eines Mittels der Formel (I) nach einem der Ansprüche 1 bis 11; und
- 0 bis 20 phr eines Vulkanisationsmittels.

17. Elastomere Zusammensetzung nach Anspruch 16, umfassend von 0,1 phr bis 10 phr, vorzugsweise von 0,3 phr bis 5 phr, mehr bevorzugt von 0,5 phr bis 3 phr mindestens eines Mittels der Formel (I).

18. Elastomere Reifenmischung, erhalten durch Mischen und gegebenenfalls Vulkanisieren der elastomeren Zusammensetzung nach Anspruch 16 oder 17.

19. Prozess zum Herstellen einer vulkanisierten und gegebenenfalls vernetzten elastomeren Reifenmischung nach Anspruch 18, umfassend:
- (i) einen Mischschritt, in einer oder mehreren Stufen, von mindestens 100 phr mindestens eines elastomeren Dienpolymers, mindestens 0,1 phr mindestens eines Mittels der Formel (I) nach einem der Ansprüche 1 bis 11 und gegebenenfalls weiteren Komponenten, ausgenommen das Vulkanisationsmittel, wobei die Temperatur auf einem Wert T1 gehalten wird, der stets niedriger als eine oder mehrere Aktivierungstemperaturen der Tetrazolkomponente (T-Tetr) des Mittels der Formel (I) und, mindestens für eine Mischstufe, höher als die Aktivierungstemperatur der Gruppe B (T-B) desselben Mittels der Formel (I) ist, um eine vernetzbare, nicht vulkanisierte Mischung zu erhalten, die das funktionalisierte elastomere Dienpolymer umfasst (nicht-produktiver Schritt);
- (ii) einen Schritt des Zugebens des Vulkanisationsmittels und gegebenenfalls anderer Komponenten des Vulkanisationssystems zu der vorherigen Mischung und des Mischens bei einer Temperatur T2, die stets niedriger ist als sowohl die eine oder die mehreren Temperaturen zur Aktivierung der Tetrazolkomponente (T-Tetr) als auch die Vulkanisationstemperatur (T-V) der Mischung, um eine vulkanisierbare und vernetzbare Mischung zu erhalten (produktiver Schritt); und
- (iii) einen Schritt zum Vulkanisieren und gegebenenfalls Vernetzen der vorherigen Mischung durch Erhitzen bei einer Temperatur T3, die höher als die Vulkanisationstemperatur (T-V) der Mischung ist, und gegebenenfalls auch bei einer oder mehreren der Temperaturen zur Aktivierung der Tetrazolkomponente (T-Tetr), um die vulkanisierte und gegebenenfalls vernetzte elastomere Mischung zu erhalten.

20. Fahrzeugrad-Reifenbauteil, umfassend eine elastomere Mischung nach Anspruch 18, oder vorzugsweise zusammengesetzt aus einer solchen Mischung, vorzugsweise ausgewählt aus Laufflächenband, Unterschicht, abriebfester Schicht, Seitenwand, Seitenwandeinsatz, Mini-Seitenwand, Innenseele, Unter-Innenseele, Gummierungsschichten, Wulstfüller, Wulstverstärkungsschichten (Flipper) und Wulstschutzschichten (Chafer).

21. Fahrzeugradreifen, umfassend mindestens eine Reifenkomponente nach Anspruch 20.

## Revendications

1. Agent de formule (I)
dans lequel 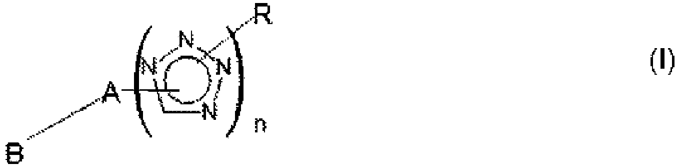
n est un nombre entier allant de 1 à 3 ;
B est un groupe organique capable de générer un carbène ou un nitrène,
A représente un résidu de liaison organique au moins divalent entre le groupe B et le ou les tétrazoles, où A est lié de manière covalente à la position 2 ou 5 du ou des tétrazoles, où le ou les tétrazoles sont des 2,5 tétrazoles disubstitués ; R est un groupe organique lié de manière covalente respectivement à la position 5 ou 2 du ou des tétrazoles, choisi parmi alkyle en C₁ à C₁₀ linéaire ou ramifié ; aryle en C₆ à C₂₀ ; cycloalkyle en C₃ à C₁₀ ; hétérocyclyle à 5 ou 6 chaînons, saturé, insaturé ou aromatique, mono- ou bicyclique, éventuellement benzocondensé, comprenant au moins un hétéroatome choisi parmi N, S, O, R étant à son tour éventuellement substitué par au moins un groupe électroattracteur EW ou au moins un groupe électrodonateur ED,
dans lequel ledit agent de formule (I) est **caractérisé par** une température d'activation (T-B) du groupe B et une ou plusieurs températures d'activation (T-Tetr) du ou des tétrazoles, dans lequel ladite ou lesdites températures d'activation (T-Tetr) sont supérieures à la température d'activation (T-B).

2. Agent de formule (I) selon la revendication 1, dans lequel n = 1 et le résidu organique A est un résidu organique divalent.

3. Agent de formule (I) selon la revendication 1 ou 2, dans lequel le résidu organique A (lieur) comprend au moins l'un parmi ou est constitué de : un alkylène en C₁ à C₂₀, de préférence en C₁ à C₁₀, saturé ou insaturé, linéaire ou ramifié, comprenant éventuellement dans la chaîne un ou plusieurs hétéroatomes et/ou un ou plusieurs groupes fonctionnels de liaison ; un arylène en C₁ à C₂₀, plus préférentiellement en C₆ à C₁₀ ; un hétérocyclylène mono- ou bicyclique, avec des cycles à 5 ou 6 chaînons, saturé, insaturé ou aromatique, éventuellement benzocondensé, comprenant au moins un hétéroatome choisi parmi N, S et O, lesdits alkylène, arylène et hétérocyclylène étant éventuellement substitués, ou des combinaisons de ceux-ci.

4. Agent de formule (I) selon l'une quelconque des revendications précédentes, dans lequel au moins l'un desdits groupes arylène et/ou hétérocyclylène du résidu organique A est lié directement ou par l'interposition d'un groupe CH₂- au tétrazole.

5. Agent de formule (I) selon l'une quelconque des revendications précédentes, dans lequel le résidu organique A a une masse moléculaire inférieure à 1000 g/mol, de préférence inférieure à 500 g/mol, plus préférentiellement inférieure à 300 g/mol.

6. Agent de formule (I) selon l'une quelconque des revendications précédentes, dans lequel le groupe R est choisi parmi aryle ou hétérocyclyle en C₆ à C₁₀ éventuellement substitué, de préférence choisi parmi phényle, 3-chlorophényle, 3,5-dichlorophényle et thiophényle.

7. Agent de formule (I) selon l'une quelconque des revendications précédentes, dans lequel le groupe B capable de générer un carbène ou un nitrène est choisi parmi diazirine, diazo, cétène, sulfonazide, azoture et isocyanate.

8. Agent de formule (I) selon l'une quelconque des revendications précédentes, dans lequel n = 1, et de formule (I-a) ou (I-b) : 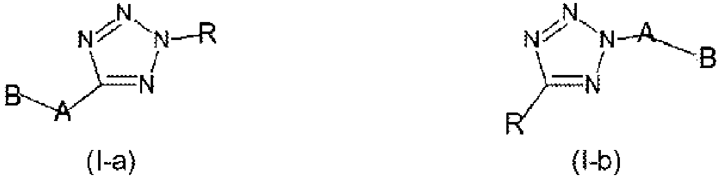 dans lequel B, A et R prennent les significations selon l'une quelconque des revendications précédentes.

9. Agent de formule (I) selon l'une quelconque des revendications précédentes, dans lequel n = 1 et A est un résidu organique divalent (lieur) de formule A"-A' dans lequel
A'' - lié directement au groupe B - est choisi parmi arylène en C₆ à C₁₀ et hétérocyclylène aromatique mono- ou bicyclique, avec des cycles à 5 ou 6 chaînons, éventuellement benzocondensé, comprenant au moins un hétéroatome choisi parmi N, S et O ; A' peut être absent ou, s'il est présent, il comprend arylène en C₆ à C₁₀, hétérocyclylène aromatique, alkylène en C₁ à C₁₀ - oxy- arylène en C₆ à C₁₀ ou alkylène en C₁ à C₁₀ - oxy - hétérocyclylène aromatique, et il est lié au tétrazole par la partie aromatique, A" et A' étant de préférence liés directement, sans interposition de groupes fonctionnels de liaison,
B est un groupe capable de générer un carbène ou un groupe sulfonazide capable de générer un nitrène, et R peut prendre les significations selon l'une quelconque des revendications précédentes.

10. Agent de formule (I) selon l'une quelconque des revendications 1 à 8, dans lequel n = 1 et A est un résidu organique divalent (lieur) de formule A"-A' dans lequel
A'' - lié directement au groupe B - est choisi parmi alkylène en C₁ à C₁₀, arylène en C₆ à C₁₀, hétérocyclylène avec des cycles à 5 ou 6 chaînons, éventuellement benzocondensé, comprenant au moins un hétéroatome choisi parmi N, S et O, mono- ou bicyclique, alkylène en C₁ à C₁₀ - arylène en C₆ à C₁₀ et alkylène-hétérocyclylène en C₁ à C₁₀,
A' peut être absent ou, s'il est présent, il comprend arylène en C₆ à C₁₀, hétérocyclènes aromatiques, alkylène en C₁ à C₁₀ -oxy- arylène en C₆ à C₁₀ ou alkylène en C₁ à C₁₀ -oxy- hétérocyclènes aromatiques, tels que définis ci-dessus, et il est lié au tétrazole par la partie aromatique,
A" et A' étant de préférence liés directement, sans l'interposition de groupes fonctionnels de liaison
B est un groupe azoture précurseur du nitrène, et R peut prendre les significations selon l'une quelconque des revendications précédentes.

11. Agent de formule (I) selon l'une quelconque des revendications précédentes, dans lequel la température d'activation T-B du précurseur du groupe B carbène ou nitrène est inférieure à 140 °C, de préférence inférieure à 135 °C, plus préférentiellement inférieure à 130 °C et/ou la ou les températures d'activation T-Tetr du composant tétrazole n'est pas inférieure à 140 °C, de préférence elle n'est pas inférieure à 150 °C, plus préférentiellement n'est pas inférieure à 160 °C.

12. Polymère élastomère diène fonctionnalisé obtenu en faisant réagir un polymère élastomère diène avec au moins un agent de formule (I) selon l'une quelconque des revendications 1 à 11.

13. Procédé permettant de préparer un polymère élastomère diène fonctionnalisé selon la revendication 12, comprenant
- la fourniture d'un polymère élastomère diène ;
- la fourniture d'un agent de formule (I) selon l'une quelconque des revendications 1 à 11 ;
- le mélange du polymère élastomère diène et de l'agent de formule (I), en maintenant le mélange à une température T1 supérieure à la température d'activation (T-B) et inférieure à la ou aux températures d'activation (T-Tetr) de l'agent de formule (I) pendant un temps suffisant pour achever la réaction de fonctionnalisation du polymère élastomère diène, pour obtenir le polymère élastomère diène fonctionnalisé.

14. Procédé selon la revendication 13 dans lequel ladite température T1 est inférieure à 170 °C, de préférence inférieure à 160 °C.

15. Procédé selon la revendication 13 ou 14, dans lequel l'agent de formule (I) est utilisé dans un rapport de pourcentage en poids par rapport au polymère élastomère diène compris entre 0,1 % et 10 %, de préférence entre 0,5 % et 3 %.

16. Composition élastomère destinée à un composé de pneumatique, comprenant au moins
- 100 pcc d'au moins un polymère élastomère diène,
- au moins 1 pcc d'au moins une charge de renforcement,
- au moins 0,1 pcc d'au moins un agent de formule (I) selon l'une quelconque des revendications 1 à 11 ; et
- de 0 à 20 pcc d'un agent de vulcanisation.

17. Composition élastomère selon la revendication 16 comprenant de 0,1 pcc à 10 pcc, de préférence de 0,3 pcc à 5 pcc, plus préférentiellement de 0,5 pcc à 3 pcc d'au moins un agent de formule (I).

18. Composé de pneumatique élastomère obtenu par mélange et éventuellement vulcanisation de la composition élastomère selon la revendication 16 ou 17.

19. Procédé permettant de préparer un composé de pneumatique élastomère vulcanisé et éventuellement réticulé selon la revendication 18, comprenant :
- (i) une étape de mélange, en une ou plusieurs phases, d'au moins 100 pcc d'au moins un polymère élastomère diène, d'au moins 0,1 pcc d'au moins un agent de formule (I) selon l'une quelconque des revendications 1 à 11, et éventuellement d'autres composants, à l'exclusion de l'agent de vulcanisation, en maintenant la température à une valeur T1 toujours inférieure à une ou plusieurs températures d'activation du composant tétrazole (T-Tetr) de l'agent de formule (I) et, au moins pendant une phase de mélange, supérieure à la température d'activation de groupe B (T-B) du même agent de formule (I), pour obtenir un composé non vulcanisé réticulable comprenant le polymère élastomère diène fonctionnalisé (étape non productive) ;
- (ii) une étape pour ajouter au composé précédent l'agent de vulcanisation, et éventuellement d'autres composants du mélange de vulcanisation, et de mélange à une température T2 toujours inférieure à la fois à ladite ou auxdites températures d'activation du composant tétrazole (T-Tetr) et à la température de vulcanisation (T-V) du composé, pour obtenir un composé vulcanisable et réticulable (étape productive) ; et
- (iii) une étape pour vulcaniser et, éventuellement, réticuler le composé précédent par chauffage, à une température T3 supérieure à la température de vulcanisation (T-V) du composé et, éventuellement, également à une ou plusieurs desdites températures pour activer le composant tétrazole (T-Tetr) pour obtenir le composé élastomère vulcanisé et, éventuellement réticulé.

20. Composant de pneumatique de roue de véhicule comprenant, ou de préférence constitué de, un composé élastomère selon la revendication 18, choisi de préférence parmi bande de roulement, sous-couche, couche anti-abrasive, flanc, insert de flanc, mini-flanc, doublure, sous-doublure, couches de caoutchoutage, charge de talon, couches de renforcement de talon (languette) et couches de protection de talon (bandelette talon).

21. Pneumatique de roue de véhicule comprenant au moins un composant de pneumatique selon la revendication 20.
